# EUROPÄISCHE PATENTSCHRIFT

(11) **EP 4 407 542 B1**
(45) Veröffentlichungstag und Bekanntmachung des Hinweises auf die Patenterteilung: **26.08.2026**
(21) Anmeldenummer: 24153817.2
(22) Anmeldetag: 25.01.2024
(51) Int. Cl.: G06Q 10/1091

(54) **NUTZERINDIVIDUELLE ARBEITSZEITERFASSUNG UNTER VERWENDUNG EINES MOBILEN TRAGBAREN ENDGERÄTS**
USER-INDIVIDUAL WORK TIME DETECTION USING A MOBILE PORTABLE TERMINAL
CAPTURE DE TEMPS DE TRAVAIL PERSONNALISÉ À L'AIDE D'UN TERMINAL MOBILE PORTABLE

(30) Priorität: 25.01.2023 DE 102023101744
(43) Veröffentlichungstag der Anmeldung: 31.07.2024
(73) Patentinhaber: Bundesdruckerei GmbH, 10969 Berlin (DE)
(72) Erfinder: SIEBERT, Martin, 10965 Berlin (DE)
(74) Vertreter: Richardt Patentanwälte PartG mbB

(56) Entgegenhaltungen:
- EP-A1- 4 092 958
- US-A1- 2015 302 362
- US-A1- 2019 164 156
- US-A1- 2019 188 932
- US-A1- 2020 082 349

## Beschreibung

Die Erfindung betrifft ein Verfahren zum nutzerindividuellen Erfassen von Arbeitszeit unter Verwendung eines mobilen tragbaren Endgeräts mit einer Zeiterfassungsapplikation, eine entsprechende Zeiterfassungsapplikation, ein entsprechendes mobiles tragbares Endgerät sowie ein System umfassend ein entsprechendes mobiles tragbares Endgerät.

Ein präzise und vollständige Arbeitszeiterfassung stellt eine Grundvoraussetzung dar, um einen effektiven Arbeitsschutz und das Recht auf gerechte und angemessene Arbeitsbedingungen verwirklichen zu können. Ohne ein System zur vollständigen, individuellen Arbeitszeiterfassung können weder die Zahl der von einem Arbeitnehmer tatsächlich geleisteten Arbeitsstunden sowie ihre zeitliche Verteilung bestimmt werden. Noch lassen sich über die gewöhnliche Arbeitszeit hinausgehende, als Überstunden geleistete Arbeitszeiten objektiv und verlässlich ermitteln.

Werden Arbeitszeiten nicht oder nicht vollständig erfasst ergibt sich die Gefahr einer zeitlichen Entgrenzung bei der Arbeit, welche sich beispielsweise in überlangen Arbeitszeiten, Pausenausfällen oder fehlenden Ruhezeiten zeigen kann. Eine solche zeitliche Entgrenzung birgt die Gefahr, sich negativ auf Wohlbefinden und Gesundheit der Arbeitnehmer auszuwirken. So stellen überlange Arbeitszeiten eine Quelle gesundheitlicher Belastung dar. Mit einer längeren Arbeitszeit können Überlastung und Überforderung der Arbeitnehmer einhergehen, welche eine Gefahr für das psychische und physische Wohlbefinden der entsprechenden Personen darstellen. Zudem kann mit längeren Arbeitszeiten und den daraus resultierenden höheren Belastungen der Arbeitnehmer ein erhöhtes Unfallrisikos einhergehen.

Allerdings stellt eine präzise und vollständige Arbeitszeiterfassung eine technische Herausforderung dar, da Arbeitszeiten in unterschiedlichsten Arbeitsbereichen unter unterschiedlichsten Bedingungen zu erfassen sind. Beispielsweise kann es je nach Art der Arbeit und Größe des Betriebs vor Ort bei der Arbeit an technischer Infrastruktur zur Arbeitszeiterfassung fehlen. Arbeitnehmer können in manchen Arbeitsbereichen viel unterwegs sein. Hinzu kommt, dass mit der zunehmenden Einbindung moderner Informations- und Kommunikationstechnik in das Arbeitsumfeld, das Arbeiten sowohl in zeitlicher Hinsicht, als auch in örtlich Hinsicht immer flexibler wird.

Die US 2015/302362 A1 beschreibt ein System und ein Verfahren zur Verwaltung der Arbeitszeit von Mitarbeitern an mehreren Arbeitsstätten. Ein Zeitmanagementsystem umfasst einen Server, der mit einer Datenbank kommuniziert, in der eine Reihe von Arbeitsstättendaten gespeichert sind. Auf mehreren Mitarbeitergeräten ist eine Mitarbeitergeräteanwendung installiert. Die Mitarbeitergeräte kommunizieren über die Mitarbeitergeräteanwendung mit dem Server. Die Mitarbeitergeräte erfassen bei Check-in-und Check-out-Ereignissen eine Reihe von Zeitstempeldaten und eine Reihe von Fotos von den Mitarbeitern. Die Zeitstempeldaten und die Fotos werden an den Server gesendet und zusammen mit den Arbeitsstättendaten in der Datenbank gespeichert. Auf mehreren Supervisor-Geräten ist eine Supervisor-Verwaltungsanwendung installiert, um die Arbeitsstättendaten zu überwachen, Fotos zu validieren und Mitarbeitergeräte zu aktivieren.

Die US 2019/188932 A1 beschreibt Systeme und Verfahren zur Anwesenheitsüberprüfung mithilfe mobiler elektronischer Geräte. Es werden biometrische Daten einer Person lokal von einem mit der Person verbundenen mobilen Gerät erfasst und überprüft, während sich das mobile Gerät in einer mit einer Veranstaltung verbundenen geografischen Region befindet, und es werden Anwesenheitsdaten, einschließlich eines Hinweises auf die Überprüfung der biometrischen Daten zusammen mit einer eindeutigen Kennung des mobilen Geräts, wie beispielsweise einer internationalen mobilen Geräteidentität (IMEI) des mobilen Geräts, an einen Anwesenheitsserver übertragen, der auf Grundlage der Anwesenheitsdaten die Anwesenheit der Person an der Veranstaltung aufzeichnet.

Die EP 4 092 958 A1 beschreibt ein Verfahren zum Auslesen ein oder mehrere Nutzerattribute aus einem ID-Token unter Verwendung eines ID-Provider-Computersystems eines ID-Provider-Dienstes und zum Bereitstellen eines digitalen verifizierbaren Credentials mit den ausgelesenen Nutzerattributen in einer digitalen Ausweiswallet eines mobilen Endgeräts unter Verwendung eines Ausstellercomputersystems eines Ausstellerdienstes einer SSI-Infrastruktur. Die Nutzerattribute eines Nutzers sind in einem geschützten Speicherbereich eines Speichers des ID-Tokens gespeichert. Die umfasst SSI-Infrastruktur eine Blockchain umfasst, in welcher ein Datenschema für das digitale verifizierbare Credential und ein dem Ausstellerdienst zugeordneter öffentlicher kryptographischer Schlüssel hinterlegt sind. Das Datenschema dient als Vorlage zum Prüfen des digitalen verifizierbaren Credentials. Der der öffentliche kryptographische Schlüssel des Ausstellerdienstes dient als Signaturprüfschlüssel zum Prüfen einer Signatur des digitale verifizierbaren Credentials, welche mit einem dem Signaturprüfschlüssel zugeordneten privaten kryptographischen Schlüssel des Ausstellerdienstes als Signaturschlüssel erstellt ist.

Die US 2020/082349 A1 beschreibt ein Verfahren, ein Computersystem und ein Computerprogrammprodukt zur Erfassung von Arbeitszeiten von Mitarbeitern in einem Blockchain-Stempeluhrsystem. Ein Blockchain-Stempeluhrsystem empfängt ein Zeiterfassungsereignis, das ein Konto eines Mitarbeiters in dem Blockchain-Stempeluhrsystem identifiziert. Das Blockchain-Stempeluhrsystem zeichnet das Zeiterfassungsereignis in einer Blockchain auf. Das Blockchain-Stempeluhrsystem bestimmt, ob ein in der Stempeluhr-Blockchain aufgezeichneter Smart Contract das Zeiterfassungsereignis zulässt. Als Reaktion auf die Bestimmung, dass ein Smart Contract das Zeiterfassungsereignis zulässt, aktualisiert das Blockchain-Stempeluhrsystem einen Status des Kontos des Mitarbeiters in dem Blockchain-Stempeluhrsystem, um das Zeiterfassungsereignis widerzuspiegeln. Als Reaktion auf die Bestimmung, dass der Smart Contract das Zeiterfassungsereignis zulässt, kommuniziert das Blockchain-Stempeluhrsystem das Zeiterfassungsereignis an einen Zeitnehmerdienst, um Stempeluhrinformationen für den Mitarbeiter aufzuzeichnen.

Die US 2019/164156 A1 beschreibt ein System, ein Gerät, ein Verfahren und ein maschinenlesbares Medium zur sicheren Authentifizierung. Das System umfasst: einen Authentifikator auf einem Clientgerät zum sicheren Speichern eines oder mehrerer privater Schlüssel, wobei mindestens einer der privaten Schlüssel zum Authentifizieren eines Blocks einer Blockchain verwendet werden kann, und ein Attestierungsmodul des Authentifikators oder ein mit dem Authentifikator verbundenes Attestierungsmodul zum Generieren einer Signatur unter Verwendung des Blocks und des privaten Schlüssels, wobei die Signatur zum Attestieren der Authentizität des Blocks durch ein Gerät verwendet werden kann, das einen öffentlichen Schlüssel besitzt, der dem privaten Schlüssel entspricht.

Der Erfindung liegt daher die Aufgabe zugrunde, ein verbessertes Verfahren zum Erfassen von Arbeitszeit zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum nutzerindividuellen Erfassen von Arbeitszeit unter Verwendung eines mobilen tragbaren Endgeräts. Das Endgerät umfasst einen Prozessor und einen Speicher mit Programminstruktionen einer Arbeitszeiterfassungsapplikation und einen biometrischen Sensor zur Erfassung von biometrischen Authentifizierungsdaten zum Authentifizieren eines Nutzers des Endgeräts.

Das Verfahren umfasst bei Ausführen der Arbeitszeiterfassungsapplikation durch das Endgerät:
- Erfassen eines Indikators eines Arbeitszeitbeginns,
- auf das Erfassen des Indikators des Arbeitszeitbeginns hin, Beginnen einer Arbeitszeiterfassung,
- Authentifizieren des Nutzers des Endgeräts, für welchen die Arbeitszeiterfassung erfolgt, wobei das Authentifizieren des Nutzers ein Authentifizieren unter Verwendung von biometrischen Authentifizierungsdaten des Nutzers umfasst, welche mittels des biometrischen Sensors erfasst werden, wobei ein erfolgreiches Authentifizieren des Nutzers ein Übereinstimmen der erfassten biometrischen Authentifizierungsdaten mit hinterlegten biometrischen Referenzdaten des Nutzers voraussetzt,
- Zuordnen der Arbeitszeiterfassung zu einem unter Verwendung der Arbeitszeiterfassungsapplikation verwalteten Arbeitszeitkonto des authentifizierten Nutzers,
- Erfassen eines Indikators eines Arbeitszeitendes,
- auf das Erfassen des Indikators des Arbeitszeitendes hin, Beenden der Arbeitszeiterfassung,
- Speichern der für den authentifizierten Nutzer erfassten Arbeitszeit in dem Arbeitszeitkonto des authentifizierten Nutzers.

Ausführungsformen können den Vorteil haben, dass unter Verwendung des biometrischen Sensors der Nutzer, für welchen die Arbeitszeiterfassung erfolgt, eindeutig authentifiziert bzw. identifiziert werden kann. Somit kann ausgeschlossen werden, dass die Arbeitszeit für jemanden anderen als den zu authentifizierenden Nutzer des Endgeräts erfasst wird. Beispielsweise kann verhindert werden, dass ein Dritter das Endgerät für den eigentlichen Nutzer mit sich führt und ein Erbringen einer Arbeitszeit durch den eigentlichen Nutzer fingiert. Ebenso kann verhindert werden, dass ein Nutzer ein Endgerät eines Dritten verwendet, um die eigene tatsächlich erbrachte Arbeitszeit geringer erscheinen zu lassen, indem diese teilweise dem entsprechenden Dritten zugeordnet wird.

Im Ergebnis kann sichergestellt werden, dass die Arbeitszeit tatsächlich von dem authentifizierten Nutzer erbracht und die erfasste Arbeitszeit dem richtigen Arbeitszeitkonto, d.h. dem Arbeitszeitkonto des authentifizierten Nutzers zugeordnet wird.

Die Verwendung eines mobilen tragbaren Endgeräts kann zudem den Vorteil haben, dass eine Erfassung einer Arbeitszeit grundsätzlich überall ermöglicht werden kann. Insbesondere ist keine zusätzliche stationäre Infrastruktur zum Erfassen von Arbeitszeiten, etwa in einem Firmengebäude notwendig. Vielmehr kann die Arbeitszeit unter Verwendung eines solchen mobilen tragbaren Endgeräts beispielsweise auch dann erfasst werden, wenn der Nutzer etwa beruflich unterwegs ist. Beispielsweise ist so auch eine Arbeitszeiterfassung im Homeoffice möglich, ohne dass zusätzliche technische Geräte zur Arbeitszeiterfassung notwendig sind.

Bei dem mobilen tragbaren Endgerät handelt es sich beispielsweise um ein Tablet, ein Laptop, ein Smartphone, eine Smartwatch, Smartglasses oder ein sonstiges mobiles tragbares Smart-Gerät. Unter einem Smart-Gerät wird hier ein Gerät mit einem Prozessor und einem Speicher zum Speichern von Programminstruktionen einer Applikation, wie etwa einer Arbeitszeiterfassungsapplikation, zum Ausführen durch den Prozessor verstanden. Ferner kann das Smart-Gerät über eine Kommunikationsschnittstelle zum Herstellen einer kabellosen Kommunikationsverbindung, etwa in ein Netzwerk, wie etwa ein Intranet oder das Internet, verstanden. Ein Smart-Geräte mit einer solchen Kommunikationsschnittstelle stellt beispielsweise ein Internet-Of-Things-Gerät (IoT-Gerät), welches als ein Bestandteil des Internets der Dinge (Internet-Of-Things/loT) in eine Vernetzung bzw. ein Netzwerk von elektronischen Geräten über das Internet eingebunden werden kann.

Mittels des mobilen, tragbaren Endgeräts kann eine Arbeitszeiterfassungsapplikation zur Erfassung von Arbeitszeiten bereitgestellt werden. Beispielsweise ermöglicht die Arbeitszeiterfassungsapplikation ferner eine autonome Verwaltung der erfassten Arbeitszeiten des Nutzers des Endgeräts und kann zudem Unterstützung bieten bezüglich der Einhaltung von Vorgaben bezüglich der zu erbringenden Arbeitszeiten.

Beispielsweise kann unter Verwendung eines mobilen, tragbaren Endgeräts mit Arbeitszeiterfassungsapplikation und biometrischem Sensor eine Arbeitszeitverwaltung eines Arbeitnehmers als Nutzer des entsprechenden mobilen, tragbaren Endgeräts vollständig von dem entsprechenden Arbeitnehmer selbst übernommen werden. Hierzu kann ein dem Arbeitnehmer zugeordnetes Arbeitszeitkonto von der Arbeitszeiterfassungsapplikation verwaltet werden. Ein Arbeitszeitkonto ermöglicht dem Arbeitnehmer beispielsweise eine Arbeitszeitverwaltung einschließlich einem Umgang mit Urlaubszeiten, Fehlzeiten und Überstunden, etwa in Abstimmung mit dem Arbeitgeber. Vorteilhafte Anwendungsbereiche bieten beispielsweise gastronomische oder handwerkliche Betriebe. Ebenso können beispielsweise Speditionen oder Branchen mit reisenden Arbeitnehmern weitere Anwendungsbereiche bieten. Nach Ausführungsformen handelt es sich bei dem mobilen tragbaren Endgerät um ein Smartphone, auf welchem die Arbeitszeiterfassungsapplikation installiert ist.

Die Arbeitszeiterfassungsapplikation ermöglicht es einem Nutzer, d.h. beispielsweise einem Arbeitnehmer, seine Arbeitszeiten selbst zu verwalten bzw. mitzuverwalten. Die Arbeitszeiten können dabei von dem Nutzer beispielsweise selbst eingegeben werden, um auf diese Art eine unabhängige und fortlaufende Verwaltung der eigenen Arbeitszeiten zu ermöglichen. Dies kann insbesondere für kleinere Firmen interessant sein, welche keine stationären Zeiterfassungseinrichtungen besitzen, wie auch für reisende Arbeitnehmer. Als Beispiel sei etwa auf gastronomische Betriebe oder handwerkliche Betriebe ohne eigene stationären Zeiterfassungseinrichtungen verwiesen sowie auf Speditionen und reisende Arbeitnehmer.

Ferner kann die Arbeitszeiterfassungsapplikation einem Nutzer eine Möglichkeit an die Hand geben seine Arbeitszeiten nicht nur selbst zu verwalten, sondern auch rechtssicher nachweisen zu können.

Zusätzlich könnte die Arbeitszeiterfassungsapplikation neben der Arbeitszeiterfassung dazu konfiguriert sein, Urlaubszeiten und Fehlzeiten des Nutzers zu verwalten. Zudem kann eine Verwaltung von Überstunden ermöglicht werden. Die Verwaltung der angefallenen Überstunden kann dabei beispielsweise auch ein Initiieren einer Auszahlung oder eines Ausgleichs in Form von Freizeit umfassen.

Nach Ausführungsformen erfolgt die Verwaltung von Urlaubszeiten, Fehlzeiten und/oder die Verwaltung von Überstunden durch die Arbeitszeiterfassungsapplikation in digitaler Abstimmung mit dem Arbeitgeber.

Unter Arbeitszeit wird hier, wie im Arbeitsrecht, der Zeitraum verstanden, in welchem ein Arbeitnehmer seiner vertraglichen Arbeitspflicht nachkommt.

Beispielsweise ist nach einem Urteil des Europäischen Gerichtshofs, C-55/18 vom 14. Mai 2019, die Einrichtung eines Systems erforderlich, mit dem die von jedem Arbeitnehmer geleistete tägliche Arbeitszeit gemessen werden kann, um eine tatsächliche Einhaltung einer wöchentlichen Höchstarbeitszeit sowie von täglichen und wöchentlichen Mindestruhezeiten sicherzustellen. Dies ergibt sich gemäß Europäischen Gerichtshof durch Auslegung sowohl der Arbeitsschutz- als auch der Arbeitszeit-Richtlinie und dem Grundrecht auf gerechte und angemessene Arbeitsbedingungen gemäß Art. 31 Abs. 2 der EU-Grundrechtecharta. Ohne ein solches System könne weder die Zahl der vom Arbeitnehmer tatsächlich geleisteten Arbeitsstunden sowie ihre zeitliche Lage, noch die über die gewöhnliche Arbeitszeit hinausgehende, als Überstunden geleistete Arbeitszeit objektiv und verlässlich ermittelt werden.

Arbeitgeber in Deutschland sind gemäß § 16 Abs. 2 Arbeitszeitgesetz (ArbZG) bisher nur verpflichtet, über die werktägliche Arbeitszeit hinausgehende Arbeitszeiten der Arbeitnehmer, d.h. Überstunden und Mehrarbeit sowie Sonn- und Feiertagsarbeit, zu erfassen.

Das Arbeitszeitkonto bezeichnet hier eine einem individuellen Nutzer zugeordnete Aufstellung der erfassten, d.h. tatsächlich geleisteten Arbeitszeit des entsprechenden Nutzers. Zudem kann ein solches Arbeitszeitkonto als ein Instrument dafür dienen, die erfassten Arbeitszeiten mit den zu leistenden Arbeitszeiten t, d.h. den arbeitsvertraglich, tarifvertraglich oder betriebsüblich zu leistenden Arbeitszeiten abzugleichen und gegebenenfalls zu verrechnen. Aus positiven Abweichungen, d.h. zu viel geleisteten Arbeitszeiten werden Zeitguthaben aufgebaut. Aus negativen, d.h. zu wenig geleisteten Arbeitszeiten werden Zeitschulden aufgebaut. Dabei können Zeitguthaben und Zeitschulden beispielsweise miteinander verrechnet werden. Für den Abgleich von geleisteten Arbeitszeiten und zu leistenden Arbeitszeiten ist eine zuverlässige und individuelle Messung der tatsächlich geleisteten Arbeitszeiten jedes Arbeitnehmers notwendig.

Eine solche zuverlässige und individuelle Messung der tatsächlich geleisteten Arbeit bzw. Arbeitszeit eines Arbeitnehmers kann vorteilhafter Weise mittels eines mobilen, tragbaren Endgerätes mit einer Arbeitszeiterfassungsapplikation und einem biometrischen Sensor ermöglicht werden.

Ein Arbeitszeitkonto kann auf dem Prinzip des Zeitausgleichs basieren, bei welchem temporäre Mehrarbeit oder Minderarbeit erfasst und innerhalb eines definierten Zeitraums ausgeglichen wird. Der Zeitraum zum Ausgleich hängt beispielsweise von der Art des Kontos sowie von individuellen und/oder betrieblichen Vereinbarungen ab. Über Betriebsvereinbarungen oder im öffentlichen Dienst über Dienstvereinbarungen können beispielsweise Höchstgrenzen bei den Guthaben und/oder Zeitschulden festgelegt werden. Ein flexibler Zeitausgleich ermöglicht eine individuelle Verteilung von Arbeitszeit. Abweichungen von der Normalarbeitszeit bzw. der zu leistenden Arbeitszeit können reguliert und durch flexible Arbeitszeiten normalisiert werden.

Somit kann von dem mobilen, tragbaren Endgerät mit der darauf installierten Arbeitszeiterfassungsapplikation eine Arbeitszeiterfassungsfunktion bereitgestellt werden. Zudem kann mittels des biometrischen Sensors des Endgeräts eine identitätsstiftende Funktionalität bereitgestellt werden. Der biometrische Sensor ermöglicht es, die Identität des Nutzers des Endgeräts zu verifizieren. Somit kann sichergestellt werden, dass die Arbeitszeiterfassung für die richtige Person erfolgt und/oder die erfasste Arbeitszeit einem Arbeitszeitkonto der richtigen Person zugeordnet wird. Meldungen des Endgeräts erfassten Arbeitszeiten können so jeweils einer einzigen identifizierten Person zugeordnet werden.

Bei dem biometrischen Sensor handelt es sich beispielsweise um einen Sensor zur Erfassung von DNA-Daten, Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster, Zahnmusterdaten und/oder verhaltensbasierte Daten, wie etwa Daten Bewegungsmuster, Gangmuster, Arm-, Hand-, Fingerbewegungsmuster, Lippenbewegungsmuster. Zum Erfassen der entsprechenden biometrischen Authentifizierungsdaten umfasst der biometrische Sensor beispielsweise eine optische Sensorkomponente zum Erfassen elektromagnetischer Strahlung im sichtbaren und/oder jenseits des sichtbaren Spektrums, eine akustische Sensorkomponente zum erfassen akustischer Signale und/oder einen Bewegungssensor zum Erfassen von Bewegungen des Endgeräts, wenn es der Nutzer bei sich trägt und/oder verwendet. Die biometrischen Authentifizierungsdaten können beispielsweise ein oder mehrere der folgenden Daten umfassen: DNA-Daten, Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster, Zahnmusterdaten, Zahnmusterdaten und/oder verhaltensbasierte Daten, wie etwa Daten Bewegungsmuster, Gangmuster, Arm-, Hand-, Fingerbewegungsmuster, Lippenbewegungsmuster.

Nach Ausführungsformen umfasst der Indikator des Arbeitszeitbeginns eine Nutzereingabe, mittels derer der Nutzer des Endgeräts den Arbeitszeitbeginn anzeigt. Nach Ausführungsformen umfasst der Indikator des Arbeitszeitendes eine Nutzereingabe, mittels derer der Nutzer des Endgeräts das Arbeitszeitende anzeigt.

Ausführungsformen können den Vorteil haben, dass der Nutzer selbstständig ohne notwendiges Einbinden weiterer technischer Geräte den Arbeitszeitbeginn und/oder das Arbeitszeitende anzeigen kann. Die entsprechende Eingabe kann beispielsweise unter Verwendung einer Nutzerschnittstelle erfolgen, welche beispielsweise eine Taste, eine Tastatur, einen Touchscreen und/oder ein Mikrophon umfasst. Bei der Eingabe kann es sich beispielsweise eine Eingabe unter Verwendung einer Taste, einer Tastatur, eines Touchscreens und/oder eine Spracheingabe unter Verwendung eines Mikrophons umfassen.

Der Arbeitnehmer kann in diesem Fall die zu erfassenden Arbeitszeiten selbst eingeben bzw. den Beginn und das Ende der Arbeitszeiterfassung gegenüber dem Endgerät selbst anzeigen.

Nach Ausführungsformen umfasst der Indikator des Arbeitszeitbeginns eine Ortserfassung einer Anwesenheit des Endgeräts an einem vordefinierten Ort durch das Endgerät, welcher dem Arbeitszeitbeginn zugeordnet ist. Nach Ausführungsformen umfasst der Indikator des Arbeitszeitendes eine Ortserfassung einer Anwesenheit des Endgeräts an einem vordefinierten Ort durch das Endgerät umfasst, welcher dem Arbeitszeitende zugeordnet ist.

Ausführungsformen können den Vorteil haben, dass ein Erfassen eines Arbeitszeitbeginns und/oder eines Arbeitszeitendes unter Berücksichtigung einer Orterfassung, d.h. eines Orts, an welchem sich das Endgerät befindet, erfolgen kann. Beispielsweise stellt der Ort für sich genommen einen Indikator zum Beginnen der Arbeitszeiterfassung und/oder zum Beendigen der Arbeitszeiterfassung durch das Endgerät dar. Beispielsweise kann ein Betreten einer Arbeitsstätte oder ein Verlassen eines vordefinierten Ausgangsorts einen Arbeitsbeginn signalisieren. Beispielsweise kann ein Verlassen einer Arbeitsstätte oder eine Ankunft an einem vordefinierten Zielort ein Arbeitsende signalisieren.

Beispielsweise erfolgt automatisch eine Erfassung eines Arbeitszeitbeginns und/oder eines Arbeitszeitendes auf eine entsprechende Ortserfassung hin. Beispielsweise setzt eine Erfassung eines Arbeitszeitbeginns und/oder eines Arbeitszeitendes eine zusätzliche Eingabe des Nutzers des Endgeräts voraus. Alternativer Weise wird auf eine ortsbasierte Erfassung eines Arbeitszeitbeginns und/oder eines Arbeitszeitendes hin, ein Hinweis für den Nutzer auf dem Endgerät, etwa unter Verwendung einer Nutzerschnittstelle des Endgeräts, ausgeben. Der Nutzer hat somit die Möglichkeit die Erfassung des Arbeitszeitbeginns und/oder des Arbeitszeitendes zu revidieren, etwa durch eine entsprechende Nutzereingabe, andernfalls wird die Erfassung des Arbeitszeitbeginns und/oder des Arbeitszeitendes von dem Endgerät als valide abgespeichert. Bei dem entsprechenden Hinweis handelt es sich beispielsweise um einen visuelle, akustischen und/oder mechanischen Hinweis. Beispielsweise kann ein entsprechender visueller Hinweis auf einem Display des Endgeräts angezeigt, ein entsprechender akustischer Hinweis über einen Lautsprecher des Endgeräts ausgegeben und/oder ein entsprechender mechanischer Hinweis durch eine Vibration des Endgeräts ausgegeben werden.

Durch eine Berücksichtigung einer entsprechenden Ortserfassung als Indikator für einen Arbeitszeitbeginn und/oder ein Arbeitszeitende kann beispielsweise ein automatisches Erkennen von Arbeitszeiten und Pausenzeiten, wie etwa Ruhepausen oder Kurzpausen, durch eine erfasste Anwesenheit an bzw. eine erfasste Abwesenheit von bestimmten Orten ermöglicht werden.

Nach Ausführungsformen erfolgt die Ortserfassung unter Verwendung eines Empfangs eines Signals eines globalen Navigationssatellitensystems, etwa GPS, Galileo, GLONASS oder Beidou, eines WLAN-Signals, eines UWB-Signals, eines Bluetooth-Signals und/oder eines NFC-Signals. Ausführungsformen können den Vorteil haben, dass sie eine effektive Ortserfassung, d.h. eine Erfassung eines Aufenthaltsorts des Endgeräts ermöglichen. Aufgrund der biometrischen Authentifizierung des Nutzers unter Verwendung des biometrischen Sensors des Endgeräts entspricht der Aufenthaltsort des Endgeräts dem Aufenthaltsort des Nutzers, welcher sich vor Ort mittels ein oder mehrerer individueller biometrischer Merkmale gegenüber dem Endgerät authentisieren muss.

Eine Ortserfassung unter Verwendung eines Signals eines globalen Navigationssatellitensystems kann den Vorteil haben, dass eine präzise Orterfassung global ermöglicht werden. Dies kann insbesondere für Nutzer von Vorteilsein, welche im Zuge Ihrer Arbeitstätigkeit weltweit unterwegs sind. Eine Ortserfassung unter Verwendung eines WLAN-Signals oder eines UWB-Signals kann den Vorteil haben, dass ein Einloggen des Endgeräts in ein lokales WLAN- oder UWB-Kommunikationsnetzwerk, etwa einer Arbeitsstätte des Nutzers, zur Orterfassung verwendet werden kann. Wenn das entsprechendes lokales Netzwerk einem Ort zugeordnet ist, so kann bei einem Einloggen des Endgeräts in das entsprechende Netzwerk das Endgerät demselben Ort zugeordnet werden. Bei dem entsprechenden Netzwerk kann es sich beispielsweise auch um ein Heimnetzwerk des Nutzers handeln, fall dieser beispielsweise im Homeoffice arbeitet.

UWB ("Ultra Wideband") bezeichnet eine drahtlose Übertragung elektromagnetischer impulsförmiger Signale über eine Mehrzahl paralleler Funkkanäle mit kleiner Sendeleistungen, z.B. bis maximal 1 mW. Hierbei werden beispielsweise Frequenzbereiche mit einer Bandbreite von mindestens 500 MHz und/oder von mindestens 20 % des arithmetischen Mittelwertes von unterer und oberer Grenzfrequenz des genutzten Frequenzbandes verwendet.

UWB basiert auf einer Erzeugung von Impulsen mit einer möglichst kurzen Pulsdauer, weshalb ein über eine UWB-Antenne abgestrahltes bzw. empfangenes Spektrum entsprechend den Gesetzen der Fourier-Transformation umso größer bzw. breiter ist, je kürzer die Pulsdauer ist. Dabei ist das Produkt aus zeitlicher und spektraler Breite des Impulses konstant. Die gesamte Sendeleistung von beispielsweise wenigen Milliwatt oder weniger wird auf einen so großen Frequenzbereich verteilt, dass für den Funkbetrieb schmalbandiger Übertragungsverfahren keine Störungen zu erwarten sind. Mithin ist es nicht oder nur schwer erkennbar, dass überhaupt eine Übertragung mit UWB stattfindet. Für einen schmalbandigen Empfänger erscheint ein UWB-Signal vielmehr wie ein Rauschen. Mithin wird eine kaum ortbare Kommunikation ermöglicht, welche im gleichen Frequenzbereich wie herkömmliche Übertragungsverfahren eingesetzt werden kann.

Eine Verwendung von UWB durch das Endgerät kann ein ermöglichen Tracking des Endgeräts zu verhindern, da über UWB kommunizierende Geräte ohne Kenntnis der verwendeten UWB-Kodierung nicht lokalisierbar sind. Ferner stellt die verhältnismäßig kurze Reichweite von UWB sicher, dass ein Tracking und/oder Abhören aus der Ferne effektiv unterbunden werden kann. Zudem bietet die UWB-Kodierung eine eigenständige, instantane Verschlüsselung der übertragenen Daten, welche damit gegen ein Abhören abgesichert werden. Darüber hinaus weist UWB aufgrund des breiten Frequenzbandes eine hohe Resistenz gegenüber Störsignalen ("Jamming") auf. Aufgrund dieser speziellen, für Sicherheitsapplikationen vorteilhafter technischer Eigenschaften, kann unter Verwendung von UWB ein Kommunikationsnetzwerk implementiert werden, welches einen hohen Schutz der darüber übertragenen Daten sowie der beteiligten Endgeräte gewährleisten kann. Insbesondere kann eine hohe Sicherheit der Datenübertragung mittels UWB sichergestellt werden

Eine Ortserfassung unter Verwendung eines Bluetooth-Signals oder eines NFC-Signals kann den Vorteil haben, dass bei einer Kommunikation des Endgeräts mit einem Referenzgerät, welchem ein Ort zugeordnet ist, etwa unter Verwendung eines Bluetooth-Signals oder eines NFC-Signals, dem Endgerät derselbe Ort zugeordnet werden kann, wie dem Referenzgerät. Bei dem Referenzgerät kann es sich beispielsweise um ein stationäres oder ein mobiles Gerät handeln, welchem ein konstanter Ort oder variabler Ort zugeordnet wird. Beispielsweise kann es sich bei dem Referenzgerät um ein Gerät handeln, welchem einer Arbeitsstätte und/oder der Arbeit des Nutzers zugeordnet ist. Beispielsweise kann es sich bei einem solchen Referenzgerät um ein Gerät einer Zugangskontrollvorrichtung zur Kontrolle des Zugangs zu einer Arbeitsstätte des Nutzers handeln. Beispielsweise kann es sich bei einem solchen Referenzgerät um ein Arbeitsgerät des Nutzers handeln, etwa eine Maschine, ein Fahrzeug oder ein Computer.

Nach Ausführungsformen umfasst die dem Arbeitsbeginn zugeordnete Ortserfassung ein Betreten eines vordefinierten, der Arbeit zugeordneten Ortsbereichs durch das Endgerät. Nach Ausführungsformen umfasst die dem Arbeitsende zugeordnete Ortserfassung ein Verlassen des vordefinierten, der Arbeit zugeordneten Ortsbereichs durch das Endgerät.

Ausführungsformen können den Vorteil haben, dass ein Arbeitsbeginn bzw. Arbeitsende einem Betreten bzw. einem Verlassen eines Ortsbereichs zugeordnet werden kann. Bei dem entsprechenden Ortsbereich kann es sich beispielsweise um eine Arbeitsstätte des Nutzers, etwa ein Firmengebäude oder eine Fabrik, handeln oder einen Ortsbereich innerhalb einer Arbeitsstätte, wie etwa ein Büro, ein Labor, oder einen Verkaufsbereich. Ebenso kann es sich bei dem Ortsbereich auch um eine mobile Arbeitsstätte, etwa einen Bus, einen LKW, einen Zug, ein Schiff oder ein Flugzeug, handeln. Ebenso kann es sich bei einem entsprechenden Ortsbereich oder einen Bereich innerhalb einer solchen mobilen Arbeitsstätte handeln.

Beispielsweise werden die Zeiten von Arbeitsbeginn und/oder Arbeitsende beim Vorbeigehen oder Vorbeiziehen des Endgeräts an einem stationären Transponder erfasst, gespeichert und dem Nutzer zugeordnet. In diesem Fall kann insbesondere eine verhaltensbasierte Authentifizierung des Nutzers von Vorteil sein, bei welcher der Nutzer zum Zwecke der Authentifizierung keine zusätzlichen allein der Authentifizierung geschuldeten Handlungen vornehmen muss. Im Falle einer verhaltensbasierten Authentifizierung des Nutzers handelt es sich bei den erfassten biometrischen Authentifizierungsdaten um verhaltensbasierte Daten des Nutzers. Verhaltensbasiert Daten sind Daten, welche auf einem intrinsischen Verhalten des Nutzers beruhen und können beispielsweise umfassen: Bewegungsmuster, Gangmuster, Arm-, Hand-, Fingerbewegungsmuster, Lippenbewegungsmuster. Beispielsweise können beim Vorbeigehen oder Vorbeiziehen des Endgeräts an dem stationären Transponder als biometrische Authentifizierungsdaten des Nutzers verhaltensbasierte Daten in Form von Bewegungsdaten des Endgeräts erfasst werden, welche einer für den Nutzer charakteristische Bewegung des Endgeräts beim Vorbeigehen oder Vorbeiziehen des Endgeräts an dem stationären Transponder zugeordnet sind.

Dabei können die entsprechenden Zeiten von Arbeitsbeginn und/oder Arbeitsende zusätzlich jeweils mit einer Ortsangabe, welche einen Aufenthaltsort des Endgeräts identifiziert, verknüpft werden. Zum Beispiel können die entsprechenden Ortsangaben unter Verwendung eines WLAN-Netzes einer Firma oder unter Verwendung eines GPS-Signals ermittelt werden. So lassen sich beispielsweise bei LKW-Fahrern über GPS auch Pausen- und Fahrzeiten zuordnen.

Nach Ausführungsformen handelt es sich bei dem vordefinierten, der Arbeit zugeordneten Ortsbereichs um einen stationären Ortsbereich. Dies kann beispielsweise der Fall sein, falls der Nutzer an einer stationären Arbeitsstätte, etwa in einem bestimmten Gebäude oder an einem bestimmten Ort im Freien arbeitet.

Nach Ausführungsformen handelt es sich bei dem vordefinierten, der Arbeit zugeordneten Ortsbereichs um einen mobilen Ortsbereich. Dies kann beispielsweise der Fall sein, falls der Nutzer an einer mobilen Arbeitsstätte, etwa in einem Bus, in einem LKW, in einem Zug, auf einem Schiff oder in einem Flugzeug arbeitet.

Nach Ausführungsformen ist der Ortsbereich relativ zu einer Arbeitsstätte festgelegt ist. Beispielsweise handelt es sich bei dem Ortsbereich um einen Ortsbereich, welchen die Arbeitsstätte umfasst.

Nach Ausführungsformen ist der Ortsbereich relativ zu einem Arbeitsgerät festgelegt ist. Beispielsweise handelt es sich bei dem Ortsbereich um einen Ortsbereich innerhalb einer vordefinierten Entfernung von dem Arbeitsgerät. Beispielsweise handelt es sich bei dem Ortsbereich um einen Ortsbereich innerhalb des Arbeitsgeräts, etwa bei einem Arbeitsgerät in Form eines Fahrzeugs. Bei dem Arbeitsgerät kann es sich beispielsweise um einen Computer, eine Maschine oder ein Fahrzeug handeln.

Ausführungsformen können den Vorteil haben, dass ein Arbeitsbeginn damit gleichgesetzt werden kann, dass sich der Nutzer bzw. das Endgerät in der Nähe eines Arbeitsgeräts, an einem Arbeitsgerät oder in einem Arbeitsgerät, insbesondere einem für die Arbeit des Nutzers notwendigen Arbeitsgerät, befindet. Ein Arbeitsende kann beispielsweise damit gleichgesetzt, dass sich der bzw. das Endgerät von oder aus dem entsprechenden Arbeitsgerät entfernt.

Beispielsweise wird das Betreten des vordefinierten, der Arbeit zugeordneten Ortsbereichs durch einen Zugang zur Arbeitsstätte unter Verwendung eines Zugangskontrollsystems der Arbeitsstäte erfasst.

Nach Ausführungsformen umfasst der Indikator des Arbeitszeitbeginns eine Interaktion des Endgeräts mit einem Arbeitsgerät. Nach Ausführungsformen umfasst der Indikator des Arbeitszeitendes eine Interaktion des Endgeräts mit einem Arbeitsgerät. Bei dem Arbeitsgerät kann es sich beispielsweise um einen Computer, eine Maschine oder ein Fahrzeug handeln.

Ausführungsformen können den Vorteil haben, dass eine Erfassung des Arbeitszeitbeginns bzw. des Arbeitszeitendes auf einer tatsächlichen Interaktion des Endgeräts mit dem Arbeitsgerät beruht. Beispielsweise initiiert und/oder steuert der Nutzer des Endgeräts, etwa über einer Nutzerschnittstelle des Endgeräts die Interaktion des Endgeräts mit dem Arbeitsgerät. In diesem Fall stellt die Interaktion des Endgeräts zudem eine zumindest indirekte Interaktion des Nutzers mit dem Arbeitsgerät dar.

Nach Ausführungsformen umfasst der Indikator des Arbeitszeitbeginns eine Interaktion in Form eines Empfangs einer Anmeldemitteilung von dem Arbeitsgerät durch das Endgerät, welche eine Anmeldung des Nutzers des Endgeräts an dem Arbeitsgerät anzeigt.

Ausführungsformen können den Vorteil haben, dass auf eine Anmeldung des Nutzers an dem Arbeitsgerät hin von dem Arbeitsgerät eine Anmeldemitteilung erzeugt und an das Endgerät gesendet wird. Somit wird das Endgerät über die Anmeldung des Nutzers an dem Arbeitsgerät informiert und ordnet dieses Anmelden einem Arbeits- bzw. Arbeitszeitbeginn zu. Die Anmeldemitteilung umfasst beispielsweise eine Nutzer-ID und/oder eine Arbeitsgeräte-ID, welche es dem Endgerät ermöglichen, die Anmeldemitteilung dem Nutzer bzw. dem Arbeitsgerät zuzuordnen.

Nach Ausführungsformen umfasst der Indikator des Arbeitszeitendes eine Interaktion in Form eines Empfangs einer Abmeldemitteilung von dem Arbeitsgerät durch das Endgerät, welche eine Abmeldung des Nutzers des Endgeräts von dem Arbeitsgerät anzeigt.

Ausführungsformen können den Vorteil haben, dass auf eine Abmeldung des Nutzers von dem Arbeitsgerät hin von dem Arbeitsgerät eine Abmeldemitteilung erzeugt und an das Endgerät gesendet wird. Somit wird das Endgerät über die Abmeldung des Nutzers von dem Arbeitsgerät informiert und ordnet dieses Abmelden einem Arbeits- bzw. Arbeitszeitende zu. Die Abmeldemitteilung umfasst beispielsweise eine Nutzer-ID und/oder eine Arbeitsgeräte-ID, welche es dem Endgerät ermöglichen, die Abmeldemitteilung dem Nutzer bzw. dem Arbeitsgerät zuzuordnen.

Beispielsweise ist die Anmeldemitteilung und/oder Abmeldemitteilung von dem Arbeitsgerät unter Verwendung eines Signaturschlüssels signiert. Beispielsweise verfügt das Endgerät über einen Signaturprüfschlüssel des Arbeitsgeräts zum Verifizieren von Signaturen des Arbeitsgeräts. Beispielsweise verifiziert das Endgerät die Anmeldemitteilung bzw. Abmeldemitteilung des Arbeitsgeräts unter Verwendung des Signaturprüfschlüssels. Bei dem Signaturschlüssel und dem Signaturprüfschüssel des Arbeitsgeräts handelt es sich beispielsweise um einen privaten und einen öffentlichen kryptographischen Schlüssel eines dem Arbeitsgerät zugeordneten asymmetrischen Schlüsselpaars.

Nach Ausführungsformen handelt es sich bei dem Endgerät und dem Arbeitsgerät um zwei voneinander verschiedene unabhängige Geräte. Die Anmeldemitteilung bzw. die Abmeldemitteilung werden von dem Endgerät beispielsweise über eine kabellose Kommunikationsverbindung, etwa eine Bluetooth- oder NFC-Verbindung, empfangen.

Nach Ausführungsformen handelt es sich bei dem Endgerät und dem Arbeitsgerät um ein und dasselbe Gerät, wobei das entsprechende Gerät für die Arbeit des Nutzers beispielsweise eine zweite arbeitsspezifische Applikation umfasst und es sich bei dem Anmelden des Nutzers an bzw. dem Abmelden des Nutzers von dem Arbeitsgerät, welche dem Endgerät mittgeteilt wird, um ein Anmelden bzw. Abmelden des Nutzers bei der zweite arbeitsspezifische Applikation handelt, welche die Arbeitszeiterfassungsapplikation über dieses Anmelden bzw. Abmelden informiert.

Nach Ausführungsformen setzt die Anmeldung des Nutzers des Endgeräts an dem Arbeitsgerät eine erfolgreiche Authentisierung des Nutzers gegenüber dem Arbeitsgerät voraus. Nach Ausführungsformen setzt die Abmeldung des Nutzers des Endgeräts von dem Arbeitsgerät eine erfolgreiche Authentisierung des Nutzers gegenüber dem Arbeitsgerät voraus.

Ausführungsformen können den Vorteil haben, dass sichergestellt werden kann, dass es sich bei der Anmeldung bzw. bei der Abmeldung des Nutzers an dem Arbeitsgerät bzw. von dem Arbeitsgerät tatsächlich um den Nutzer des Endgeräts handelt. So kann ausgeschlossen werden, dass sich jemand anderes an dem Arbeitsgerät anmeldet bzw. abmeldet und dies fehlerhafterweise dem Nutzer des Endgeräts zugeordnet wird.

Nach Ausführungsformen erfolgt die Authentisierung des Nutzers gegenüber dem Arbeitsgerät unter Verwendung des Endgeräts. Ausführungsformen können den Vorteil haben, dass das beispielsweise das Authentifizieren des Nutzers des Endgeräts unter Verwendung des biometrischen Sensors des Endgeräts und das Authentisieren des Nutzers gegenüber dem Arbeitsgerät zusammen erfolgen können. Beispielsweise authentifiziert das Endgerät den Nutzer unter Verwendung des biometrischen Sensors und sendet eine Authentifizierungsbestätigung an das Arbeitsgerät. Mit dieser Authentifizierungsbestätigung authentisiert sich der Nutzer gegenüber dem Arbeitsgerät. Das Arbeitsgerät verifiziert die empfangene Authentifizierungsbestätigung. Durch eine erfolgreiche Verifikation der Authentifizierungsbestätigung wird zugleich der Nutzer auch seitens des Arbeitsgeräts authentifiziert.

Beispielsweise ist die Authentifizierungsbestätigung von dem Endgerät unter Verwendung eines Signaturschlüssels signiert. Beispielsweise verfügt das Arbeitsgerät über einen Signaturprüfschlüssel des Endgeräts zum Verifizieren von Signaturen des Endgeräts. Beispielsweise verifiziert das Arbeitsgerät die Authentifizierungsbestätigung des Endgeräts unter Verwendung des Signaturprüfschlüssels. Bei dem Signaturschlüssel und dem Signaturprüfschüssel des Endgeräts handelt es sich beispielsweise um einen privaten und einen öffentlichen kryptographischen Schlüssel eines dem Endgerät zugeordneten asymmetrischen Schlüsselpaars.

Nach Ausführungsformen umfasst der Indikator des Arbeitszeitbeginns eine Bestätigung des Arbeitszeitbeginns durch einen weiteren Nutzer eines weiteren mobilen tragbaren Endgeräts. Nach Ausführungsformen umfasst der Indikator des Arbeitszeitendes eine Bestätigung des Arbeitszeitendes durch einen weiteren Nutzer eines weiteren mobilen tragbaren Endgeräts.

Beispielsweise kann eine Bestätigung des Arbeitszeitbeginns und/oder eine Bestätigung des Arbeitszeitendes gegenseitig zwischen dem Endgerät des Nutzers und dem weiteren Endgerät des weiteren Nutzers erfolgen.

Ausführungsformen können den Vorteil haben, dass das Erfassen von Arbeitszeitbeginn und/oder Arbeitszeitende jeweils eine Bestätigung eines weiteren Nutzers voraussetzen. Dieser weitere Nutzer dient in diesem Fall beispielsweise als eine Art Zeuge für den Arbeitszeitbeginn bzw. das Arbeitszeitende. Somit kann beispielsweise zusätzlich abgesichert werden, dass es sich bei den erfassten Arbeitszeiten um korrekt erfasste Arbeitszeiten handelt. Bei dem weiteren Nutzer kann es sich beispielsweise um einen Mitarbeiter oder Vorgesetzten des Nutzers des Endgeräts handeln. Beispielsweise kann die Kommunikation zwischen dem Endgerät und dem weiteren Endgerät lokal über eine kurzreichweitige Kommunikationsverbindung, etwa eine Bluetooth- oder NFC-Verbindung, erfolgen. Somit kann sichergestellt werden, dass der weitere den Arbeitszeitbeginn und/oder das Arbeitszeitende bestätigende Nutzer vor Ort ist und den Arbeitszeitbeginn und/oder das Arbeitszeitende tatsächlich überprüfen kann. Dies kann etwa von Vorteil sein, falls der Nutzer des Endgeräts sich im Zuge einer Ausübung seiner Arbeit in einem Gefahrenbereich aufhält, welcher aus Sicherheitsgründen die Anwesenheit einer weiteren Person erfordert, oder die Art der ausgeübten Arbeit grundsätzlich die Anwesenheit einer weiteren Person aus Sicherheitsgründen erfordert. In diesem Fall kann sichergestellt werden, dass mit dem weiteren Nutzer des weiteren Endgeräts sowohl zu Arbeitsbeginn als auch zu Arbeitsende stets eine weitere Person anwesend ist. Beispielsweise können sich der Nutzer und der weitere Nutzer gegenseitig den Arbeitszeitbeginn und/oder das Arbeitszeitende bestätigen.

Alternativerweise kann die Kommunikation zwischen dem Endgerät und dem weiteren Endgerät auch über ein weitreichendes Netzwerk, etwa das Internet oder ein Mobilfunknetz, erfolgen, wodurch es dem weiteren Nutzer ermöglicht wird aus der Entfernung den Arbeitszeitbeginn und/oder das Arbeitszeitende zu bestätigen. Dies kann etwa von Vorteil sein, falls der Nutzer des Endgeräts im Zuge einer Ausübung seiner Arbeit alleine unterwegs ist.

Bei dem weiteren Nutzer des Weiteren mobilen tragbaren Endgeräts kann es sich beispielsweise um einen Arbeitskollegen, einen Vorgesetzten oder einen Arbeitsgeber des Nutzers des mobilen tragbaren Endgeräts handeln. Ein Arbeitnehmer, welcher das entsprechende mobile tragbare Endgerät verwendet, kann sich seine Arbeitszeiten mithin von dem Arbeitskollegen, Vorgesetzten oder Arbeitsgeber bestätigen lassen. Hierzu verwendet der Arbeitskollegen, Vorgesetzten oder Arbeitsgeber beispielsweise ein entsprechendes weiteres mobiles tragbares Endgerät.

Beispielsweise kann so die Möglichkeit bereitgestellt werden, sich etwa bei Bedarf oder zu bestimmten Zeiten, die erfassten Arbeitszeiten vom Arbeitgeber bestätigen zu lassen.

Ebenso kann beispielsweise die Möglichkeit bereitgestellt werden, sich die Arbeitszeiten von einem Mitarbeiter bzw. Kollegen, welcher quasi als Zeuge fungiert, bestätigen zu lassen.

Nach Ausführungsformen umfasst das Verfahren ferner:
- Senden einer Bestätigungsanfrage an das weitere mobile tragbare Endgerät,
- in Antwort auf das Senden der Bestätigungsanfrage, Empfangen der Bestätigung von dem weiteren mobilen tragbaren Endgerät, wobei die Bestätigung unter Verwendung eines dem weiteren Nutzer des Weiteren mobilen tragbaren Endgeräts zugeordneten ersten Signaturschlüssels signiert ist,
- Verifizieren der Signatur der Bestätigung unter Verwendung eines dem weiteren Nutzer des Weiteren mobilen tragbaren Endgeräts zugeordneten ersten Signaturprüfschlüssels, wobei ein Anerkennen der Bestätigung als Indikator ein erfolgreiches Verifizieren der entsprechenden Signatur voraussetzt.

Ausführungsformen können den Vorteil haben, dass unter Verwendung des ersten Signaturschlüssels und ersten Signaturprüfschlüssels des weiteren Endgeräts eine kryptographische Absicherung der Bestätigung technisch implementiert werden kann. Bei dem ersten Signaturschlüssel und dem ersten Signaturprüfschlüssel des weiteren Endgeräts handelt es sich beispielsweise um einen privaten und einen öffentlichen kryptographischen Schlüssel eines dem weiteren Endgerät zugeordneten asymmetrischen Schlüsselpaars.

Eine entsprechende Bestätigungsanfrage kann beispielsweise unter Verwendung einer kabellosen Kommunikationsverbindung an das weitere Endgerät gesendet werden. Beispielsweise kann die Bestätigungsanfrage per Bluetooth, NFC, als E-Mail über WLAN oder als SMS über eine Mobilfunkverbindung gesendet werden.

Nach Ausführungsformen umfassen die biometrischen Authentifizierungsdaten verhaltensbasierte Daten des Nutzers. Verhaltensbasiert Daten sind Daten, welche auf einem intrinsischen Verhalten des Nutzers beruhen und können beispielsweise umfassen: Bewegungsmuster, Gangmuster, Arm-, Hand-, Fingerbewegungsmuster, Lippenbewegungsmuster. Ein Verwenden von verhaltensbasierten Daten zum biometrischen Authentifizieren des Nutzers kann den Vorteil haben, dass der Nutzer zum Zwecke des Authentifizierens sein übliches, für ihn charakteristisches Verhalten fortsetzen kann, ohne dass für ihn untypische zusätzliche Handlungen notwendig sind. Insbesondere muss der Nutzer sein übliches Verhalten nicht unterbrechen.

Zum Erfassen der verhaltensbasierten Daten wird ein biometrischer Sensor verwendet, welcher zum Erfassen verhaltensbasierter Daten konfiguriert ist. Bei den verhaltensbasierten Daten handelt es sich beispielsweise um Bewegungsdaten, welche unter Verwendung einer Sensorkomponente zum Erfassen von Bewegungen des Endgeräts erfasst werden. Die Sensorkomponente zum Erfassen von Bewegungen kann beispielsweise einen Beschleunigungssensor umfassen. Eine Bewegung kann beispielsweise durch Integration über Beschleunigungsmesswerte, welche der Beschleunigungssensor erfasst, berechnet werden. Die Sensorkomponente zum Erfassen von Bewegungen kann beispielsweise zudem eine Lage des Endgeräts im Raum und/oder Veränderungen der Lage detektieren. Beispielsweise umfasst die Sensorkomponente zum Erfassen von Bewegungen ein Gyroskop. Bei den durch die Sensorkomponente zum Erfassen von Bewegungen erfassten Bewegungsdaten handelt es sich beispielsweise um Beschleunigungs-, Neigungsund/oder Positionsdaten.

Bei erfassten Bewegungsdaten handelt es sich beispielsweise um Daten von Bewegungen des Endgeräts, welche dadurch verursacht werden, dass der Nutzer das Endgerät mit sich führt, beispielsweise am Körper trägt. Durch die charakteristischen Bewegungen des Nutzers wird das Endgerät in einer für den Nutzer charakteristischer Weise mitbewegt. Dies ist selbst dann der Fall, wenn der Nutzer nicht aktive mit dem Endgerät interagiert, z.B. keine Nutzerschnittstelle des Endgeräts, wie etwa eine Taste, eine Tastatur, einen Touchscreen oder ein Mikrophon, nutzt.

Nach Ausführungsformen umfasst das Endgerät ein Klassifikationsmodul, welches zum Erkennen eines oder mehrerer generischer Bewegungsmuster unter Verwendung von Bewegungsdaten konfiguriert ist. Bei den Bewegungsmustern kann es sich beispielweise um grob- und/oder feinmotorische Bewegungen des Endgeräts handeln, wie sie für eine Nutzung des Endgeräts, etwa ein Mitführen und/oder Tragen am Körper, durch einen individuellen Nutzer charakteristisch sind. Beispielsweise ist das Klassifikationsmodul zum Erkennen der generischen Bewegungsmuster unter Verwendung von Trainingsdatensätzen mit Bewegungsdaten einer Nutzerkohorte vortrainiert.

Nach Ausführungsformen wird der Nutzer im Zuge einer Einlernphase als Nutzer des Endgeräts registriert. Nach Ausführungsformen umfasst die Einlernphase ein Erfassen von Bewegungsdaten des Nutzers durch den biometrischen Sensor des Endgeräts bzw. durch eine entsprechende die Sensorkomponente des biometrischen Sensors und ein Extrahieren von ein oder mehreren für den zu registrierenden Nutzer charakteristischen Referenzwerten.

Nach Ausführungsformen umfasst ein verhaltensbasiertes Authentifizieren eines Nutzers unter Verwendung des Endgeräts die folgenden Schritte:
- Erfassen von Bewegungsdaten durch den biometrischen Sensor, welcher eine Sensorkomponente zur Erfassung von Bewegungsdaten umfasst,
- Eingeben der erfassten Bewegungsdaten in das Klassifikationsmodul,
- Generieren eines Klassifikationsergebnisses durch das Klassifikationsmodul, ob der aktuelle Nutzer ein in dem Endgerät registrierte Nutzer ist,
- Erzeugen eines Authentifizierungssignals, falls das Klassifikationsergebnis ein Prüfungskriterium erfüllt, wobei das Authentifizierungssignal eine erfolgreiche Authentifizierung des aktuellen Nutzers signalisiert.

Das Prüfkriterium kann beispielsweise umfassen, dass eine ausreichend hohe Übereinstimmung zwischen den erfassten Bewegungsdaten und einem oder mehreren für den registrierten Nutzer hinterlegten Referenzwerten vorliegt. Ferner kann das Prüfkriterium umfassen, dass die erfassten Bewegungsdaten und/oder die verwendeten ein oder mehreren Referenzwerte ein maximales Alter nicht überschreiten.

Nach Ausführungsformen werden die vorgenannten Schritte des Erfassens der Bewegungsdaten, des Eingebens der Bewegungsdaten und des Generierens des Klassifikationsergebnisses wiederholt nacheinander ausgeführt. Ferner wird zusätzliche zum Schritt des Generierens des Klassifikationsergebnisse jeweils der Schritt ausgeführt:
- Speichern des Klassifikationsergebnisses in dem Speicher des Endgeräts.

Das Erzeugen eines Authentifizierungssignals umfasst beispielsweise:
- auf eine Authentifizierungsanfrage hin, Zugreifen auf den Speicher des Endgeräts zum Auslesen des gespeicherten Klassifikationsergebnisses, beispielsweise des zuletzt gespeicherten Klassifikationsergebnisses,
- Auslesen und Auswerten des Klassifikationsergebnisses gemäß dem Prüfungskriterium.

Nach Ausführungsformen können erfasste Bewegungsdaten im Falle einer erfolgreichen Authentifizierung des Nutzers zum Anpassen und/oder Verbessern der für den entsprechenden Nutzer hinterlegten Referenzwerte verwendet werden. Somit kann ein kontinuierliches Lernen zum Zwecke einer kontinuierlichen Anpassung und/oder Verbesserung der Klassifikation implementiert werden.

Nach Ausführungsformen umfasst das Verfahren ferner:
- Erfassen eines Überschreitens eines vordefinierten ersten Arbeitszeitlimits des authentifizierten Nutzers durch die erfasste Arbeitszeit,
- auf das Erfassen des Überschreitens des vordefinierten ersten Arbeitszeitlimits hin, Ausgeben eines Warnhinweises.

Ausführungsformen können den Vorteil haben, dass der Nutzer auf ein Überschreiten eines Arbeitszeitlimits aktive hingewiesen wird. Dadurch kann der Nutzer dabei unterstützt werden, dass er vorgegebene Arbeitszeiten einhält und diese nach Möglichkeit insbesondere nicht überschreitet. Ein regelmäßiges Überschreiten von vorgegebenen Arbeitszeiten birgt das Risiko, dass der Arbeitnehmer überbelastet wird, was langfristig zu gesundheitlichen Beeinträchtigungen bis hin zu einem Burnout-Syndrom führen kann.

Bei dem entsprechenden Warnhinweis handelt es sich beispielsweise um einen visuelle, akustischen und/oder mechanischen Warnhinweis. Beispielsweise kann ein entsprechender visueller Warnhinweis auf einem Display des Endgeräts angezeigt, ein entsprechender akustischer Warnhinweis über einen Lautsprecher des Endgeräts ausgegeben und/oder ein entsprechender mechanischer Warnhinweis durch eine Vibration des Endgeräts ausgegeben werden.

Ein Arbeitnehmer, welcher das Endgerät zur Arbeitszeiterfassung nutzt, erhält beispielsweise automatisch eine Meldung in Form des Warnhinweises, falls das vordefinierte erste Arbeitszeitlimit, beispielsweise in Form einer gesetzlich definierten Arbeitszeitgrenze, erreicht wird.

Ausführungsformen können den Vorteil haben, dass die Arbeitszeiterfassung so dazu konfiguriert sein kann, den Nutzer zu informieren bzw. zu warnen, wenn das vordefinierten ersten Arbeitszeitlimit, etwa eine maximale tägliche Arbeitszeit, erreicht bzw. überschritten wird.

Das Arbeitszeitgesetz gibt in §3 ArbZG aus Gründen der Sicherheit und des Gesundheitsschutzes von Arbeitnehmern beispielsweise eine maximal zulässige tägliche Arbeitszeit vor. Beispielsweise legt es dabei fest, dass die tägliche Arbeitszeit acht Stunden nicht überschreiten betragen darf. Die maximal zulässige Arbeitszeit liegt dabei beispielsweise bei zehn Stunden. Dabei ist eine Überschreitung der Acht-Stunden-Höchstgrenze auf bis zu zehn Stunden beispielsweise nur in Ausnahmefällen unter der Voraussetzung zulässig, dass innerhalb von sechs Monaten die durchschnittliche werktägliche Arbeitszeit bei acht Stunden liegt. Innerhalb des entsprechenden Zeitraums von 24 Wochen sind alle Überschreitungen der Höchstgrenze wieder auszugleichen.

Ausführungsformen können den Vorteil haben, dass sie den Nutzer aktiv dabei unterstützen können, ein Überschreiten der maximalen Arbeitszeit zu vermeiden. Das Überschreiten der maximalen Arbeitszeiten kann beispielsweise auch für den Arbeitgeber ein erhebliches Risiko darstellen, da dieser bei Verstößen gegen die Höchstarbeitszeit haftet. Dies gilt insbesondere bei betrieblichen Unfällen außerhalb der regulären Arbeitszeit. Dabei kann es beispielsweise auch darum gehen, besonders arbeitsfreudige und engagierte Arbeitsnehmer vor sich selbst zu schützen und nach Möglichkeit vor einem Burnout-Syndrom zu bewahren.

Bei der Verwendung eines Smartphones als Endgerät kann der Arbeitsnehmer vor dem Erreichen der gesetzlich zulässigen Arbeitszeit automatisch informiert und gewarnt werden. Entweder durch Klingeltöne, Anrufe oder SMS. Weiterhin besteht auch die Möglichkeit, den Arbeitnehmer taktil durch Vibration oder auch visuell durch Leuchtzeichen zu warnen. Auch die Verwendung eines Pagers als Endgerät wäre hier eine praktikable Lösung. Dabei kann es für Arbeitnehmer und Arbeitgeber auch ein Vorteil sein, wenn der Arbeitnehmer die erhaltene Meldung bestätigen kann, bzw. bestätigen muss.

Nach Ausführungsformen umfasst das Verfahren ferner:
- Erfassen eines Überschreitens eines vordefinierten zweiten Arbeitszeitlimits des authentifizierten Nutzers durch die erfasste Arbeitszeit,
- auf das Erfassen des Überschreitens des vordefinierten zweiten Arbeitszeitlimits hin, Ausgeben einer Anforderung zur Freigabe der Zeitüberschreitung,
- Empfangen einer Freigabe der Zeitüberschreitung.

Ausführungsformen können den Vorteil haben, dass bei einem Überschreiten des vordefinierten zweiten Arbeitszeitlimit eine zusätzliche Aktion in Form der Freigabe der Zeitüberschreitung notwendig ist. Beispielsweise wird bei einem Überschreiten eines ersten Arbeitszeitlimits ein Warnhinweis ausgegeben. Wird dann das zweite Arbeitszeitlimit überschritten, so ist eine explizite Freigabe notwendig. Beispielsweise kann es sich dem ersten und zweiten Arbeitszeitlimit auch um ein und dasselbe Arbeitszeitlimit handeln und der Warnhinweis zusätzlich zu oder in Form der Anforderung zur Freigabe der Zeitüberschreitung ausgegebene werden.

Die Anforderung zur Freigabe der Zeitüberschreitung kann beispielsweise visuelle und/oder akustischen ausgegeben werden. Beispielsweise kann eine entsprechende Anforderung visueller Warnhinweis auf einem Display des Endgeräts angezeigt und/oder akustische über einen Lautsprecher des Endgeräts ausgegeben werden.

Beispielsweise kann zusätzlich zu der Anforderung ein visuelles, akustisches und/oder mechanisches Hinweissignal unter Verwendung des Endgeräts ausgegeben werden. Beispielsweise kann ein entsprechendes visuelles Hinweissignal auf einem Display des Endgeräts angezeigt, ein entsprechendes akustisches Hinweissignal über einen Lautsprecher des Endgeräts ausgegeben und/oder ein entsprechendes mechanische Hinweissignal durch eine Vibration des Endgeräts ausgegeben werden. Beispielsweise wird das Hinweissignal kontinuierlich oder intervallweise solange ausgegeben, bis eine Freigabe der Zeitüberschreitung erfolgt ist.

Nach Ausführungsformen umfasst die Freigabe eine Nutzerfreigabe durch den authentifizierten Nutzer des Endgeräts. Ausführungsformen können den Vorteil haben, dass die Freigabe durch den Nutzer erfolgen kann. Durch ein erneutes Authentifizieren des Nutzers in Zuge der Freigabe kann zudem sichergestellt werden, dass die Freigabe tatsächlich von dem Nutzer kommt.

Beispielsweise ist das zweite Arbeitszeitlimit identisch mit dem ersten Arbeitszeitlimit. Beispielsweise ist das zweite Arbeitszeitlimit verschieden vom ersten Arbeitszeitlimit.

Nach Ausführungsformen setzt die Freigabe in Form der Nutzerfreigabe ein erfolgreiches zusätzliches Authentifizieren des Nutzers des Endgeräts durch das Endgerät voraus. Das zusätzliche Authentifizieren des Nutzers umfasst ein zusätzliches Authentifizieren unter Verwendung der biometrischen Authentifizierungsdaten des Nutzers, welche mittels des biometrischen Sensors erfasst werden. Ein erfolgreiches zusätzliches Authentifizieren des Nutzers setzt ein Übereinstimmen der erfassten biometrischen Authentifizierungsdaten mit den hinterlegten biometrischen Referenzdaten des Nutzers voraus.

Ausführungsformen können den Vorteil haben, dass bei einer Authentifizierung des Nutzers unter Verwendung von biometrischen Authentifizierungsdaten des Nutzers, welche mittels des biometrischen Sensors erfasst werden, sichergestellt werden kann das es tatsächlich der authentifizierte Nutzer ist, welcher das Endgerät nutzt und die Freigabe bestätigt.

Nach Ausführungsformen umfasst die Nutzerfreigabe ein Empfangen und Verifizieren eines Einmalkennworts von dem authentifizierten Nutzer. Ausführungsformen können den Vorteil haben, dass durch eine Verwendung von Einmalpasswörtern die Möglichkeiten zur Freigabe von Überschreitungen des zweiten Arbeitszeitlimits begrenzt werden können. Eine entsprechende Begrenzung kann beispielsweise durch eine Begrenzung der Anzahl der bereitgestellten Einmalkennwörter implementiert werden. Beispielsweise wird dem Nutzer des Endgeräts nur eine begrenzte Anzahl an Einmalkennwörtern zur Freigabe von Überschreitungen des zweiten Arbeitszeitlimits zur Verfügung gestellt. Über das Zurverfügungstellen der entsprechenden Einmalkennwörter kann beispielsweise auch ein Arbeitgeber limitieren, wie oft ein Arbeitnehmer eine Überschreitung des zweiten Arbeitszeitlimits freigeben kann.

Ein Einmalkennwort, auch als Einmalpasswort bzw. OTP (One-Time Password), ist ein Kennwort, welches beispielsweise eine einmalige Autorisierung ermöglicht. Dabei ist ein Einmalkennwort ist nur für eine einmalige Verwendung gültig und kann kein zweites Mal benutzt werden. Somit ist für jede Autorisierung bzw. jeden Autorisierungsvorgang jeweils ein neues Einmalkennwort notwendig. Da sie nur einmalig verwendet werden können, sind Einmalpasswörter sowohl sicher gegenüber passiven Angriffen, wie Mithören, als auch gegenüber Replay-Attacken.

Beispielsweise handelt es sich bei dem Einmalkennwort um ein dem Nutzer zur Verfügung stehendes Einmalkennwort, welche der Nutzer unter Verwendung einer Nutzerschnittstelle in Antwort auf die Anforderung zur Freigabe in das Endgerät eingibt. Das Einmalkennwort kann dem Nutzer im Bedarfsfall auch auf Anfrage, beispielsweise von einem Arbeitgeber, zur Verfügung gestellt werden. Alternativerweise kann dem Nutzer im Vorhinein eine Mehrzahl von Einmalkennwörtern zur Verfügung gestellt werden, welche er im Bedarfsfall verwenden kann, bis sämtliche Einmalkennwörter verbraucht sind. Durch die Anzahl der bereitgestellten Einmalkennwörter kann die Anzahl der Freigaben von Überschreitungen des zweiten Arbeitszeitlimits limitiert werden. Beispielsweise werden dem Nutzer des Endgeräts für einen bestimmten Zeitraum nur eine bestimmte Anzahl an Einmalkennwörtern zur Verfügung gestellt. Somit kann die Anzahl der möglichen Freigaben von Überschreitungen des zweiten Arbeitszeitlimits effektiv limitiert werden.

Nach Ausführungsformen umfasst das Verfahren ferner ein Senden einer Einmalkennwortanfrage unter Verwendung der Kommunikationsschnittstelle des Endgeräts an einen Verwaltungsserver.

Ausführungsformen können den Vorteil haben, dass ein oder mehrere Einmalkennwörter im Bedarfsfall oder vorsorglich bei dem Verwaltungsserver angefragt werden können. Die entsprechenden Einmalkennwörter werden beispielsweise in Antwort auf das Senden der Einmalkennwortanfrage durch das Endgerät unter Verwendung der Kommunikationsschnittstelle von dem Verwaltungsserver empfangen. Beispielsweise wird die Einmalkennwortanfrage über einen ersten Kommunikationskanal gesendet. Beispielsweise werden die ein oder mehrere Einmalkennwörter über einen von dem ersten Kommunikationskanal verschiedenen zweiten Kommunikationskanal gesendet. Beispielsweise handelt es sich bei dem ersten Kommunikationskanal über einer Internetverbindung. Beispielsweise werden die ein oder mehrere Einmalkennwörter unter Verwendung einer SMS von dem Endgerät empfangen.

Beispielsweise werden die ein oder mehrere Einmalkennwörter unabhängig von dem Endgerät an den Nutzer übertragen. Beispielsweise werden die ein oder mehrere Einmalkennwörter per Post an den Nutzer versendet. Beispielsweise werden die ein oder mehrere Einmalkennwörter persönlich an den Nutzer übergeben, etwa von einem Vorgesetzten oder einem dafür zuständigen Kollegen.

Nach Ausführungsformen umfasst die Freigabe eine Freigabebestätigung durch eine weitere Instanz. Das Verfahren umfasst ferner:
- Senden einer Freigabeanfrage an ein der weiteren Instanz zugeordnetes Computersystem,
- in Antwort auf das Senden der Freigabeanfrage, Empfangen der Freigabebestätigung von dem der weiteren Instanz zugeordneten Computersystem, wobei die Freigabebestätigung unter Verwendung eines der weiteren Instanz zugeordneten zweiten Signaturschlüssels signiert ist,
- Verifizieren der Signatur der Freigabebestätigung unter Verwendung eines der weiteren Instanz zugeordneten zweiten Signaturprüfschlüssels, wobei die Freigabe ein erfolgreiches Verifizieren der entsprechenden Signatur voraussetzt.

Ausführungsformen können den Vorteil haben, dass für eine erfolgreiche Freigabe eine Freigabebestätigung einer weiteren Instanz notwendig ist. Bei dieser weiteren Instanz kann es sich beispielsweise um eine zentrale Instanz, etwa den Arbeitgeber oder einen Vorgesetzten handeln. Somit kann technisch beispielsweise eine direkte Kontrollfunktion der weiteren Instanz bezüglich Überschreitungen des zweiten Arbeitszeitlimits implementiert werden. Eine Freigabe einer solchen Überschreitung erfordert in diesem Fall eine explizite Freigabebestätigung durch die weitere Instanz. Bei dem zweiten Signaturschlüssel und dem zweiten Signaturprüfschlüssel der weiteren Instanz handelt es sich beispielsweise um einen privaten und einen öffentlichen kryptographischen Schlüssel eines der weiteren Instanz zugeordneten asymmetrischen Schlüsselpaars.

Nach Ausführungsformen werden, auf das Erfassen des Überschreitens des vordefinierten zweiten Arbeitszeitlimits hin, Bedienungsrechte des Nutzers des Endgeräts zur Bedienung eines oder mehrere Arbeitsgeräte bis zum Empfang der Freigabe eingeschränkt.

Ausführungsformen können den Vorteil haben, dass der Nutzer zur weiteren vollumfänglichen Nutzung der ein oder mehreren Arbeitsgeräte eine Freigabe benötigt. Solange keine solche Freigabe vorliegt, sind seine Bedienungsrechte eingeschränkt. Ein Einschränken der Bedienungsrechte kann den Vorteil haben, dass der Nutzer dazu veranlasst werden kann, seine Arbeit zu beenden, falls die Freigabe ausbleibt. Beispielsweise ist der Nutzer infolge der Einschränkungen der Bedienungsrechte immer noch in der Lage, die Verwendung der entsprechenden Arbeitsgeräte geordnet zu beenden und einen begonnenen Arbeitsschritt zu Ende zu führen.

Bedienungsrechte legen beispielsweise fest, welche Rechte ein Nutzer bei der Bedienung des Arbeitsgeräts besitzt, d.h. welche technischen Funktionen des Arbeitsgeräts der Nutzer mit dem Arbeitsgerät ausführen darf. Falls ein Bedienungsrecht eingeschränkt ist, sodass der Nutzer nicht mehr die Berechtigung besitzt eine bestimmte Funktion des Arbeitsgeräts zu initiieren, wird ein Ausführen eines Befehls des Nutzers, die entsprechende Funktion auszuführen, von dem Arbeitsgerät verweigert.

Nach Ausführungsforen wird, auf das Erfassen des Überschreitens des vordefinierten zweiten Arbeitszeitlimits hin, eine Bedienung der ein oder mehreren Arbeitsgeräte durch den Nutzer des Endgeräts bis zum Empfang der Freigabe blockiert.

Ausführungsformen können den Vorteil haben, dass der Nutzer zur weiteren Nutzung der ein oder mehreren Arbeitsgeräte eine Freigabe benötigt. Solange keine solche Freigabe vorliegt, ist eine Nutzung der entsprechenden Arbeitsgeräte durch den Nutzer blockiert. Ein Blockieren der Bedienung der Arbeitsgeräte durch den Nutzer des Endgeräts kann den Vorteil haben, dass der Nutzer dazu gezwungen werden kann, seine Arbeit zu beenden, falls die Freigabe ausbleibt.

Nach Ausführungsformen umfasst das Authentifizieren des Nutzers des Endgeräts ferner:
- Empfangen ein oder mehrerer aus einem ID-Token des Nutzers ausgelesener Attribute des Nutzers von einem ID-Providerserver unter Verwendung einer Kommunikationsschnittstelle des Endgeräts, wobei die empfangenen Attribute des Nutzers mit einem dritten Signaturschlüssel des ID-Providerservers signiert sind,
- Verifizieren der Signatur der empfangenen Attribute unter Verwendung eines dritten Signaturprüfschlüssels des ID-Providerservers, wobei ein erfolgreiches Authentifizieren des Nutzers zusätzlich zu einem erfolgreichen Verifizieren der entsprechenden Signatur ein Übereinstimmen der empfangenen ein oder mehreren Attributen mit ein oder mehreren hinterlegten Referenzattributen des Nutzers voraussetzt.

Ausführungsformen können den Vorteil haben, dass ein Authentifizieren des Nutzers zusätzlich zu den biometrischen Authentifizierungsdaten des Nutzers, welche mittels des biometrischen Sensors erfasst werde, unter Verwendung eines ID-Tokens erfolgt. Somit kann eine Multi-Faktor-Authentifizierung, beispielsweise Zwei-Faktor-Authentifizierung, des Nutzers des Endgeräts implementiert werden. Hierbei erfolgt eine Authentifizierung, z.B. eine Identitätsprüfung, des Nutzers unter Verwendung zweier oder mehr unterschiedlicher, insbesondere unabhängiger Komponenten bzw. Faktoren. Neben einem auf Inhärenz basierenden Faktor in Form der biometrischen Authentifizierungsdaten des Nutzers kommt beispielsweise ein auf Besitz basierender Faktor in Form des ID-Tokens zum Einsatz. Der Nutzer muss zu einer erfolgreichen Authentifizierung zusätzlich den Besitz des ID-Tokens mit den korrekten Attributen nachweisen. Bei den entsprechenden Attributen des Nutzers handelt es sich beispielsweise um Angaben zu einem Namen, einem Geburtsdatum, einem Geburtsort und/oder einer Wohnanschrift des Nutzers.

Die Attribute des Nutzers werden von dem ID-Providerserver empfangen, welcher mit seiner Signatur bestätigt, dass er die entsprechenden Attribute aus einem ID-Token ausgelesen hat und dass es sich bei den bereitgestellten Attributen um authentische Attribute handelt, welche mit den ausgelesenen Attributen übereinstimmen. Zum Auslesen von Attributen aus ID-Token besitzt der ID-Providerserver beispielsweise ein Berechtigungszertifikat, mit welchem er seine Berechtigung zum Auslesen der Attribute nachweisen kann. Bei dem dritten Signaturschlüssel und dem dritten Signaturprüfschlüssel des ID-Providerservers handelt es sich beispielsweise um einen privaten und einen öffentlichen kryptographischen Schlüssel eines dem ID-Providerserver zugeordneten asymmetrischen Schlüsselpaars.

Unter einem "ID-Token" wird hier ein mobiles tragbares elektronisches Gerät verstanden, zum Beispiel eine Chipkarte oder ein Dokument, auf welchem personenbezogene Attribute eines Nutzers, d.h. Nutzerattribute, gespeichert sind. Unter einem "Dokument" wird insbesondere ein Ausweis-, Wert- oder Sicherheitsdokument verstanden, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Nach Ausführungsformen wird der ID-Token mit den Attributen des Nutzers unabhängig von dem Endgerät bereitgestellt. Beispielsweise sendet das Endgerät im Zuge der Authentifizierung des Nutzers unter Verwendung einer Kommunikationsschnittstelle des Endgeräts eine Attributanforderung an den ID-Providerserver und empfängt die ein oder mehrerer aus einem ID-Token des Nutzers ausgelesener Attribute des Nutzers von einem ID-Providerserver in Antwort auf die Attributanforderung.

Nach Ausführungsformen wird das ID-Token in Form einer ID-Applikation bereitgestellt, deren Programminstruktionen in dem Speicher des Endgeräts gespeichert sind. Der ID-Providerserver liest die Attribute des Nutzers im Zuge des Authentifizierens des Nutzers über die Kommunikationsschnittstelle des Endgeräts aus.

Ausführungsformen können den Vorteil haben, dass der ID-Token mit den Attributen des Nutzers durch das Endgerät bereitgestellt wird. Die Attribute sind beispielsweise unter Verwendung eines Sicherheitselements des Endgeräts geschützt auf dem Endgerät gespeichert. Beispielsweise sind die Attribute in einem geschützten Speicherbereich des Sicherheitselements gespeichert. Somit kann ein Auslesen der Attribute nur unter Verwendung des Sicherheitselements erfolgen. Beispielsweise sind die Attribute in verschlüsselter Form auf dem Endgerät gespeichert, wobei ein oder mehrere kryptographische Schlüssel zum Entschlüsseln der Attribute in einem geschützten Speicherbereich des Sicherheitselements gespeichert sind. Somit kann ein Auslesen der Attribute in Klartext nur unter Verwendung des Sicherheitselements erfolgen.

Ein Auslesen der Attribute, etwa zu Authentifizierungszwecke, ist daher nicht ohne weiteres möglich. Vielmehr sind die Attribute effektiv gegen ein unberechtigtes Auslesen geschützt. Beispielsweise ist zum Auslesen der Attribute aus dem Endgerät, d.h. zum Zugriff auf den geschützten Speicherbereich des Sicherheitselements mit den entsprechenden Attributen und/oder den ein oder mehreren kryptographischen Schlüsseln zum Entschlüsseln der verschlüsselt auf dem Endgerät gespeicherten Attribute, ein Berechtigungsnachweis unter Verwendung eines Berechtigungszertifikats notwendig. Beispielsweise besitzt der ID-Providerserver ein Berechtigungszertifikat, mit welchem er seine Berechtigung zum Auslesen der Attribute nachweisen kann. Beispielsweise ordnet das Berechtigungszertifikat dem ID-Providerserver einen öffentlichen kryptographischen Schlüssel eines asymmetrischen Schlüsselpaars zu. Der ID-Providerserver verfügt ferner über einen privaten kryptographischen Schlüssel des asymmetrischen Schlüsselpaars. Beispielsweise sendet der ID-Providerserver eine Leseanfrage zum Lesen der Attribute des Nutzers an das Endgerät bzw. die auf dem Endgerät implementierte ID-Applikation. Die Leseanfrage ist beispielsweise mit dem privaten kryptographischen Schlüssel des asymmetrischen Schlüsselpaars signiert. Das Endgerät bzw. die ID-Applikation prüft eine Validität der Signatur der Leseanfrage unter Verwendung des Berechtigungszertifikats bzw. des von dem Berechtigungszertifikat bereitgestellten öffentlichen kryptographischen Schlüssel. Auf eine erfolgreiche Validitätsprüfung hin gewährt das Endgerät bzw. das Sicherheitselement des Endgeräts dem ID-Providerserver einen Lesezugriff auf die Attribute.

Zum Auslesen der Attribute des Nutzers aus dem Endgerät wird beispielsweise eine verschlüsselte Kommunikationsverbindung zwischen dem Endgerät und dem ID-Providerserver aufgebaut. Beispielsweise ist die entsprechende Kommunikationsverbindung mittels einer Ende-zu-Ende-Verschlüsselung verschlüsselt.

Beispielsweise empfängt das Endgerät die von dem ID-Providerserver ausgelesenen Attribute des Nutzers über eine verschlüsselte Kommunikationsverbindung zwischen dem Endgerät und dem ID-Providerserver aufgebaut. Beispielsweise ist die entsprechende Kommunikationsverbindung mittels einer Ende-zu-Ende-Verschlüsselung verschlüsselt.

Beispielsweise sendet das Endgerät im Zuge der Authentifizierung des Nutzers unter Verwendung einer Kommunikationsschnittstelle des Endgeräts eine Attributanforderung an den ID-Providerserver und empfängt die ein oder mehrerer aus einem ID-Token des Nutzers ausgelesenen Attribute des Nutzers von einem ID-Providerserver in Antwort auf die Attributanforderung.

Nach Ausführungsformen erfolgt das Authentifizieren des Nutzers unter Verwendung der biometrischen Authentifizierungsdaten im Zuge des Auslesens der Attribute aus dem Endgerät. Das Übereinstimmen der erfassten biometrischen Authentifizierungsdaten mit den hinterlegten biometrischen Referenzdaten des Nutzers ist Voraussetzung für ein Gewähren eines Lesezugriffs des ID-Providerservers auf die Attribute des Nutzers.

Ausführungsformen können den Vorteil haben, dass ein Lesezugriff des ID-Providerservers auf die Attribute des Nutzers nur durch den Nutzer gewährt werden kann. Somit kann sichergestellt werden, dass die Attribute Nutzers nur mit Zustimmung des entsprechenden Nutzers von dem ID-Providerserver aus dem Endgerät ausgelesen werden können. Eine erfolgreiche Authentifizierung des Nutzers unter Verwendung der biometrischen Authentifizierungsdaten im Zuge des Auslesens der Attribute wird von dem Endgerät, beispielsweise einem Betriebssystem des Endgeräts, gegenüber der ID-Applikation bestätigt. Zusätzlich kann das Endgerät, insbesondere ein Betriebssystem des Endgeräts, die erfolgreiche Authentifizierung des Nutzers unter Verwendung der biometrischen Authentifizierungsdaten auch gegenüber der Zeiterfassungsapplikation bestätigen.

Beispielsweise erfolgt das biometrische Authentifizieren des Nutzers gegenüber der ID-Applikation und das biometrische Authentifizieren des Nutzers gegenüber der Arbeitszeiterfassungsapplikation unabhängig voneinander.

Nach Ausführungsformen umfasst das Speichern der für den authentifizierten Nutzer erfassten Arbeitszeit eine lokale Speicherung in dem Speicher des Endgeräts.

Ausführungsformen können den Vorteil haben, dass die erfassten Arbeitszeiten lokal vorrätig gehalten und es dem Nutzer so ermöglicht wird selbst seine Arbeitszeiten zu verwalten.

Nach Ausführungsformen umfasst das Speichern der für den authentifizierten Nutzer erfassten Arbeitszeit ein Senden einer Angabe der erfassten Arbeitszeit an einen Server zur Speicherung. Die Angabe der erfassten Arbeitszeit wird vor dem Senden unter Verwendung eines dem Nutzer des Endgeräts zugeordneten vierten Signaturschlüssels von dem Endgerät signiert.

Ausführungsformen können den Vorteil haben, dass eine sichere Speicherung der erfassten Arbeitszeiten auf dem Server ermöglicht wird. Bei dem Server handelt es sich beispielsweise um einen Server des Arbeitgebers. Beispielsweise besitzt der Arbeitgeber Zugriff auf die auf dem Server gespeicherten Arbeitszeiten des Nutzers und/oder das Arbeitszeitkonto des Nutzers.

Bei dem vierten Signaturschlüssel des Endgeräts handelt es sich beispielsweise um einen privaten kryptographischen Schlüssel eines dem Endgerät zugeordneten asymmetrischen Schlüsselpaars. Zum Prüfen von Signaturen, welche unter Verwendung des vierten Signaturschlüssel des Endgeräts erstellt wurden, wird von dem Endgerät beispielsweise ein vierter Signaturprüfschlüssel bereitgestellt, bei welchem es sich beispielsweise um einen öffentlichen kryptographischen Schlüssel des dem Endgerät zugeordneten asymmetrischen Schlüsselpaars handelt.

Beispielsweise können erfasste Arbeitszeiten über das Senden entsprechender Angaben der erfassten Arbeitszeiten an den Server einem Arbeitgeber mitgeteilt und/oder in ein firmeneigenes Arbeitszeiterfassungssystem und/oder Arbeitszeitverwaltungssystem integriert werden.

Ausführungsformen ermöglichen es so, dass erfasste Arbeitszeiten beispielsweise fälschungssicher in einer Cloud abgelegt werden können, d.h. in ein oder mehreren Speicherressource, welche als Infrastructure as a Service (laaS), für eine Zugriffe über ein Netzwerk, etwa das Internet, bereitgestellt werden. Beispielsweise werden die entsprechenden Speicherressourcen in Form von Rechenzentren bereitgestellt, die mit dem Internet verbunden sind. Online bereitgestellten Speicherressourcen bieten Speicherplatz, auf dem Dateien online gespeichert werden können und auf den bei Bedarf zugegriffen werden kann. Das Cloud Computing beschreibt allgemein ein Modell, das bei Bedarf, insbesondere über das Internet und geräteunabhängig, geteilte Computerressourcen als Dienstleistung, etwa in Form von Servern, Datenspeicher oder Applikationen, bereitstellt. Angebot und Nutzung dieser Computerressourcen ist im Allgemeinen definiert und erfolgt in der Regel über eine Programmierschnittstelle (API) bzw. für Nutzer über eine Website oder eine Applikation.

Nach Ausführungsformen setzt ein Speichern der Angabe der erfassten Arbeitszeit durch den Server ein erfolgreiches Verifizieren der Signatur der Angabe der erfassten Arbeitszeit unter Verwendung eines dem Nutzer des Endgeräts zugeordneten vierten Signaturprüfschlüssels voraus.

Ausführungsformen können den Vorteil haben, dass nur anhand einer Signatur mit dem vierten Signaturschlüssel des Endgeräts verifizierte Angabe der erfassten Arbeitszeit auf dem Server gespeichert werden. An Hand der Signatur kann verifiziert werden, dass es sich bei den Angaben der erfassten Arbeitszeit tatsächlich um Angaben von Arbeitszeiten handelt, welche von dem Endgerät bzw. der auf dem Endgerät gespeicherten Arbeitszeiterfassungsapplikation erfasst wurden.

Nach Ausführungsformen handelt es sich bei dem Server um einen Blockchain-Server. Die Speicherung der Angabe der erfassten Arbeitszeit erfolgt durch den Blockchain-Server in einer von dem Blockchain-Server zumindest mitverwalteten Blockchain.

Ausführungsformen können den Vorteil haben, dass eine Blockchain eine effektive Möglichkeit zu einem manipulationssicheren Speichern der Angabe der erfassten Arbeitszeit bereitstellt.

Eine Blockchain bezeichnet eine kontinuierlich erweiterbare Liste von Datensätzen in Form einzelner Blöcke. Neue Blöcke werden nach einem festgelegten Verfahren erstellt und mittels kryptographischer Verfahren an eine bestehende Kette aus Blöcken angehängt. Dabei enthält der neue Block jeweils einen kryptographisch sicheren Hashwert, d.h. Streuwert, zumindest der Daten des unmittelbar vorhergehenden Blocks in der Blockchain. Soll ein Block der Blockchain geändert bzw. manipuliert werden, so müssten hierfür auch die in allen nachfolgenden Blöcken jeweils gespeicherten Hashwerte, d.h. alle nachfolgenden Blöcke manipuliert werden. Somit kann durch das kryptographische Verkettungsverfahren, welches die Verwendung der Hashfunktion umfasst, sichergestellt werden, dass die Blockchain nicht nachträglich geändert werden kann. Die resultierende kryptographisch verknüpfte Kette der Blöcke ist somit unveränderbar, fälschungs- und manipulationssicher.

Bei der Blockchain kann es sich beispielsweise um eine öffentliche Blockchain, eine konsortiale Blockchain oder eine private Blockchain handeln. Eine öffentliche Blockchain ist öffentlich zugänglich und wird im Allgemeinen auf einem öffentlichen Netzwerk betrieben. Eine konsortiale Blockchain ist im Gegensatz dazu nur ausgewählten Entitäten zugänglich und wird im Allgemeinen auf einem Netzwerk betrieben, an welchem ausschließlich diese Entitäten beteiligt sind. Eine private Blockchain ist schließlich nur für eine Entität privat zugänglich und wird im Allgemeinen auf einem privaten Netzwerk der entsprechenden Entität betrieben. Neue Blöcke der Blockchain werden beispielsweise unter Verwendung eines Konsensverfahrens erstellt. Dieses Konsensverfahrens kann beispielsweise eines der folgenden Verfahren umfassen: einen Proof of Work, einen Proof of Stake, oder einen Proof of Authority.

Nach Ausführungsformen umfasst das Verfahren zum Speichern der Angabe der erfassten Arbeitszeit in der Blockchain beispielsweise ferner durch den Blockchain-Server:
- Bereitstellen der Blockchain bzw. einer Kopie der Blockchain,
- Empfangen einer Eintragungsanfrage zur Eintragung der Angabe der erfassten Arbeitszeit in die Blockchain,
- Verifizieren der Signatur der Angabe der erfassten Arbeitszeit unter Verwendung des dem Nutzer des Endgeräts zugeordneten vierten Signaturprüfschlüssels,
- Erstellen eines zusätzlichen Blocks für die Blockchain, in welchen die empfangene Angabe der erfassten Arbeitszeit eingetragen wird,
- Hinzufügen des zusätzlichen Blocks mit der Angabe der erfassten Arbeitszeit zu der Blockchain.

Ausführungsformen umfassen ferner eine Arbeitszeiterfassungsapplikation zum nutzerindividuellen Erfassen von Arbeitszeit unter Verwendung eines mobilen tragbaren Endgeräts. Die Arbeitszeiterfassungsapplikation umfasst Programminstruktionen.

Ein Ausführen der Programminstruktionen durch einen Prozessor des mobilen tragbaren Endgeräts veranlasst den Prozessor dazu, das mobile tragbare Endgerät zum Ausführen eines Verfahrens zu steuern, welches umfasst:
- Erfassen eines Indikators eines Arbeitszeitbeginns,
- auf das Erfassen des Indikators des Arbeitszeitbeginns hin, Beginnen einer Arbeitszeiterfassung,
- Authentifizieren des Nutzers des Endgeräts, für welchen die Arbeitszeiterfassung erfolgt, wobei das Authentifizieren des Nutzers ein Authentifizieren unter Verwendung von biometrischen Authentifizierungsdaten des Nutzers umfasst, welche mittels eines biometrischen Sensors des Endgeräts erfasst werden, wobei ein erfolgreiches Authentifizieren des Nutzers ein Übereinstimmen der erfassten biometrischen Authentifizierungsdaten mit hinterlegten biometrischen Referenzdaten des Nutzers voraussetzt,
- Zuordnen der Arbeitszeiterfassung zu einem Arbeitszeitkonto des authentifizierten Nutzers,
- Erfassen eines Indikators eines Arbeitszeitendes,
- auf das Erfassen des Indikators des Arbeitszeitendes hin, Beenden der Arbeitszeiterfassung,
- Speichern der für den authentifizierten Nutzer erfassten Arbeitszeit in dem Arbeitszeitkonto des authentifizierten Nutzers.

Nach Ausführungsformen ist die Arbeitszeiterfassungsapplikation dazu konfiguriert jede der zuvor beschriebenen Ausführungsformen des Verfahrens zum nutzerindividuellen Erfassen von Arbeitszeit auszuführen.

Ausführungsformen umfassen ferner ein mobiles tragbares Endgerät zum nutzerindividuellen Erfassen von Arbeitszeit. Das Endgerät umfasst einen Prozessor und einen Speicher mit Programminstruktionen einer Arbeitszeiterfassungsapplikation und einen biometrischen Sensor zur Erfassung von biometrischen Authentifizierungsdaten zum Authentifizieren eines Nutzers des Endgeräts.

Das Verfahren umfasst bei Ausführen der Arbeitszeiterfassungsapplikation durch das Endgerät:
- Erfassen eines Indikators eines Arbeitszeitbeginns,
- auf das Erfassen des Indikators des Arbeitszeitbeginns hin, Beginnen einer Arbeitszeiterfassung,
- Authentifizieren des Nutzers des Endgeräts, für welchen die Arbeitszeiterfassung erfolgt, wobei das Authentifizieren des Nutzers ein Authentifizieren unter Verwendung von biometrischen Authentifizierungsdaten des Nutzers umfasst, welche mittels des biometrischen Sensors erfasst werden, wobei ein erfolgreiches Authentifizieren des Nutzers ein Übereinstimmen der erfassten biometrischen Authentifizierungsdaten mit hinterlegten biometrischen Referenzdaten des Nutzers voraussetzt,
- Zuordnen der Arbeitszeiterfassung zu einem unter Verwendung der Arbeitszeiterfassungsapplikation verwalteten Arbeitszeitkonto des authentifizierten Nutzers,
- Erfassen eines Indikators eines Arbeitszeitendes,
- auf das Erfassen des Indikators des Arbeitszeitendes hin, Beenden der Arbeitszeiterfassung,
- Speichern der für den authentifizierten Nutzer erfassten Arbeitszeit in dem Arbeitszeitkonto des authentifizierten Nutzers.

Nach Ausführungsformen ist das Endgerät dazu konfiguriert jede der zuvor beschriebenen Ausführungsformen des Verfahrens zum nutzerindividuellen Erfassen von Arbeitszeit auszuführen.

Ausführungsformen umfassen ferner ein System umfassend ein mobiles tragbares Endgerät nach einer der vorstehenden Ausführungsformen eines mobilen tragbaren Endgeräts und einen Server zum Speichern einer Angabe der erfassten Arbeitszeit. Das Speichern der für den authentifizierten Nutzer erfassten Arbeitszeit umfasst ein Senden der Angabe der erfassten Arbeitszeit an einen Server zur Speicherung. Die Angabe der erfassten Arbeitszeit wird vor dem Senden unter Verwendung eines dem Nutzer des Endgeräts zugeordneten vierten Signaturschlüssels von dem Endgerät signiert. Der Server empfängt die Angabe der erfassten Arbeitszeit und verifiziert die Signatur der Angabe der erfassten Arbeitszeit unter Verwendung eines dem Nutzer des Endgeräts zugeordneten vierten Signaturprüfschlüssels. Der Server speichert die Angabe der erfassten Arbeitszeit auf ein erfolgreiches Verifizieren der Signatur der Angabe der erfassten Arbeitszeit hin in dem Arbeitszeitkonto des authentifizierten Nutzers.

Nach Ausführungsformen ist das System dazu konfiguriert jede der zuvor beschriebenen Ausführungsformen des Verfahrens zum nutzerindividuellen Erfassen von Arbeitszeit auszuführen.

Nach Ausführungsformen handelt es sich bei dem Server um einen Blockchain-Server. Die Speicherung der Angabe der erfassten Arbeitszeit erfolgt durch den Blockchain-Server in einer von dem Blockchain-Server zumindest mitverwalteten Blockchain.

Nach Ausführungsformen ist der Blockchain-Server zum nutzerindividuellen Erfassen von Arbeitszeit beispielsweise konfiguriert zum:
- Bereitstellen der Blockchain bzw. einer Kopie der Blockchain,
- Empfangen einer Eintragungsanfrage zur Eintragung der Angabe der erfassten Arbeitszeit in die Blockchain,
- Verifizieren der Signatur der Angabe der erfassten Arbeitszeit unter Verwendung des dem Nutzer des Endgeräts zugeordneten vierten Signaturprüfschlüssels,
- Erstellen eines zusätzlichen Blocks für die Blockchain, in welchen die empfangene Angabe der erfassten Arbeitszeit eingetragen wird,
- Hinzufügen des zusätzlichen Blocks mit der Angabe der erfassten Arbeitszeit zu der Blockchain.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem Sicherheitselement wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Applikationen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Ein Sicherheitselement kann beispielsweise in Form eines Secure Element (SE) implementiert sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE ("Trusted Excecution Environment"). Beispielsweise kann das Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen Speicher" wird hier ein elektronischer Speicher zur vorübergehenden Speicherung von Daten verstanden, welcher dadurch gekennzeichnet ist, dass gespeicherte Daten nach dem Abschalten der Energieversorgung verloren gehe.

Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentifizierung und/oder eine erfolgreiche Berechtigungsprüfung einer Zugriffsanfrage, handeln.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Gerät eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Bei einem verschlüsselten Kommunikationskanal handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Kommunikationskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, so dass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen kryptographischen Schlüssel, welcher zur Ver- und/oder Entschlüsselung von Daten verwendet wird und an Dritte, beispielsweise an einen Sender oder Empfänger von Daten, weitergegeben werden darf, sowie einem privaten kryptographischen Schlüssel, welcher zur Ver- und/oder Entschlüsselung, aber auch zur Signatur von Daten verwendet wird und im Regelfall geheim gehalten werden muss. Der öffentliche Schlüssel ermöglicht es jedermann Daten für den Inhaber des privaten kryptographischen Schlüssels zu verschlüsseln und/oder mit dem privaten kryptographischen Schlüssel erstellte digitale Signaturen zu prüfen. Ein privater Schlüssel ermöglicht es seinem Inhaber mit dem öffentlichen kryptographischen Schlüssel verschlüsselte Daten zu entschlüsseln und/oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des verwendeten asymmetrischen Schlüsselpaars. Der Signaturempfänger verfügt lediglich über den öffentlichen kryptographischen Schlüssel, d.h. Signaturprüfschlüssel, des verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnete Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikatausstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen kryptographischen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen kryptographischen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen kryptographischen Schlüssels bereitstellen, wenn der zu dem Signaturprüfschlüssel gehörende private Schlüssel als Signaturschlüssel verwendet wurde.

Dadurch, dass ein ZDA /VDA ein Zertifikat in Assoziation mit einem öffentlichen kryptographischen Schlüssel der Allgemeinheit zur Verfügung stellt, ermöglicht sie es den Nutzern asymmetrischer Kryptosysteme den öffentlichen kryptographischen Schlüssel einer Identität, beispielsweise einer Person, einer Organisation, oder Computersystem, zuzuordnen.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Im Weiteren werden Ausführungsformen der Erfindung mit Bezugnahme auf die Zeichnungen näher erläutert. Es zeigen:
- Figur 1: ein Flussdiagramm eines exemplarischen Verfahrens zum nutzerindividuellen Erfassen von Arbeitszeit unter Verwendung eines mobilen tragbaren Endgeräts,
- Figur 2: ein Flussdiagramm eines exemplarischen Verfahrens zum Bestätigen eines Arbeitszeitbeginns und/oder eines Arbeitszeitendes,
- Figur 3: ein Flussdiagramm eines exemplarischen Verfahrens zum Anzeigen eines Überschreitens eines vordefinierten ersten Arbeitszeitlimits,
- Figur 4: ein Flussdiagramm eines exemplarischen Verfahrens zum Freigeben eines Überschreitens eines vordefinierten zweiten Arbeitszeitlimits,
- Figur 5: ein Flussdiagramm eines exemplarischen Verfahrens zum Freigeben eines Überschreitens eines vordefinierten zweiten Arbeitszeitlimits,
- Figur 6: ein Flussdiagramm eines exemplarischen Verfahrens zum Einschränken von Bedienungsrechten,
- Figur 7: ein Flussdiagramm eines exemplarischen Verfahrens zum Authentifizieren des Nutzers des Endgeräts unter Verwendung eines ID-Tokens,
- Figur 8: ein Flussdiagramm eines exemplarischen Verfahrens zum Authentifizieren des Nutzers des Endgeräts unter Verwendung eines ID-Tokens,
- Figur 9: ein Flussdiagramm eines exemplarischen Verfahrens zum Speichern einer Angabe einer erfassten Arbeitszeit in einer Blockchain,
- Figur 10: ein schematisches Diagramm eines exemplarischen Endgeräts zur Arbeitszeiterfassung,
- Figur 11: ein schematisches Diagramm eines exemplarischen Systems zur Erfassung eines Arbeitsbeginns und/oder eines Arbeitszeitendes eines Endgeräts,
- Figur 12: ein schematisches Diagramm eines exemplarischen Systems zum Auslesen von Attributen aus eine ID-Token,
- Figur 13: ein schematisches Diagramm eines exemplarischen Systems zum Auslesen von Attributen aus einem von einem Endgerät bereitgestellten ID-Token,
- Figur 14: ein schematisches Diagramm eines exemplarischen Systems zum Bestätigen eines Überschreitens eines vordefinierten Arbeitszeitlimits,
- Figur 15: ein schematisches Diagramm eines exemplarischen Endgeräts zur Arbeitszeiterfassung,
- Figur 16: ein schematisches Diagramm eines exemplarischen Systems zum Aufheben einer Einschränkung von Bedienungsrechten zur Bedienung eines Arbeitsgeräts,
- Figur 17: ein schematisches Diagramm eines exemplarischen Systems zum Speichern einer Angabe einer erfassten Arbeitszeit und
- Figur 18: ein schematisches Diagramm eines exemplarischen Systems zum Speichern einer Angabe einer erfassten Arbeitszeit in einer Blockchain.

Elemente der nachfolgenden Ausführungsformen, die einander entsprechen, werden mit denselben Bezugszeichen gekennzeichnet.

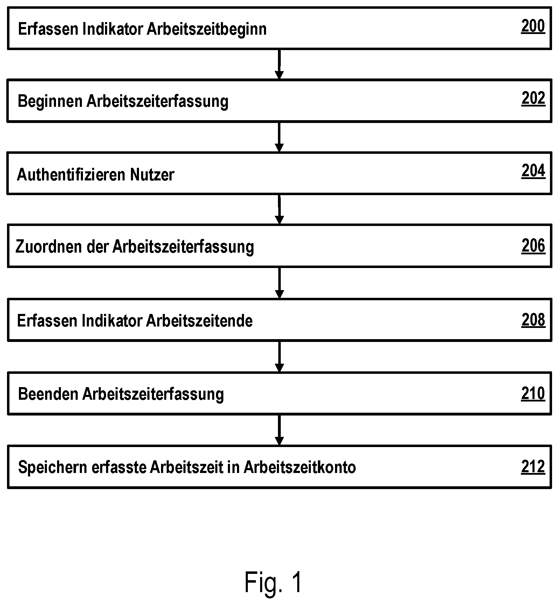

Figur 1 zeigt ein exemplarisches Verfahren zum nutzerindividuellen Erfassen von Arbeitszeit unter Verwendung eines mobilen tragbaren Endgeräts. Das Endgerät umfasst einen Prozessor und einen Speicher mit Programminstruktionen einer Arbeitszeiterfassungsapplikation und einen biometrischen Sensor zur Erfassung von biometrischen Authentifizierungsdaten zum Authentifizieren eines Nutzers des Endgeräts. In Block 200 wird ein Indikator eines Arbeitszeitbeginns erfasst.

Der Indikator des Arbeitsbeginns kann beispielsweise eine Nutzereingabe umfassen, mittels derer der Nutzer des Endgeräts den Arbeitszeitbeginn anzeigt, eine Ortserfassung einer Anwesenheit des Endgeräts an einem vordefinierten Ort durch das Endgerät, welcher dem Arbeitszeitbeginn zugeordnet ist, eine Interaktion des Endgeräts mit einem Arbeitsgerät und/oder eine Bestätigung des Arbeitszeitbeginns durch einen weiteren Nutzer eines weiteren mobilen tragbaren Endgeräts.

In Block 202 wird auf das Erfassen des Indikators des Arbeitszeitbeginns hin eine Arbeitszeiterfassung durch die Arbeitszeiterfassungsapplikation begonnen. In Block 204 wird der Nutzer des Endgeräts, für welchen die Arbeitszeiterfassung erfolgt, authentifiziert. Das Authentifizieren des Nutzers umfasst ein Authentifizieren unter Verwendung von biometrischen Authentifizierungsdaten des Nutzers, welche mittels des biometrischen Sensors erfasst werden. Dabei setzt ein erfolgreiches Authentifizieren des Nutzers ein Übereinstimmen der erfassten biometrischen Authentifizierungsdaten mit hinterlegten biometrischen Referenzdaten des Nutzers voraussetzt. Neben der Authentifizierung unter Verwendung der biometrischen kann das Authentifizieren des Nutzers beispielsweise noch weitere Authentifizierungsfaktoren des Nutzers umfassen, d.h. als Multi-Faktor-Authentifizierung konfiguriert sein. In Block 206 wird die Arbeitszeiterfassung zu einem unter Verwendung der Arbeitszeiterfassungsapplikation verwalteten Arbeitszeitkonto des authentifizierten Nutzers zugeordnet. In Block 208 wird ein Indikator eines Arbeitszeitendes erfasst.

Der Indikator des Arbeitsendes kann beispielsweise eine Nutzereingabe umfassen, mittels derer der Nutzer des Endgeräts das Arbeitszeitende anzeigt, eine Ortserfassung einer Anwesenheit des Endgeräts an einem vordefinierten Ort durch das Endgerät, welcher dem Arbeitszeitende zugeordnet ist, eine Interaktion des Endgeräts mit einem Arbeitsgerät und/oder eine Bestätigung des Arbeitszeitendes durch einen weiteren Nutzer eines weiteren mobilen tragbaren Endgeräts.

In Block 210 wird auf das Erfassen des Indikators des Arbeitszeitendes hin die Arbeitszeiterfassung beendet. In Block 212 wird die für den authentifizierten Nutzer erfasste Arbeitszeit in dem Arbeitszeitkonto des authentifizierten Nutzers gespeichert. Die Speicherung erfolgt beispielsweise lokal in dem Seicher des Endgeräts. Zusätzlich oder alternative zu der lokalen Speicherung in dem Speicher des Endgeräts kann das Speichern der für den authentifizierten Nutzer erfassten Arbeitszeit eine zentrale Speicherung unter Verwendung eines Servers umfassen. Beispielsweise kann die erfasste Arbeitszeit in der Cloud gespeichert werden. Beispielsweise wird eine Angabe der erfassten Arbeitszeit zur Speicherung an den Server gesendet. Beispielsweise kann es sich bei dem Server um einen Blockchain-Server handeln, wobei die Speicherung der Angabe der erfassten Arbeitszeit durch den Blockchain-Server in einer von dem Blockchain-Server zumindest mitverwalteten Blockchain erfolgt.

Die Reihenfolge der einzelnen Schritte des vorgenannten Verfahrens können variieren. Beispielsweise kann eine Authentifizierung des Nutzers nach dem Erfassen des Arbeitszeitbeginns erfolgen und/oder dem Beginn der Arbeitszeiterfassung erfolgen. Somit kann zunächst die Notwendigkeit einer Arbeitszeiterfassung erfasst und/oder die Arbeitszeiterfassung gestartet werden und anschließende bestimmt werden für welchen Nutzer die entsprechende Arbeitszeiterfassung erfolgt. Somit kann beispielsweise Erfassen des Arbeitszeitbeginns und/oder des Startens der Arbeitszeiterfassung eine Voraussetzung für das Authentifizieren des Nutzers. Alternativ kann das Authentifizierung des Nutzers vor dem Erfassen des Arbeitszeitbeginns erfolgen und/oder dem Beginn der Arbeitszeiterfassung erfolgen. Somit kann beispielsweise das Authentifizieren des Nutzers eine Voraussetzung für das Erfassen des Arbeitszeitbeginns und/oder des Startens der Arbeitszeiterfassung sein.

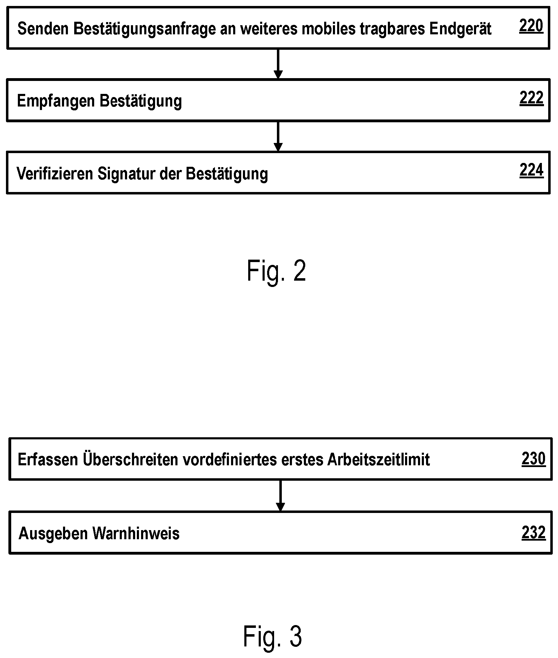

Figur 2 zeigt ein exemplarisches Verfahren zum Bestätigen eines Arbeitszeitbeginns und/oder eines Arbeitszeitendes durch einen weiteren Nutzer eines weiteren mobilen tragbaren Endgeräts. Beispielsweise umfasst ein Indikator eines Arbeitszeitbeginns und/oder ein Indikator eines Arbeitszeitendes eine entsprechende Bestätigung des weiteren Nutzers. Beispielsweise ist eine entsprechende Bestätigung eine notwendige Voraussetzung für ein Beginnen und/oder ein Beenden einer Arbeitszeiterfassung. In Block 220 wird eine Bestätigungsanfrage an das weitere mobile tragbare Endgerät gesendet. In Block 222 wird in Antwort auf das Senden der Bestätigungsanfrage die Bestätigung von dem weiteren mobilen tragbaren Endgerät empfangen. Dabei ist die Bestätigung beispielsweise unter Verwendung eines dem weiteren Nutzer des Weiteren mobilen tragbaren Endgeräts zugeordneten ersten Signaturschlüssels signiert. In Block 222 wird die Signatur der Bestätigung unter Verwendung eines dem weiteren Nutzer des Weiteren mobilen tragbaren Endgeräts zugeordneten ersten Signaturprüfschlüssels verifiziert. Dabei setzt ein Anerkennen der Bestätigung als Indikator eines Arbeitszeitbeginns und/oder eines Arbeitszeitendes ein erfolgreiches Verifizieren der entsprechenden Signatur voraussetzt. Somit kann eine entsprechende Bestätigung beispielsweise eine notwendige Voraussetzung für ein Beginnen und/oder ein Beenden einer Arbeitszeiterfassung sein.

Figur 3 zeigt ein exemplarisches Verfahren zum Anzeigen eines Überschreitens eines vordefinierten ersten Arbeitszeitlimits. In Block 230 wird ein Überschreiten eines vordefinierten ersten Arbeitszeitlimits des authentifizierten Nutzers durch die erfasste Arbeitszeit erfasst. In Block 232 wird auf das Erfassen des Überschreitens des vordefinierten ersten Arbeitszeitlimits hin eine Warnhinweis ausgeheben. Bei dem entsprechenden Warnhinweis handelt es sich beispielsweise um einen visuelle, akustischen und/oder mechanischen Warnhinweis. Beispielsweise kann ein entsprechender visueller Warnhinweis auf einem Display des Endgeräts angezeigt, ein entsprechender akustischer Warnhinweis über einen Lautsprecher des Endgeräts ausgegeben und/oder ein entsprechender mechanischer Warnhinweis durch eine Vibration des Endgeräts ausgegeben werden.

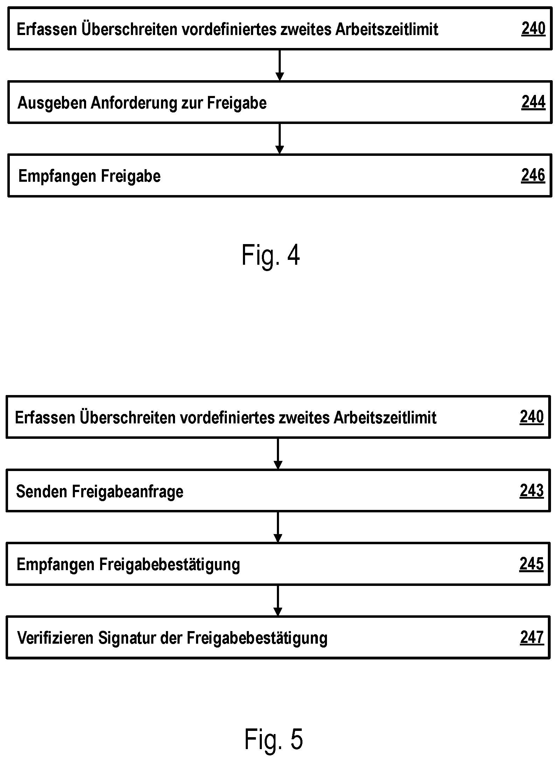

Figur 4 zeigt ein exemplarisches Verfahren zum Freigeben eines Überschreitens eines vordefinierten zweiten Arbeitszeitlimits. In Block 240 wird ein Überschreiten eines vordefinierten zweiten Arbeitszeitlimits des authentifizierten Nutzers durch die erfasste Arbeitszeit erfasst. In Block 244 wird auf das Erfassen des Überschreitens des vordefinierten zweiten Arbeitszeitlimits hin eine Anforderung zur Freigabe der Zeitüberschreitung ausgeben. Beispielsweise kann zusätzlich zu der Anforderung ein visuelles, akustisches und/oder mechanisches Hinweissignal unter Verwendung des Endgeräts ausgegeben werden. Beispielsweise kann ein entsprechendes visuelles Hinweissignal auf einem Display des Endgeräts angezeigt, ein entsprechendes akustisches Hinweissignal über einen Lautsprecher des Endgeräts ausgegeben und/oder ein entsprechendes mechanische Hinweissignal durch eine Vibration des Endgeräts ausgegeben werden. Beispielsweise wird das Hinweissignal kontinuierlich oder intervallweise solange ausgegeben, bis eine Freigabe der Zeitüberschreitung erfolgt ist. In Block 246 wird eine Freigabe der Zeitüberschreitung empfangen.

Figur 5 zeigt ein exemplarisches Verfahren zum Freigeben eines Überschreitens eines vordefinierten zweiten Arbeitszeitlimits. In Block 240 wird ein Überschreiten eines vordefinierten zweiten Arbeitszeitlimits des authentifizierten Nutzers durch die erfasste Arbeitszeit erfasst. In Block 243 wird eine Freigabeanfrage an ein der weiteren Instanz zugeordnetes Computersystem gesendet. Beispielsweise wird auf das Erfassen des Überschreitens des vordefinierten zweiten Arbeitszeitlimits hin zunächst eine Anforderung zur Freigabe der Zeitüberschreitung auf dem Endgerät ausgegeben ausgeben. Beispielsweise wird die entsprechende Anforderung auf einem Display des Endgeräts angezeigt, woraufhin der Nutzer das Senden der Freigabeanfrage veranlassen und/oder dem Senden zustimmen kann. Beispielsweise wird im Falle eines Überschreitens des vordefinierten zweiten Arbeitszeitlimits die Freigabeanfrage automatisch gesendet.

Beispielsweise kann ein visuelles, akustisches und/oder mechanisches Hinweissignal unter Verwendung des Endgeräts ausgegeben werden, welches auf das Überschreiten des vordefinierten zweiten Arbeitszeitlimits hinweist. Beispielsweise kann ein entsprechendes visuelles Hinweissignal auf einem Display des Endgeräts angezeigt, ein entsprechendes akustisches Hinweissignal über einen Lautsprecher des Endgeräts ausgegeben und/oder ein entsprechendes mechanische Hinweissignal durch eine Vibration des Endgeräts ausgegeben werden. Beispielsweise wird das Hinweissignal kontinuierlich oder intervallweise solange ausgegeben, bis eine Freigabe der Zeitüberschreitung erfolgt ist.

In Block 245 wird in Antwort auf das Senden der Freigabeanfrage die Freigabebestätigung von dem der weiteren Instanz zugeordneten Computersystem empfangen. Die Freigabebestätigung ist beispielsweise unter Verwendung eines der weiteren Instanz zugeordneten zweiten Signaturschlüssels signiert. In Block 247 wird die Signatur der Freigabebestätigung unter Verwendung eines der weiteren Instanz zugeordneten zweiten Signaturprüfschlüssels verifiziert. Dabei setzt eine Freigabe ein erfolgreiches Verifizieren der entsprechenden Signatur voraussetzt. Beispielsweise erfolgt auf die erfolgreiche Verifizierung hin die Freigabe des Überschreitens des vordefinierten zweiten Arbeitszeitlimits. Die Kommunikation zwischen dem Endgerät und dem der weiteren Instanz zugeordneten Computersystem im Zuge des Empfangens der Freigabebestätigung durch das Endgerät von dem der weiteren Instanz zugeordneten Computersystem erfolgt beispielsweise über eine verschlüsselte Kommunikationsverbindung. Bei der verschlüsselten Kommunikationsverbindung handelt es sich beispielsweise um eine mittels Ende-zu-Ende verschlüsselte Kommunikation.

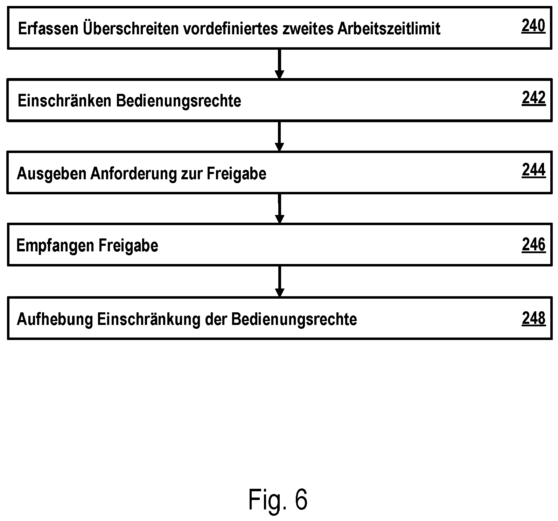

Figur 6 zeigt ein exemplarisches Verfahren zum Einschränken von Bedienungsrechten in Folge eines Überschreitens eines vordefinierten zweiten Arbeitszeitlimits. In Block 240 wird ein Überschreiten eines vordefinierten zweiten Arbeitszeitlimits des authentifizierten Nutzers durch die erfasste Arbeitszeit erfasst. In Block 242 werden auf das Erfassen des Überschreitens des vordefinierten zweiten Arbeitszeitlimits hin Bedienungsrechte des Nutzers des Endgeräts zur Bedienung eines oder mehrere Arbeitsgeräte eingeschränkt. Die entsprechende Einschränkung der Bedienungsrechte gilt bis zum Empfang einer Freigabe, welche die Einschränkung aufhebt. Beispielsweise sendet das Endgerät eine Meldung der Überschreitung des vordefinierten zweiten Arbeitszeitlimits an die ein oder mehreren Arbeitsgeräte. Beispielsweise sendet das Endgerät eine Meldung der Überschreitung des vordefinierten zweiten Arbeitszeitlimits an einen zentralen Server, welcher auf den Empfang der entsprechenden Meldung eine Einschränkung der Bedienungsrechte des Nutzers des Endgeräts zur Bedienung der ein oder mehreren Arbeitsgeräte veranlasst. Beispielsweise sendet der Server einen entsprechenden Befehl zum Einschränken der Bedienungsrechte an die ein oder mehreren Arbeitsgeräte. Die von dem Endgerät gesendete Meldung der Überschreitung des vordefinierten zweiten Arbeitszeitlimits ist beispielsweise von dem Endgerät mit einem Signaturschlüssel signiert, sodass die resultierende Signatur mit einem zugehörigen Signaturprüfschlüssel verifiziert werden kann. Der von dem zentralen Server an die ein oder mehreren Arbeitsgeräte gesendete Befehl zum Einschränken der Bedienungsrechte ist beispielsweise von dem Server mit einem Signaturschlüssel signiert, sodass die resultierende Signatur mit einem zugehörigen Signaturprüfschlüssel verifiziert werden kann.

In Block 244 wird auf das Erfassen des Überschreitens des vordefinierten zweiten Arbeitszeitlimits hin eine Anforderung zur Freigabe der Zeitüberschreitung ausgeben. Beispielsweise kann zusätzlich zu der Anforderung ein visuelles, akustisches und/oder mechanisches Hinweissignal unter Verwendung des Endgeräts ausgegeben werden. Beispielsweise kann ein entsprechendes visuelles Hinweissignal auf einem Display des Endgeräts angezeigt, ein entsprechendes akustisches Hinweissignal über einen Lautsprecher des Endgeräts ausgegeben und/oder ein entsprechendes mechanische Hinweissignal durch eine Vibration des Endgeräts ausgegeben werden. Beispielsweise wird das Hinweissignal kontinuierlich oder intervallweise solange ausgegeben, bis eine Freigabe der Zeitüberschreitung erfolgt ist. In Block 246 wird eine Freigabe der Zeitüberschreitung empfangen. In Block 248 wird auf den Empfang der Freigabe hin die Einschränkung der Bedienungsrechte aufgehoben. Beispielsweise sendet das Endgerät eine Bestätigung der erfolgreichen Freigabe an die ein oder mehreren Arbeitsgeräte. Beispielsweise sendet das Endgerät eine Bestätigung der erfolgreichen Freigabe an einen zentralen Server, welcher auf den Empfang der Bestätigung der erfolgreichen Freigabe eine Aufhebung der Einschränkung der Bedienungsrechte des Nutzers des Endgeräts zur Bedienung der ein oder mehreren Arbeitsgeräte veranlasst. Beispielsweise sendet der Server einen entsprechenden Befehl zum Aufheben der Einschränkung der Bedienungsrechte an die ein oder mehreren Arbeitsgeräte. Beispielsweise werden im Zuge der Freigabe Kopien von Freigabebestätigungen, welche etwa in Form einer Nutzereingabe des Nutzers des Endgeräts oder in Form von Freigabebestätigung von einem einer weiteren Instanz zugeordneten Computersystem bereitgestellt werden, automatisch an den zentralen Server gesendet. Beispielsweise sendet der Server auf einen Empfang aller für eine Freigabe notwendigen Freigabebestätigungen den entsprechenden Befehl zum Aufheben der Einschränkung der Bedienungsrechte an die ein oder mehreren Arbeitsgeräte. Die von dem Endgerät gesendete Bestätigung der erfolgreichen Freigabe ist beispielsweise von dem Endgerät mit einem Signaturschlüssel signiert, sodass die resultierende Signatur mit einem zugehörigen Signaturprüfschlüssel verifiziert werden kann. Der von dem zentralen Server an die ein oder mehreren Arbeitsgeräte gesendete Befehl zum Einschränken der Bedienungsrechte ist beispielsweise von dem Server mit einem Signaturschlüssel signiert, sodass die resultierende Signatur mit einem zugehörigen Signaturprüfschlüssel verifiziert werden kann.

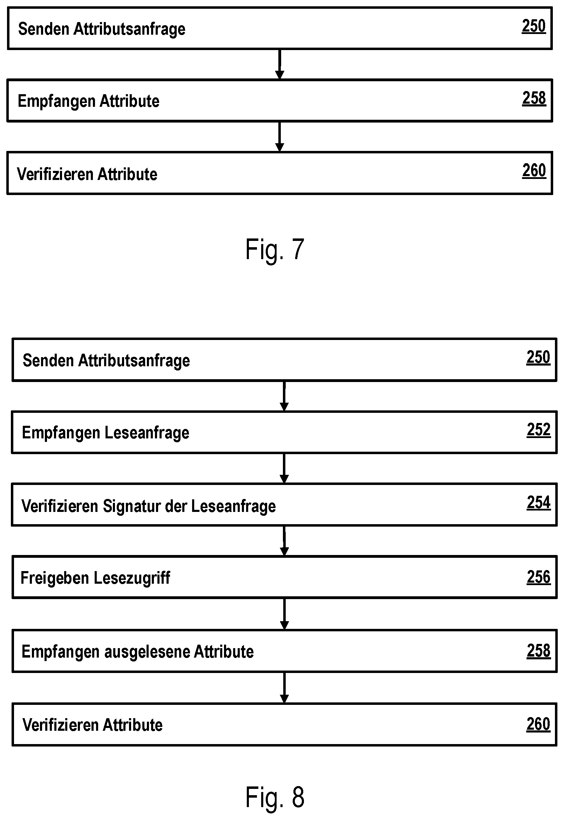

Figur 7 zeigt ein exemplarisches Verfahren zum Authentifizieren des Nutzers des Endgeräts unter Verwendung eines ID-Tokens. Das Authentifizieren unter Verwendung des ID-Tokens wird beispielsweise im Zuge eines Verfahrens zum nutzerindividuellen Erfassen von Arbeitszeit, wie es exemplarisch in Figur 1 gezeigt wird, ausgeführt. Dabei wird die Authentifizierung unter Verwendung des ID-Tokens beispielsweise in Block 204 zusätzlich zu der Authentifizierung unter Verwendung der mit dem biometrischen Sensor des Endgeräts erfassten biometrischen Authentifizierungsdaten des Nutzers ausgeführt. Somit kann eine Multi-Faktor-Authentifizierung, beispielsweise Zwei-Faktor-Authentifizierung, des Nutzers des Endgeräts implementiert werden. Der ID-Token wird beispielsweise als mobiles tragbares elektronisches Gerät unabhängig von dem Endgerät bereitgestellt. Beispielsweise wird der ID-Token in Form einer ID-Applikation bereitgestellt, deren Programminstruktionen in dem Speicher des Endgeräts gespeichert sind. Bei dem mobilen tragbaren elektronischen Gerät, welches den ID-Token bereitstellt, handelt es sich in diesem Fall um das Endgerät.

In Block 250 wird eine Attributanfrage an einen ID-Providerserver gesendet. Bei den angefragten Attributen des Nutzers handelt es sich beispielsweise um Angaben zu einem Namen, einem Geburtsdatum, einem Geburtsort und/oder einer Wohnanschrift des Nutzers. In Block 258 werden in Antwort auf die Attributanfrage ein oder mehrerer aus einem ID-Token des Nutzers ausgelesene Attribute des Nutzers von einem ID-Providerserver unter Verwendung einer Kommunikationsschnittstelle des Endgeräts empfangen. Die empfangenen Attribute des Nutzers sind dabei beispielsweise mit einem dritten Signaturschlüssel des ID-Providerservers signiert. In Block 260 wird die Signatur der empfangenen Attribute unter Verwendung eines dritten Signaturprüfschlüssels des ID-Providerservers verifiziert. Dabei setzt ein erfolgreiches Authentifizieren des Nutzers zusätzlich zu einem erfolgreichen Verifizieren der entsprechenden Signatur ein Übereinstimmen der empfangenen ein oder mehreren Attributen mit ein oder mehreren hinterlegten Referenzattributen des Nutzers voraus. Dementsprechend erfolgt in Block 260 zusätzlich zu der Verifizierung der Signatur ein Vergleich der empfangenen ein oder mehreren Attributen mit den ein oder mehreren hinterlegten Referenzattributen des Nutzers. Im Falle einer Übereinstimmung und/oder einer zumindest ausreichenden Übereinstimmung zwischen empfangenen Attributen und den hinterlegten Referenzattributen sind die empfangenen Attribute erfolgreich verifiziert. Bei dem dritten Signaturschlüssel und dem dritten Signaturprüfschlüssel des ID-Providerservers handelt es sich beispielsweise um einen privaten und einen öffentlichen kryptographischen Schlüssel eines dem ID-Providerserver zugeordneten asymmetrischen Schlüsselpaars. Die Kommunikation zwischen dem Endgerät und dem ID-Providerserver im Zuge des Empfangens der ausgelesenen Attribute durch das Endgerät von dem ID-Providerserver erfolgt beispielsweise über eine verschlüsselte Kommunikationsverbindung. Bei der verschlüsselten Kommunikationsverbindung handelt es sich beispielsweise um eine mittels Ende-zu-Ende verschlüsselte Kommunikation.

Figur 8 zeigt ein exemplarisches Verfahren zum Authentifizieren des Nutzers des Endgeräts unter Verwendung eines ID-Tokens, bei welchem der ID-Token in Form einer ID-Applikation bereitgestellt, deren Programminstruktionen in dem Speicher des Endgeräts gespeichert sind. In diesem Fall handelt es sich also bei dem das ID-Token bereitstellenden mobilen tragbaren elektronischen Gerät somit um das Endgerät. Das Authentifizieren unter Verwendung des ID-Tokens wird beispielsweise im Zuge eines Verfahrens zum nutzerindividuellen Erfassen von Arbeitszeit, wie es exemplarisch in Figur 1 gezeigt wird, ausgeführt. Dabei wird die Authentifizierung unter Verwendung des ID-Tokens beispielsweise in Block 204 zusätzlich zu der Authentifizierung unter Verwendung der mit dem biometrischen Sensor des Endgeräts erfassten biometrischen Authentifizierungsdaten des Nutzers ausgeführt. Somit kann eine Multi-Faktor-Authentifizierung, beispielsweise Zwei-Faktor-Authentifizierung, des Nutzers des Endgeräts implementiert werden. Ein Auslesen der Attribute aus dem ID-Token bzw. dem Endgerät ist beispielsweise nur unter Verwendung eines Sicherheitselements des Endgeräts möglich. Beispielsweise sind die Attribute in verschlüsselter Form auf dem Endgerät gespeichert, wobei ein oder mehrere kryptographische Schlüssel zum Entschlüsseln der Attribute in einem geschützten Speicherbereich des entsprechenden Sicherheitselements gespeichert sind. Somit kann ein Auslesen der Attribute in Klartext nur unter Verwendung des Sicherheitselements erfolgen. Beispielsweise sind die Attribute in einem geschützten Speicherbereich des entsprechenden Sicherheitselements gespeichert, sodass ein Auslesen nur über das entsprechende Sicherheitselement möglich ist.

In Block 250 wird eine Attributanfrage an einen ID-Providerserver gesendet. Bei den angefragten Attributen des Nutzers handelt es sich beispielsweise um Angaben zu einem Namen, einem Geburtsdatum, einem Geburtsort und/oder einer Wohnanschrift des Nutzers. In Block 252 empfängt die ID-Applikation eine Leseanfrage des ID-Providerservers zum Auslesen der angefragten Attribute. Zum Auslesen der Attribute aus dem Endgerät ist beispielsweise ein Berechtigungsnachweis notwendig, dass der ID-Providerserver tatsächlich zum Auslesen der entsprechenden Attribute berechtigt ist. Ein entsprechender Berechtigungsnachweis wird beispielsweise unter Verwendung eines Berechtigungszertifikats erbracht. Beispielsweise besitzt der ID-Providerserver ein Berechtigungszertifikat, mit welchem er seine Berechtigung zum Auslesen der Attribute nachweisen kann. Beispielsweise ordnet das Berechtigungszertifikat dem ID-Providerserver einen öffentlichen kryptographischen Schlüssel eines asymmetrischen Schlüsselpaars zu. Der ID-Providerserver verfügt ferner über einen privaten kryptographischen Schlüssel des asymmetrischen Schlüsselpaars. Beispielsweise ist die von dem ID-Providerserver empfangene Leseanfrage unter Verwendung des privaten kryptographischen Schlüssels des ID-Providerservers signiert.

In Block 254 verifiziert das Endgerät, beispielsweise die ID-Applikation mit dem Sicherheitselement des Endgeräts, die Signatur der Leseanfrage unter Verwendung des öffentlichen kryptographischen Schlüssels, welchen das Berechtigungszertifikats dem ID-Providerserver zuordnet. Beispielsweise empfängt das Endgerät das Berechtigungszertifikat von dem ID-Providerserver und verwendet das empfangene Berechtigungszertifikat zum Verifizieren der Signatur des ID-Providerservers. In Block 256 gibt die ID-Applikation bzw. das von der ID-Applikation verwendete Sicherheitselement auf ein erfolgreiches Verifizieren der Signatur der Leseanfrage hin einen Lesezugriff des ID-Providerservers auf die Attribute frei. Falls die Attribute in verschlüsselter Form auf dem Endgerät gespeichert sind, werden diese beispielsweise von dem Sicherheitselement des Endgeräts entschlüsselt, um dem ID-Providerserver ein Auslesen der entsprechenden Attribute zu ermöglichen. Die Kommunikation zwischen dem Endgerät und dem ID-Providerserver im Zuge des Auslesens der Attribute aus dem Endgerät durch den ID-Providerserver erfolgt beispielsweise über eine verschlüsselte Kommunikationsverbindung. Bei der verschlüsselten Kommunikationsverbindung handelt es sich beispielsweise um eine mittels Ende-zu-Ende verschlüsselte Kommunikation.

In Block 258 werden in Antwort auf die Attributanfrage ein oder mehrerer aus einem ID-Token des Nutzers ausgelesene Attribute des Nutzers von einem ID-Providerserver unter Verwendung einer Kommunikationsschnittstelle des Endgeräts empfangen. Die empfangenen Attribute des Nutzers sind dabei beispielsweise mit einem dritten Signaturschlüssel des ID-Providerservers signiert. In Block 260 wird die Signatur der empfangenen Attribute unter Verwendung eines dritten Signaturprüfschlüssels des ID-Providerservers verifiziert. Dabei setzt ein erfolgreiches Authentifizieren des Nutzers zusätzlich zu einem erfolgreichen Verifizieren der entsprechenden Signatur ein Übereinstimmen der empfangenen ein oder mehreren Attributen mit ein oder mehreren hinterlegten Referenzattributen des Nutzers voraus. Dementsprechend erfolgt in Block 260 zusätzlich zu der Verifizierung der Signatur ein Vergleich der empfangenen ein oder mehreren Attributen mit den ein oder mehreren hinterlegten Referenzattributen des Nutzers. Im Falle einer Übereinstimmung und/oder einer zumindest ausreichenden Übereinstimmung zwischen empfangenen Attributen und den hinterlegten Referenzattributen sind die empfangenen Attribute erfolgreich verifiziert. Bei dem dritten Signaturschlüssel und dem dritten Signaturprüfschlüssel des ID-Providerservers handelt es sich beispielsweise um einen privaten und einen öffentlichen kryptographischen Schlüssel eines dem ID-Providerserver zugeordneten asymmetrischen Schlüsselpaars. Die Kommunikation zwischen dem Endgerät und dem ID-Providerserver im Zuge des Empfangens der ausgelesenen Attribute durch das Endgerät von dem ID-Providerserver erfolgt beispielsweise über eine verschlüsselte Kommunikationsverbindung. Bei der verschlüsselten Kommunikationsverbindung handelt es sich beispielsweise um eine mittels Ende-zu-Ende verschlüsselte Kommunikation.

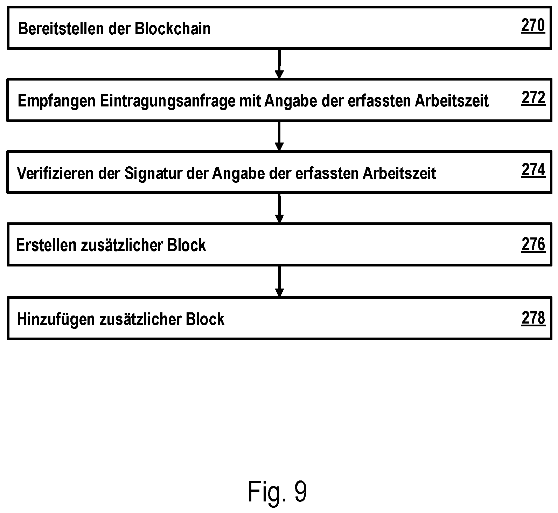

Figur 9 zeigt ein exemplarisches Verfahren zum Speichern einer Angabe einer erfassten Arbeitszeit in einer Blockchain. In diesem Fall wird die Angabe der für eine authentifizierten Nutzer erfassten Arbeitszeit zur Speicherung an einen Server gesendet, bei welchem es sich um einen Blockchain-Server handelt. Die Speicherung der Angabe der erfassten Arbeitszeit durch den Blockchain-Server in einer von dem Blockchain-Server zumindest mitverwalteten Blockchain erfolgt. In Block 270 wird die Blockchain bzw. einer Kopie der Blockchain von dem Blockchain-Server bereitgestellt. In Block 272 empfängt der Blockchain-Server von dem Endgerät eine Eintragungsanfrage zur Eintragung der Angabe der erfassten Arbeitszeit in die Blockchain. Dabei ist die Angabe der erfassten Arbeitszeit von dem Endgerät beispielsweise mit einem dem Nutzer des Endgeräts zugeordneten vierten Signaturschlüssel signiert. In Block 274 verifiziert der Blockchain-Server die Signatur der Angabe der erfassten Arbeitszeit unter Verwendung des dem Nutzer des Endgeräts zugeordneten vierten Signaturprüfschlüssels. Bei dem vierten Signaturschlüssel des Endgeräts handelt es sich beispielsweise um einen privaten kryptographischen Schlüssel eines dem Endgerät zugeordneten asymmetrischen Schlüsselpaars. Zum Prüfen von Signaturen, welche unter Verwendung des vierten Signaturschlüssel des Endgeräts erstellt wurden, wird von dem Endgerät der vierte Signaturprüfschlüssel bereitgestellt, bei welchem es sich beispielsweise um einen öffentlichen kryptographischen Schlüssel des dem Endgerät zugeordneten asymmetrischen Schlüsselpaars handelt. In Block 276 wird von dem Blockchain-Server ein zusätzlicher Block für die Blockchain erstellt, in welchen die empfangene Angabe der erfassten Arbeitszeit eingetragen wird. In Block 278 wird der zusätzliche Block mit der Angabe der erfassten Arbeitszeit von dem Blockchain-Server zu der Blockchain hinzugefügt. Die Kommunikation zwischen dem Endgerät und dem Blockchain-Server im Zuge des Sendens der Angabe der erfassten Arbeitszeit von dem Endgerät an den Blockchain-Server erfolgt beispielsweise über eine verschlüsselte Kommunikationsverbindung. Bei der verschlüsselten Kommunikationsverbindung handelt es sich beispielsweise um eine mittels Ende-zu-Ende verschlüsselte Kommunikation.

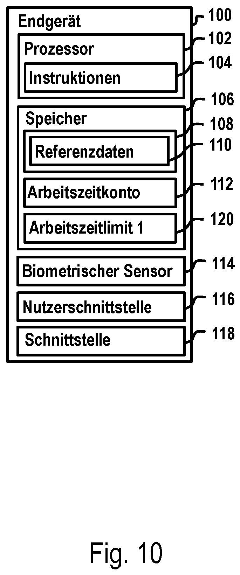

Figur 10 zeigt ein exemplarisches mobiles tragbares Endgerät 100 zur Arbeitszeiterfassung. Das Endgerät 100 umfasst einen Prozessor 102 und einen Speicher 106 mit Programminstruktionen 104 einer Arbeitszeiterfassungsapplikation. Ferner umfasst das Endgerät 100 sowie einen biometrischen Sensor 114 zur Erfassung von biometrischen Authentifizierungsdaten zum Authentifizieren eines Nutzers des Endgeräts 100. Das Endgerät 100 ist dazu konfiguriert bei einem Ausführen der Arbeitszeiterfassungsapplikation ein Verfahren zur Arbeitszeiterfassung auszuführen. In Zuge dieses Verfahrens erfasst das Endgerät 100 beispielsweise einen Indikator eines Arbeitszeitbeginns. Dieser Indikator des Arbeitszeitbeginns kann beispielsweise eine Nutzereingabe umfassen, welche das Endgerät 100 unter Verwendung einer Nutzerschnittstelle 116 empfängt. Beispielsweise kann der Indikator des Arbeitszeitbeginns auch eine Interaktion bzw. eine Kommunikation des Endgeräts 100 mit einem weiteren Gerät unter Verwendung der Kommunikationsschnittstelle 118 umfassen. Aus der entsprechenden Interaktion kann das Endgerät 100 beispielsweise einen Ort identifizieren, an welchem es sich befindet und welcher einer Arbeit oder einem Arbeitsbeginn zugeordnet ist. Beispielsweise kann das Endgerät 100 unter Verwendung der Kommunikationsschnittstelle 118 mit einem Arbeitsgerät interagieren bzw. kommunizieren.

Auf das Erfassen des Indikators des Arbeitszeitbeginns hin, beginnt das Endgerät 100 beispielsweise eine Arbeitszeiterfassung. Ferner authentifiziert das Endgerät 100 den Nutzer des Endgeräts 100, für welchen die Arbeitszeiterfassung erfolgt bzw. erfolgen soll. Das Authentifizieren des Nutzers umfasst ein Authentifizieren unter Verwendung von biometrischen Authentifizierungsdaten des Nutzers, welche mittels des biometrischen Sensors 114 erfasst werden. Ein erfolgreiches Authentifizieren des Nutzers setzt dabei ein Übereinstimmen bzw. ein ausreichendes Übereinstimmen der erfassten biometrischen Authentifizierungsdaten mit hinterlegten biometrischen Referenzdaten 110 des Nutzers voraussetzt. Die biometrischen Referenzdaten 110 des Nutzers sind beispielsweise in einem geschützten Speicherbereich des Speichers 106 des Endgeräts 100 hinterlegt. Die Arbeitszeiterfassung wird zu einem unter Verwendung der Arbeitszeiterfassungsapplikation verwalteten Arbeitszeitkonto 112 des authentifizierten Nutzers zugeordnet. Das entsprechende Arbeitszeitkonto 112 bzw. eine Kopie des entsprechenden Arbeitszeitkonto 112 ist beispielsweise in dem Speicher 106 des Endgeräts 100 gespeichert.

In Zuge dieses Verfahrens erfasst das Endgerät 100 beispielsweise ferner einen Indikator eines Arbeitszeitendes. Dieser Indikator des Arbeitszeitendes kann beispielsweise eine Nutzereingabe umfassen, welche das Endgerät 100 über die Nutzerschnittstelle 116 empfängt. Beispielsweise kann der Indikator des Arbeitszeitendes auch eine Interaktion bzw. eine Kommunikation des Endgeräts 100 mit einem weiteren Gerät unter Verwendung der Kommunikationsschnittstelle 118 umfassen. Aus der entsprechenden Interaktion kann das Endgerät 100 beispielsweise einen Ort identifizieren, an welchem es sich befindet und welcher der Arbeit oder einem Arbeitsende zugeordnet ist. Beispielsweise kann das Endgerät 100 unter Verwendung der Kommunikationsschnittstelle 118 mit einem Arbeitsgerät interagieren bzw. kommunizieren.

Auf das Erfassen des Indikators des Arbeitszeitendes hin, beendet das Endgerät 100 beispielsweise die Arbeitszeiterfassung. Die für den authentifizierten Nutzer erfasste Arbeitszeit wird in dem Arbeitszeitkonto 112 des authentifizierten Nutzers gespeichert. Zusätzlich kann die Speicherung beispielsweise auch ein Speichern der erfassten Arbeitszeit in einer von einem Server verwalteten Kopie des Arbeitszeitkontos 112 umfassen. Beispielsweise sendet das Endgerät 100 zu diesem Zweck unter Verwendung der Kommunikationsschnittstelle 118 eine Angabe der erfassten Arbeitszeit an den entsprechenden Server.

Falls das Endgerät 100 im Zuge der Arbeitszeiterfassung beispielsweise ein Überschreiten eines vordefinierten ersten Arbeitszeitlimits 120 des authentifizierten Nutzers durch die erfasste Arbeitszeit erfasst, gibt das Endgerät 100 beispielsweise ein Warnhinweises aus. Die Ausgabe des Warnhinweises erfolgt beispielsweise unter Verwendung der Nutzerschnittstelle 116. Bei dem entsprechenden Warnhinweis handelt es sich beispielsweise um einen visuelle, akustischen und/oder mechanischen Warnhinweis. Beispielsweise kann ein entsprechender visueller Warnhinweis auf einem von der Nutzerschnittstelle 116 umfassten Display des Endgeräts 100 angezeigt, ein entsprechender akustischer Warnhinweis über einen von der Nutzerschnittstelle 116 umfassten Lautsprecher des Endgeräts 100 ausgegeben und/oder ein entsprechender mechanischer Warnhinweis durch eine Vibration des Endgeräts 100 ausgegeben werden.

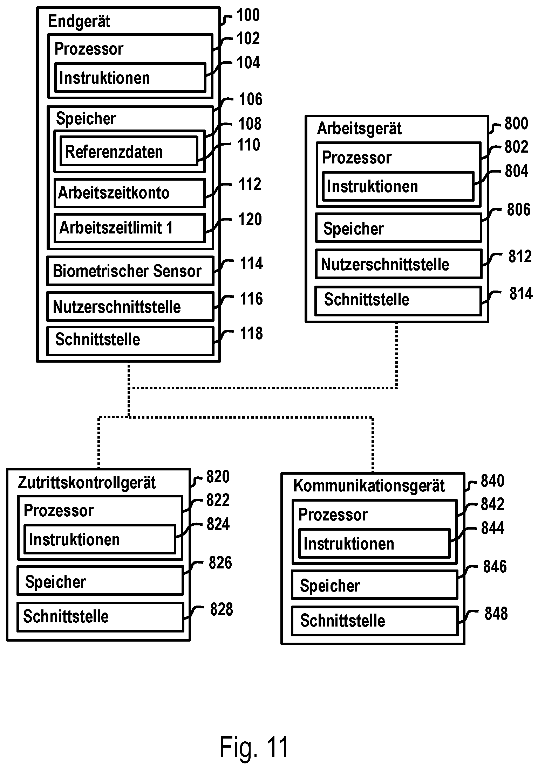

Figur 11 zeigt ein exemplarisches System zur Erfassung eines Arbeitsbeginns und/oder eines Arbeitszeitendes eines Endgeräts 100. Das Endgerät 100 entspricht beispielsweise dem in Figur 10 gezeigten exemplarischen Endgerät. Dieses Endgerät 100 kann unter Verwendung der Kommunikationsschnittstelle 118 mit ein oder mehreren weiteren Geräte interagieren bzw. kommunizieren. Eine entsprechende Interaktion bzw. Kommunikation des Endgeräts 100 mit einem oder mehreren dieser Geräte kann beispielsweise einen Indikator eines Arbeitsbeginns und/oder eines Arbeitszeitendes bereitstellen. Beispielsweise kann sich aus der Interaktion bzw. Kommunikation ein Ort ableiten lassen, an welchem sich das Endgerät 100 befindet und welcher einem Beginn und/oder einem Ende einer Arbeit zugeordnet ist.

Beispielsweise kann es sich bei einem weiteren Gerät um eines von ein oder mehrere Zutrittskontrollgeräte 820 handeln, welche konfiguriert sind zur Kontrolle eines Zutritts zu einem Arbeitsbereich. Aus einer Interaktion des Endgeräts 100 mit einem Zutrittskontrollgeräte 820 kann mithin auf ein Betreten oder Verlassen des entsprechenden Arbeitsbereichs geschlossen werden. Ein Betreten des Arbeitsbereichs kann dabei einen Indikator eines Arbeitszeitbeginns darstellen. Ein Verlassen des Arbeitsbereichs kann dabei einen Indikator eines Arbeitszeitendes darstellen. Beispielsweise können für ein Betreten des Arbeitsbereichs etwa an einem Eingang zu dem entsprechenden Arbeitsbereich und für das Verlassen des Arbeitsbereichs etwa an einem Ausgang aus dem entsprechenden Arbeitsbereich jeweils ein eigenständiges Zutrittskontrollgerät 820 vorgesehen sein. Beispielsweise kann ein Betreten und Verlassen des Arbeitsbereichs über ein und denselben Zugang erfolgen, welche von ein und demselben Zutrittskontrollgerät 820 kontrolliert wird. Das Zutrittskontrollgerät 820 umfasst beispielsweise einen Prozessor 822 und einen Speicher 826 mit Programminstruktionen 824. Ein Ausführen der Programminstruktionen 824 durch den Prozessor 822 veranlasst den Prozessor 822 dazu, das Zutrittskontrollgerät 820 zum Ausführen eines Verfahrens zur Zutrittskontrolle zu steuern. Im Zuge des entsprechenden Verfahrens zur Zutrittskontrolle erfolgt beispielsweise unter Verwendung einer Kommunikationsschnittstelle 828 eine Interaktion bzw. Kommunikation mit Endgeräten, wie dem Endgerät 100, die sich in einem Erfassungsbereich des Zutrittskontrollgerät 820 befinden. Beispielsweise erfolgt die Interaktion bzw. Kommunikation unter Verwendung von NFC.

Beispielsweise kann es sich bei einem weiteren Gerät um eines von ein oder mehrere Kommunikationsgeräte 840 handeln, welche konfiguriert sind zur Implementierung eines Kommunikationssystems innerhalb eines Arbeitsbereichs, etwa unter Verwendung von WLAN, UWB oder Bluetooth. Aus einer Interaktion des Endgeräts 100 mit einem Kommunikationsgeräte 840, d.h. aus einem Empfang eines entsprechenden Signals, beispielsweise eines WLAN-Signals, UWB-Signals oder Bluetooth-Signals, von einem entsprechenden Kommunikationsgerät 840 kann mithin auf ein Betreten des entsprechenden Arbeitsbereichs geschlossen werden. Ein Betreten des Arbeitsbereichs kann dabei einen Indikator eines Arbeitszeitbeginns darstellen. Kann kein entsprechendes Signal mehr empfangen werden, lässt sich daraus auf ein Verlassen des entsprechenden Arbeitsbereichs schließen. Ein Verlassen des Arbeitsbereichs kann dabei einen Indikator eines Arbeitszeitendes darstellen. Das Kommunikationsgerät 840 umfasst beispielsweise einen Prozessor 842 und einen Speicher 846 mit Programminstruktionen 844. Ein Ausführen der Programminstruktionen 844 durch den Prozessor 842 veranlasst den Prozessor 842 dazu, das Kommunikationsgerät 840 zum Ausführen eines Verfahrens zur Kommunikation mit Endgeräten, wie dem Endgerät 100, zu steuern, welche sich innerhalb einer Signalreichweite eines von dem Kommunikationsgerät 840 unter Verwendung einer Kommunikationsschnittstelle 848 gesandten Signals befinden. Bei dem gesendeten Signal handelt es sich beispielsweise um ein WLAN-Signal, UWB-Signal und/oder Bluetooth-Signal.

Beispielsweise kann es sich bei einem weiteren Gerät um eines von ein oder mehrere Arbeitsgeräte 800 handeln, welche der Nutzer des Endgeräts im Zuge seiner Arbeit verwendet. Aus einer Interaktion des Endgeräts 100 mit dem Arbeitsgerät 800 kann mithin auf einen Beginn der Arbeit bzw. der Arbeitszeit und/oder ein Ende der Arbeit bzw. der Arbeitszeit geschlossen werden. Beispielsweise sendet das Arbeitsgerät 800 auf einen Beginn einer Verwendung durch den Nutzer des Endgeräts 100 eine Nutzungsbeginnsanzeige an das Endgerät 100. Beispielsweise erfordert eine Verwendung des Arbeitsgeräts 800 durch den Nutzer ein Anmelden des Nutzers an dem Arbeitsgerät 800, welche beispielsweis unter Verwendung des Endgeräts 100 erfolgt. Beispielsweise sendet das Arbeitsgerät 800 auf ein Beenden einer Verwendung durch den Nutzer des Endgeräts 100 eine Nutzungsendsanzeige an das Endgerät 100. Beispielsweise ist ein Abmelden des Nutzers von dem Arbeitsgerät 800 erforderlich, welche beispielsweis unter Verwendung des Endgeräts 100 erfolgt. Das Arbeitsgerät 800 umfasst beispielsweise einen Prozessor 802 und einen Speicher 806 mit Programminstruktionen 804. Ein Ausführen der Programminstruktionen 804 durch den Prozessor 802 veranlasst den Prozessor 802 dazu, das Arbeitsgerät 800 zum Ausführen eines Verfahrens zu steuern, welches eine Kommunikation mit dem Endgerät 100 umfasst. Das Verfahren umfasst beispielsweise ein Einschalten und/oder Ausschalten des Arbeitsgeräts 800. Das Verfahren umfasst beispielsweise ein Anmelden und/oder Abmelden des Nutzers des Endgeräts 100 an dem Arbeitsgerät 800 bzw. von dem Arbeitsgerät 800. Die entsprechende Kommunikation mit dem Endgerät 100 erfolgt unter Verwendung einer Kommunikationsschnittstelle 814 des Arbeitsgeräts 800. Ferner umfasst das Arbeitsgerät 800 eine Nutzerschnittstelle 812, welche es dem Nutzer beispielsweise ermöglicht das Arbeitsgerät 800 einzuschalten und/oder auszuschalten. Beispielsweise ermöglicht es die Nutzerschnittstelle 812 dem Nutzer sich bei dem Arbeitsgerät 800 anzumelden und/oder abzumelden.

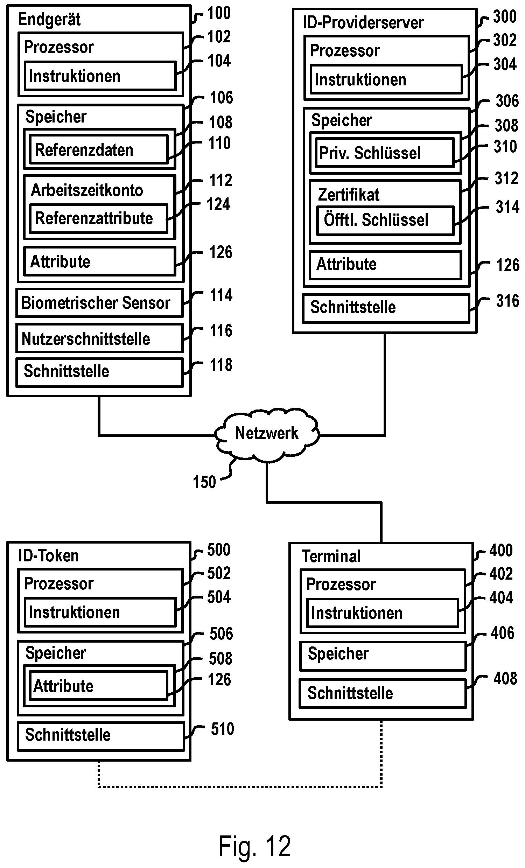

Figur 12 zeigt ein exemplarisches System zum Auslesen von Attributen 126 aus eine ID-Token 500. Im Falle der Figur 12 werden die Attribute 126 unter Verwendung eines eine geständigen ID-Tokens 500 dem Endgerät 100 bereitgestellt. Das Endgerät 100 entspricht beispielsweise dem in Figur 10 gezeigten exemplarischen Endgerät. Beispielsweise werden im Zuge einer Authentifizierung des Nutzers des Endgeräts 100 zusätzlich entsprechende aus dem ID-Token ausgelesene Attribute verwendet. Bei den entsprechenden Attributen des Nutzers handelt es sich beispielsweise um Angaben zu einem Namen, einem Geburtsdatum, einem Geburtsort und/oder einer Wohnanschrift des Nutzers. Das Endgerät 100 kann beispielsweise unter Verwendung der Kommunikationsschnittstelle 118 eine Attributanfrage über das Netzwerk 160 an den ID-Providerserver 300 senden. In Antwort auf die Attributanfrage empfängt das Endgerät 100 aus dem einem ID-Token 500 ausgelesene Attribute 126 des Nutzers von dem ID-Providerserver 300 unter Verwendung einer Kommunikationsschnittstelle 118. Die empfangenen Attribute 126 des Nutzers sind von dem ID-Providerserver 300 beispielsweise mit einem Signaturschlüssel 310 des ID-Providerservers 300 signiert. Das Endgerät 100 verifiziert die Signatur der empfangenen Attribute 126 unter Verwendung eines Signaturprüfschlüssels 314 des ID-Providerservers 300. Bei dem Signaturschlüssel 310 und dem Signaturprüfschlüssel 314 des ID-Providerservers 100 handelt es sich beispielsweise um einen privaten und einen öffentlichen kryptographischen Schlüssel eines dem ID-Providerserver 100 zugeordneten asymmetrischen Schlüsselpaars. Ein erfolgreiches Authentifizieren des Nutzers setzt zusätzlich zu einem erfolgreichen Verifizieren der entsprechenden Signatur ein Übereinstimmen bzw. ein ausreichendes Übereinstimmen der empfangenen ein oder mehreren Attributen 126 mit ein oder mehreren hinterlegten Referenzattributen 124 des Nutzers voraus. Beispielsweise definiert das Arbeitszeitkonto 124 unter Verwendung der entsprechenden Referenzattribute, welchem Nutzer es zugeordnet ist.

Der ID-Providerserver 300 umfasst beispielsweise einen Prozessor 302 und einen Speicher 306 mit Programminstruktionen 304. Ein Ausführen der Programminstruktionen 304 durch den Prozessor 302 veranlasst den Prozessor 302 dazu, den ID-Providerserver 300 zum Ausführen eines Verfahrens zum Auslesen von Attributen 126 aus einem ID-Token 500 zu steuern. Das Verfahren wird beispielsweise auf eine Attributanfrage von dem Endgerät 100 hin ausgeführt, welche der ID-Providerserver 300 beispielsweise unter Verwendung der Kommunikationsschnittstelle 316 über das Netzwerk 150 empfängt. Der ID-Providerserver 300 verfügt über den privaten kryptographischen Schlüssel 310, welcher beispielsweise in einem geschützten Speicherbereich 308 des Speichers 306 gespeichert ist, als Signaturschlüssel sowie den zugehörigen, beispielsweise von einem Berechtigungszertifikat 312 bereitgestellten, öffentlichen kryptographischen Schlüssel 314 als Signaturprüfschlüssel. Mit dem Signaturschlüssel 310 signiert der ID-Providerserver 300 beispielsweise eine Leseanfrage zum Auslesen der Attribute 126 an den ID-Token 500. Der ID-Token 500 kann die Signatur unter Verwendung des von dem Berechtigungszertifikat 312 bereitgestellten Signaturprüfschlüssel 314 verifizieren und somit eine Berechtigung des ID-Providerserver 300 zum Auslesen der entsprechenden Attribute prüfen. Zum Signieren der ausgelesenen Attribute 126 im Zuge des Weiterleitens an das Endgerät 100 verwendet der ID-Providerserver 300 beispielsweise den privaten kryptographischen Schlüssel 310 als Signaturschlüssel. Die resultierende Signatur kann dann von dem Endgerät 100 unter Verwendung des öffentlichen kryptographischen Schlüssels 314 als Signaturprüfschlüssel verifiziert werden. Alternativer Weise kann der ID-Providerserver 300 zum Weiterleiten der ausgelesenen Attribute 126 auch zusätzlich zu dem asymmetrischen Schlüsselpaar 310, 314 über ein zusätzliches asymmetrisches Schlüsselpaar mit einem zusätzlich Signaturschlüssel und einem zusätzlichen Signaturprüfschlüssel verfügen.

Der ID-Providerserver 300 sendet die Leseanfrage über das Netzwerk 150 beispielsweise direkt (nicht gezeigt) an den ID-Token 500 oder über ein Terminal 400, welches mit dem ID-Token 500 eine Kommunikationsverbindung zum Auslesen der Attribute aufbaut. Der ID-Token 500 umfasst beispielsweise einen Prozessor 502 und einen Speicher 506 mit Programminstruktionen 504. Ein Ausführen der Programminstruktionen 504 durch den Prozessor 502 veranlasst den Prozessor 502 dazu, den ID-Token 500 zum Ausführen eines Verfahrens zum Bereitstellen der Attribute 126 zu steuern. Die Attribute 126 sind beispielsweise in einem geschützten Speicherbereich 508 des Speichers 506 gespeichert. Der ID-Token 500 empfängt unter Verwendung der Kommunikationsschnittstelle 510 beispielsweise eine signierte Leseanfrage des ID-Providerservers 300. Diese Leseanfrage kann der ID-Token 500 unter Verwendung des von dem Berechtigungszertifikat 312 des ID-Providerservers 300 bereitgestellten Signaturprüfschlüssels 316 verifizieren. Beispielsweise überträgt der ID-Providerservers 300 das Berechtigungszertifikat 312 zu diesem Zweck an den ID-Token 500. Auf eine erfolgreiche Verifizierung der Signatur der Leseanfrage, d.h. auf einen erfolgreichen Nachweis einer Leseberechtigung des ID-Providerserver 300, gewährt der ID-Token 500 dem ID-Providerserver 300 einen Lesezugriff auf die angefragten Attribute 126.

Beispielsweise erfolgt der Lesezugriff auf den ID-Token 500 über das Terminal 400. Das Terminal 400 umfasst beispielsweise einen Prozessor 402 und einen Speicher 406 mit Programminstruktionen 404. Ein Ausführen der Programminstruktionen 404 durch den Prozessor 402 veranlasst den Prozessor 402 dazu, das Terminal 400 zum Ausführen eines Verfahrens zum Herstellen einer Kommunikationsverbindung zwischen dem ID-Token 500 und dem ID-Providerserver 300 zu steuern. Das Terminal 400 stellt beispielsweise eine Kommunikationsverbindung mit dem ID-Token 500 unter Verwendung der Kommunikationsschnittstelle 408 her. Beispielsweise stellt das Terminal zudem eine Kommunikationsverbindung mit dem ID-Providerserver 300 unter Verwendung der Kommunikationsschnittstelle 408 her. Die Kommunikation zwischen dem ID-Providerserver 300 und dem ID-Token über das Terminal 500 im Zuge des Auslesens der Attribute 126 erfolgt beispielsweise unter Verwendung einer Ende-zu-Ende-Verschlüsselung.

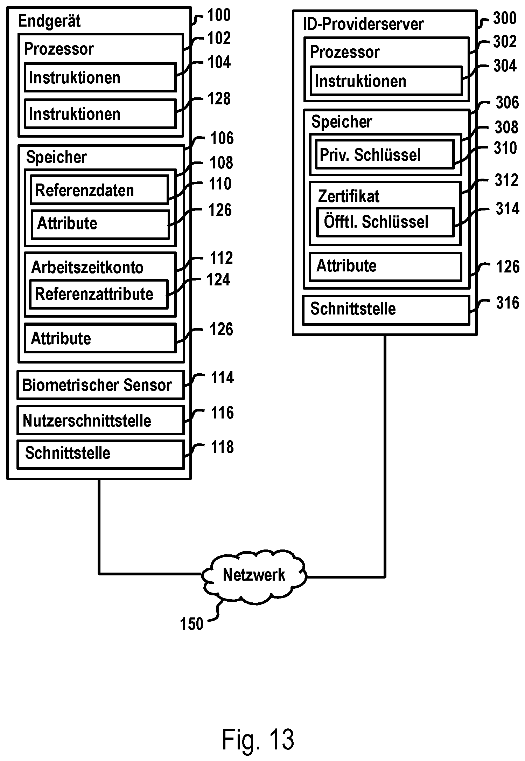

Figur 13 zeigt ein exemplarisches System zum Auslesen von Attributen 126 aus einem von einem Endgerät 100 bereitgestellten ID-Token. Das Endgerät 100 entspricht beispielsweise dem in Figur 10 gezeigten exemplarischen Endgerät. Das ID-Token wird beispielsweise in Form einer auf dem Endgerät 100 installierten ID-Applikation bzw. von Programminstruktionen 128 der entsprechenden ID-Applikation bereitgestellt. Beispielsweise sind in dem geschützten Speicherbereich 108 des Endgeräts 100 die Attribute des Nutzers zum zusätzlichen Authentifizieren des Nutzers gespeichert. Ein Auslesen der Attribute 126 ist beispielsweise nur mit einem entsprechenden Berechtigungsnachweis möglich. Beispielsweise verfügt der ID-Providerserver 300 über einen entsprechenden Berechtigungsnachweis in Form des Berechtigungszertifikats 312. Der ID-Providerserver 300 gemäß Figur 13 entspricht beispielsweise dem ID-Providerserver 300 der Figur 12.

Der ID-Providerserver 300 sendet die Leseanfrage zum Auslesen der von dem Endgerät 100 angefragten Attribute 126 über das Netzwerk 150 an das Endgerät 100 bzw. die auf dem Endgerät implementierte ID-Applikation. Das Endgerät 100 bzw. die ID-Applikation empfängt unter Verwendung der Kommunikationsschnittstelle 118 beispielsweise eine signierte Leseanfrage des ID-Providerservers 300. Diese Leseanfrage kann das Endgerät 100 bzw. die ID-Applikation unter Verwendung des von dem Berechtigungszertifikat 312 des ID-Providerservers 300 bereitgestellten Signaturprüfschlüssels 316 verifizieren. Beispielsweise überträgt der ID-Providerservers 300 das Berechtigungszertifikat 312 zu diesem Zweck an das Endgerät 100. Auf eine erfolgreiche Verifizierung der Signatur der Leseanfrage, d.h. auf einen erfolgreichen Nachweis einer Leseberechtigung des ID-Providerserver 300, gewährt das Endgerät 100 bzw. die ID-Applikation dem ID-Providerserver 300 einen Lesezugriff auf die angefragten Attribute 126. Die so ausgelesenen Attribute 126 leitet der ID-Providerserver 300 dann beispielsweise an die auf dem Endgerät 100 implementierte Arbeitszeiterfassungsapplikation zum Authentifizieren des Nutzers des Endgeräts bzw. des Nutzers, dem das Arbeitszeitkonto 112 zugeordnet ist, weiter.

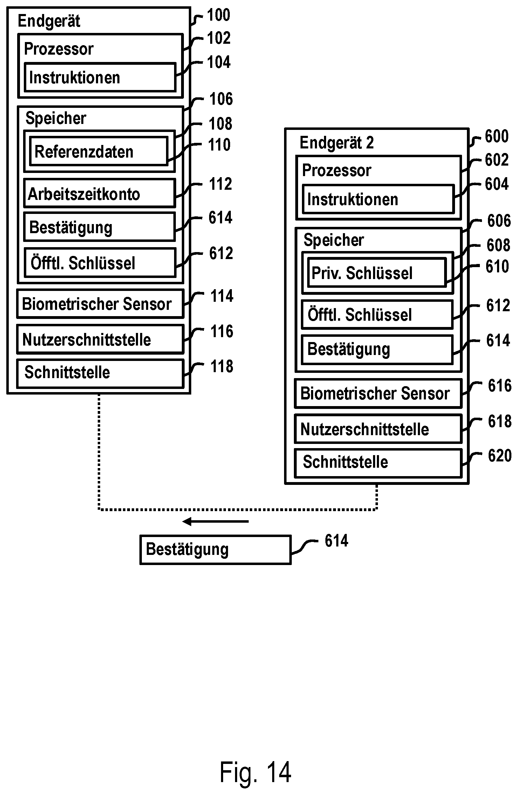

Figur 14 zeigt ein exemplarisches System zum Bestätigen eines Arbeitszeitbeginns und/oder eines Arbeitszeitendes durch ein weiteres mobiles tragbares Endgerät 600. Das Endgerät 100 entspricht beispielsweise dem in Figur 10 gezeigten exemplarischen Endgerät. Der Indikator eines Arbeitszeitbeginns und/oder der Indikator eines Arbeitszeitendes umfasst beispielsweise eine Bestätigung 614 des Arbeitszeitbeginns und/oder des Arbeitszeitendes durch einen weiteren Nutzer eines weiteren mobilen tragbaren Endgeräts 600. Das weitere Endgerät 600 umfasst beispielsweise einen Prozessor 602 und einen Speicher 606 mit Programminstruktionen 604. Ein Ausführen der Programminstruktionen 604 durch den Prozessor 602 veranlasst den Prozessor 602 dazu, das weitere Endgerät 600 zum Ausführen eines Verfahrens zum Bestätigen eines Arbeitszeitbeginns und/oder eines Arbeitszeitendes auszuführen. Das weitere Endgerät 600 umfasst beispielsweise eine Nutzerschnittstelle 618, über welche der weitere Nutzer die Bestätigung 614 veranlassen kann. Ferner umfasst das weitere Endgerät 600 beispielsweise eine Kommunikationsschnittstelle 620 zur Kommunikation mit dem Endgerät 100 über dessen Kommunikationsschnittstelle 118. Bei der Kommunikation handelt es sich beispielsweise um eine kabellose bzw. kontaktlose Kommunikation, etwa unter Verwendung von Bluetooth oder NFC.

Beispielsweise sendet das Endgerät 100 eine Bestätigungsanfrage an das weitere mobile tragbare Endgerät 600. In Antwort auf die das Senden der Bestätigungsanfrage erstellt das weitere Endgerät 600 eine Bestätigung 614 eines Arbeitszeitbeginns und/oder eines Arbeitszeitendes. Die Bestätigung 614 wird von dem weiteren Endgerät 600 beispielsweise unter Verwendung eines dem weiteren Nutzer des Weiteren mobilen tragbaren Endgeräts 600 zugeordneten Signaturschlüssels 610 signiert. Der entsprechende Signaturschlüssels 610 ist beispielsweise in einem geschützten Speicherbereich des Speichers 606 des weiteren Endgeräts 600 gespeichert. Das Endgerät 100 bzw. die Arbeitszeiterfassungsapplikation empfängt die Bestätigung 614 von dem weiteren mobilen tragbaren Endgerät 600 und verifiziert die Signatur der Bestätigung 614 unter Verwendung eines dem weiteren Nutzer des Weiteren mobilen tragbaren Endgeräts 600 zugeordneten Signaturprüfschlüssels 612. Hierzu verfügt das Endgerät 100 beispielsweise über den Signaturprüfschlüssels 612. Beispielsweise empfängt das Endgerät 100 den Signaturprüfschlüssels 612 von dem weiteren Endgerät 600. Ein Anerkennen der Bestätigung 614 als Indikator eines Arbeitszeitbeginns und/oder eines Arbeitszeitendes setzt beispielsweise ein erfolgreiches Verifizieren der entsprechenden Signatur voraus. Bei dem Signaturschlüssel 610 und dem Signaturprüfschlüssel 612 des weiteren Endgeräts 600 handelt es sich beispielsweise um einen privaten und einen öffentlichen kryptographischen Schlüssel eines dem weiteren Endgerät 600 zugeordneten asymmetrischen Schlüsselpaars.

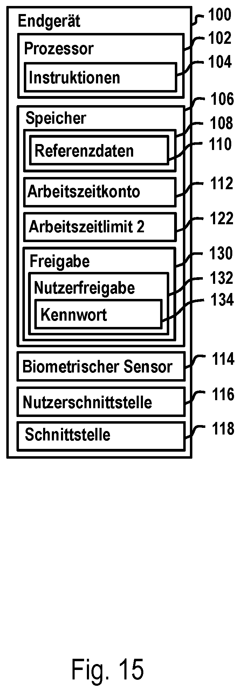

Figur 15 zeigt ein exemplarisches Endgerät 100 zur Arbeitszeiterfassung. Das Endgerät 100 entspricht beispielsweise dem in Figur 10 gezeigten exemplarischen Endgerät. Das exemplarisches Endgerät 100 erfasst im Zuge der Arbeitszeiterfassung beispielsweise ein Überschreiten eines vordefinierten zweiten Arbeitszeitlimits 122 des authentifizierten Nutzers durch die erfasste Arbeitszeit. Dieses zweite Arbeitszeitlimit 122 kann beispielsweise mit dem ersten Arbeitszeitlimit 120 übereinstimmen oder von diesem verscheiden sein. Beispielsweise definiert das zweite Arbeitszeitlimit 122 ein Limit für einen längere Arbeitszeit als das erste Arbeitszeitlimit 120. Im Falle eines Überschreitens des zweiten Arbeitszeitlimits 122 ist beispielsweise eine explizite Freigabe notwendig. Beispielsweise wird auf das Überschreiten des zweiten Arbeitszeitlimits 122 hin ein visuelles, akustisches und/oder mechanisches Hinweissignal unter Verwendung des Endgeräts 100 ausgegeben. Beispielsweise kann ein entsprechendes visuelles Hinweissignal auf einem von der Nutzerschnittstelle 116 umfassten Display des Endgeräts angezeigt, ein entsprechendes akustisches Hinweissignal über einen von der Nutzerschnittstelle 116 umfassten Lautsprecher des Endgeräts 100 ausgegeben und/oder ein entsprechendes mechanische Hinweissignal durch eine Vibration des Endgeräts ausgegeben werden. Beispielsweise wird das Hinweissignal kontinuierlich oder intervallweise solange ausgegeben, bis eine Freigabe der Zeitüberschreitung erfolgt ist. Zusätzlich oder alternativ können etwa Einschränkungen von Nutzungs- bzw. Bedienungsrechten des Nutzers verlasst werden, für deren Aufhebung eine Freigabe der Zeitüberschreitung notwendig ist.

Auf das Erfassen des Überschreitens des vordefinierten zweiten Arbeitszeitlimits 122 hin, gibt das Endgerät 100 beispielsweise unter Verwendung der Nutzerschnittstelle 116 und/oder der Kommunikationsschnittstelle 118 eine Anforderung zur Freigabe 130 der Zeitüberschreitung aus. In Antwort auf die Ausgabe der Anforderung empfängt das Endgerät 100 beispielsweise eine Freigabe 130 der Zeitüberschreitung. Die Freigabe 130 umfasst beispielsweise eine Nutzerfreigabe 132 durch den authentifizierten Nutzer des Endgeräts 100. Die entsprechende Nutzerfreigabe 132 empfängt das Endgerät 100 beispielsweise unter Verwendung der Nutzerschnittstelle 116. Die Nutzerfreigabe 132 kann beispielsweise ein Einmalkennwort 134 umfassen, dessen erfolgreiche Verifizierung eine Voraussetzung für eine erfolgreiche Freigabe 130 der Zeitüberschreitung ist. Beispielsweise handelt es sich bei dem Einmalkennwort 134 um ein dem Nutzer zur Verfügung stehendes Einmalkennwort 134. Das Einmalkennwort 134 kann dem Nutzer im Bedarfsfall auch auf Anfrage, beispielsweise von einem Arbeitgeber, zur Verfügung gestellt werden. Alternativerweise kann dem Nutzer im Vorhinein eine Mehrzahl von Einmalkennwörtern zur Verfügung gestellt werden, welche er im Bedarfsfall verwenden kann, bis sämtliche Einmalkennwörter verbraucht sind. Durch die Anzahl der bereitgestellten Einmalkennwörter kann die Anzahl der Freigaben von Überschreitungen des zweiten Arbeitszeitlimits 122 limitiert werden. Beispielsweise werden dem Nutzer des Endgeräts 100 für einen bestimmten Zeitraum nur eine bestimmte Anzahl an Einmalkennwörtern zur Verfügung gestellt. Somit kann die Anzahl der möglichen Freigaben von Überschreitungen des zweiten Arbeitszeitlimits 122 effektiv limitiert werden.

Beispielsweise sendet das Endgerät 100 im Bedarfsfall unter Verwendung der Kommunikationsschnittstelle 118 des Endgeräts 100 eine Einmalkennwortanfrage an einen Verwaltungsserver. Beispielsweise wird die Einmalkennwortanfrage über einen ersten Kommunikationskanal unter Verwendung der Kommunikationsschnittstelle 118 gesendet. Beispielsweise werden in Antwort auf die Anfrage ein oder mehrere Einmalkennwörter über einen von dem ersten Kommunikationskanal verschiedenen zweiten Kommunikationskanal gesendet. Beispielsweise handelt es sich bei dem ersten Kommunikationskanal über einer Internetverbindung. Beispielsweise werden die ein oder mehrere Einmalkennwörter unter Verwendung einer SMS von dem Endgerät empfangen. Beispielsweise werden die ein oder mehrere Einmalkennwörter unabhängig von dem Endgerät an 100 den Nutzer übertragen. Beispielsweise werden die ein oder mehrere Einmalkennwörter per Post an den Nutzer versendet. Beispielsweise werden die ein oder mehrere Einmalkennwörter persönlich an den Nutzer übergeben, etwa von einem Vorgesetzten oder einem dafür zuständigen Kollegen.

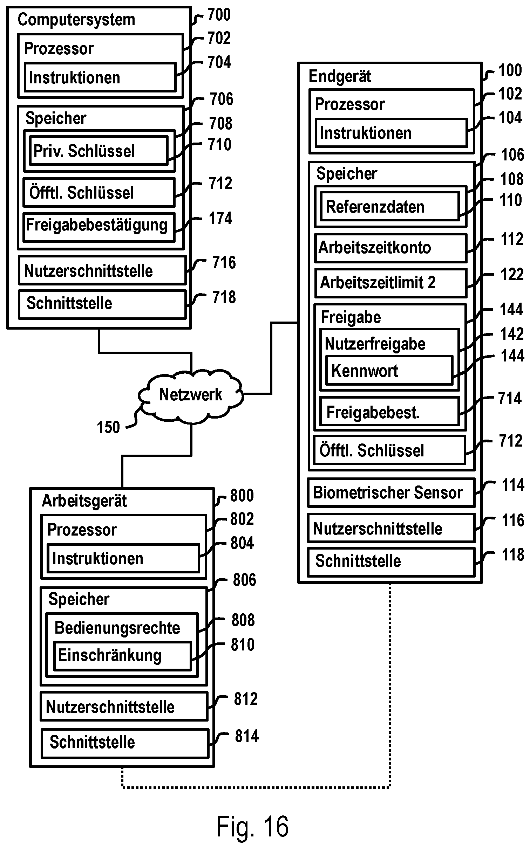

Figur 16 zeigt ein exemplarisches System zum Aufheben einer Einschränkung 810 von Bedienungsrechten 808 zur Bedienung eines Arbeitsgeräts 800. Das Endgerät 100 entspricht beispielsweise dem in Figur 15 gezeigten exemplarischen Endgerät. Das Arbeitsgerät 800 entspricht beispielsweise dem in Figur 11 gezeigten exemplarischen Arbeitsgerät 800. In dem Speicher 806 ist beispielsweise eine Definition von Bedienungsrechten 808 hinterlegt, welche festlegen, welche Funktionen des Arbeitsgerät 800 der Nutzer ausführen bzw. veranlassen darf. Auf ein Überschreiten des zweiten Arbeitszeitlimits 122 hin, wird beispielsweise eine Einschränkung 810 der Bedienungsrechten 808 vorgenommen. Diese Einschränkung 810 kann beispielsweise dazu führen, dass der Nutzer das entsprechende Arbeitsgerät 800 bis zu einer Aufhebung der Einschränkung 810 nur noch eingeschränkt nutzen kann. Beispielsweise kann die Einschränkung 810 dazu führen, dass der Nutzer das entsprechende Arbeitsgerät 800 bis zu einer Aufhebung der Einschränkung 810 nicht mehr nutzen kann. Die Einschränkung 810 wird beispielsweise von dem Arbeitsgerät 800 auf den Empfang einer Mitteilung über das Überschreiten des zweiten Arbeitszeitlimits 122 hin initiiert. Beispielsweise empfängt das Arbeitsgerät 800 die entsprechende Mitteilung von dem Endgerät 150 und/oder von einem zentralen Server, welcher eine Kopie des Arbeitszeitkontos 112 verwaltet und von dem Endgerät 100 über die Arbeitszeiterfassung und insbesondere über Überschreitungen von Arbeitszeitlimits informiert wird. Auf einen Empfang einer Freigabebestätigung 714 des Computersystems 700 hin wird die Einschränkung 810 der Bedienungsrechte 808 beispielsweise wieder aufgehoben. Die entsprechende Freigabebestätigung 714 empfängt das Arbeitsgerät 800 beispielsweise von dem Endgerät 100 und/oder direkt von dem Computersystem 700 über das Netzwerk 150.

Wird eine entsprechende Freigabebestätigung 714 durch eine weitere Instanz, welcher das Computersystem 700 zugeordnet ist, benötigt, sendet das Endgerät 100 beispielsweise eine Freigabeanfrage unter Verwendung der Kommunikationsschnittstelle 118 über das Netzwerk 150 an das der weiteren Instanz zugeordnete Computersystem 700. Das Computersystem 700 umfasst beispielsweise einen Prozessor 702 und einen Speicher 706 mit Programminstruktionen 704. Ein Ausführen der Programminstruktionen 704 durch den Prozessor 702 veranlasst den Prozessor 702 dazu, das Computersystem 700 zum Ausführen eines Verfahrens zum Ausstellen einer Freigabebestätigung 714 zur Freigabe eines Überschreitens eines zweiten Arbeitszeitlimits 122 zu steuern. Das Computersystem 700 umfasst ferner eine Kommunikationsschnittstelle 718 zur Kommunikation über das Netzwerk 150. In Antwort auf die Freigabeanfrage stellt das Computersystem 700 beispielsweise die Freigabebestätigung 714 aus. Beispielsweise umfasst das Computersystem 700 eine Nutzerschnittstelle 716, unter Verwendung derer ein Nutzer des Computersystems 700 das Ausstellen der Freigabebestätigung initiieren kann. Die Freigabebestätigung 714 wird von dem Computersystems 700 unter Verwendung eines der weiteren Instanz zugeordneten Signaturschlüssels 710 signiert und unter Verwendung des Kommunikationsschnittstelle 718 über das Netzwerk 150 an das Endgerät 100 gesendet.

Das Endgerät 100 empfängt die signierte Freigabebestätigung 714 von dem der weiteren Instanz zugeordneten Computersystem 700 und verifiziert die Signatur der Freigabebestätigung 714 unter Verwendung eines der weiteren Instanz zugeordneten Signaturprüfschlüssels 712. Bei dem Signaturschlüssel 710 und dem Signaturprüfschlüssel 712 der weiteren Instanz handelt es sich beispielsweise um einen privaten und einen öffentlichen kryptographischen Schlüssel eines der weiteren Instanz zugeordneten asymmetrischen Schlüsselpaars. Eine erfolgreiche Freigabe 130 setzt beispielsweise ein erfolgreiches Verifizieren der entsprechenden Signatur voraus. Beispielsweise leitet das Endgerät 100 die Freigabebestätigung 714 an das Arbeitsgerät 800 weiter, welches die Signatur der Freigabebestätigung 714 unter Verwendung des Signaturprüfschlüssel 712 verifizieren kann. Alternativ oder zusätzlich sendet das Endgerät 100 beispielsweise eine Mitteilung an das Arbeitsgerät 800, dass eine erfolgreiche Freigabe 144 der Zeitüberschreitung vorliegt.

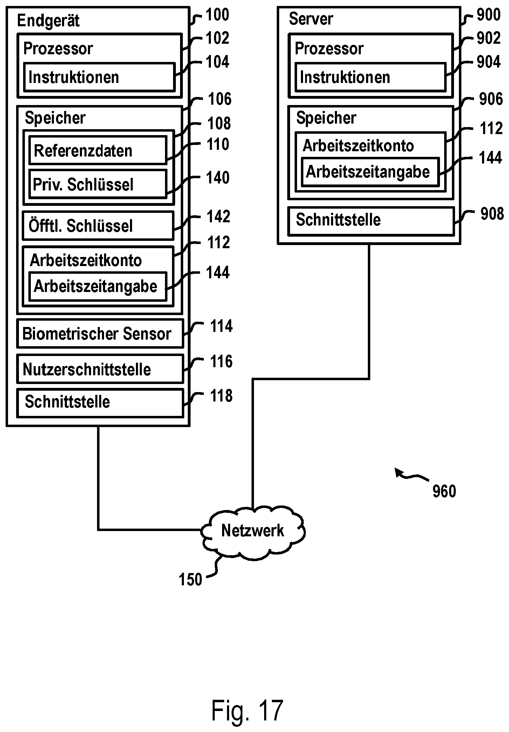

Figur 17 zeigt ein exemplarisches System 960 zum Speichern einer Angabe einer erfassten Arbeitszeit unter Verwendung eines Servers 900. Das System 960 umfasst ein Endgerät 100, welches beispielsweise dem in Figur 10 gezeigten exemplarischen Endgerät entspricht. Ferner umfasst das System 960 beispielsweise einen Server 900. Ein Speichern einer von dem Endgerät 100 für einen authentifizierten Nutzer, etwa unter Verwendung des Verfahren gemäß Figur 1, erfassten Arbeitszeit umfasst beispielsweise ein Senden einer Angabe 144 der erfassten Arbeitszeit an den Server 900 zur Speicherung. Der Server 900 umfasst beispielsweise einen Prozessor 902 und einen Speicher 906 mit Programminstruktionen 904. Ein Ausführen der Programminstruktionen 904 durch den Prozessor 902 veranlasst den Prozessor 902 dazu, den Server 900 zum Ausführen eines Verfahrens zum Speichern der Angabe 144 zu steuern. Der Server 900 umfasst eine Kommunikationsschnittstelle 908 zur Kommunikation mit dem Endgerät 100 über das Netzwerk 150. In dem Speicher 906 des Server 900 ist eine Kopie des Arbeitskontos 112 des Nutzers des Endgeräts 100 gespeichert.

Zum Speichern sendet das Endgerät 100 unter Verwendung der Kommunikationsschnittstelle 118 die Angabe 144 der erfassten Arbeitszeitüber das Netzwerk 150 an den Server 900. Die Angabe 144 der erfassten Arbeitszeit wird beispielsweise vor dem Senden von dem Endgerät 100 unter Verwendung eines dem Nutzer des Endgeräts 100 zugeordneten Signaturschlüssels 140 von dem Endgerät 100 signiert. Bei dem Signaturschlüssel 140 des Endgeräts 100 handelt es sich beispielsweise um einen privaten kryptographischen Schlüssel eines dem Endgerät 100 zugeordneten asymmetrischen Schlüsselpaars. Zum Prüfen von Signaturen, welche unter Verwendung des Signaturschlüssel 140 des Endgeräts erstellt wurden, wird von dem Endgerät 100 ein Signaturprüfschlüssel 142 bereitgestellt, bei welchem es sich beispielsweise um einen öffentlichen kryptographischen Schlüssel des dem Endgerät 100 zugeordneten asymmetrischen Schlüsselpaars handelt. Beispielsweise stellt das Endgerät 100 dem Server 900 den Signaturprüfschlüssel 142 zur Verfügung. Ein Speichern der Angabe 144 der erfassten Arbeitszeit durch den Server 900 setzt beispielsweise ein erfolgreiches Verifizieren der Signatur der Angabe 144 der erfassten Arbeitszeit unter Verwendung des Signaturprüfschlüssels 142 voraussetzt. Auf ein erfolgreiches verifizieren der Angabe 144 der erfassten Arbeitszeit hin, wird die Angabe 144 der erfassten Arbeitszeit in der Kopie des Arbeitszeitkonto 112 des authentifizierten Nutzers auf dem Server 900 gespeichert. Die Kommunikation zwischen dem Endgerät 100 und dem Server 900 im Zuge des Sendens der Angabe 144 der erfassten Arbeitszeit von dem Endgerät 100 an den Server 900 erfolgt beispielsweise über eine verschlüsselte Kommunikationsverbindung. Bei der verschlüsselten Kommunikationsverbindung handelt es sich beispielsweise um eine mittels Ende-zu-Ende verschlüsselte Kommunikation.

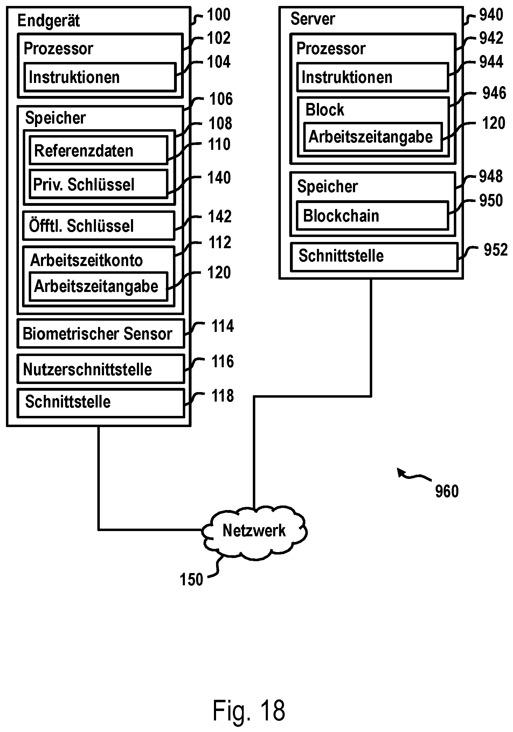

Figur 18 zeigt ein exemplarisches System 960 zum Speichern einer Angabe einer erfassten Arbeitszeit in einer Blockchain 950. Neben einem Endgerät 100, welches beispielsweise dem in Figur 10 gezeigten exemplarischen Endgerät entspricht, umfasst das System 960 beispielsweise einen Blockchain-Server 940, welcher eine Blockchain 950 zumindest mitverwalteten. Der Blockchain-Server 940 umfasst beispielsweise einen Prozessor 942 und einen Speicher 948 mit Programminstruktionen 944. Ein Ausführen der Programminstruktionen 944 durch den Prozessor 942 veranlasst den Prozessor 942 dazu, den Blockchain-Server 940 zum Ausführen eines Verfahrens zum Speichern der Angabe 144 in der Blockchain 950 zu steuern. Der Blockchain- Server 940 umfasst eine Kommunikationsschnittstelle 952 zur Kommunikation mit dem Endgerät 100 über das Netzwerk 150. In dem Speicher 948 des Blockchain-Servers 940 ist die Blockchain 950 gespeichert.

Zum Speichern einer von dem Endgerät 100 für einen authentifizierten Nutzer, etwa unter Verwendung des Verfahren gemäß Figur 1, erfassten Arbeitszeit umfasst beispielsweise ein Senden der Angabe 144 der erfassten Arbeitszeit an den Blockchain-Server 940 zur Speicherung. Der Blockchain-Server 940 stellt die Blockchain 950 bzw. einer Kopie der Blockchain 950 zur Speicherung von Arbeitszeitangaben bereit. Die Angabe 144 der erfassten Arbeitszeit ist beispielsweise von dem Endgerät 100 mit einem dem Nutzer des Endgeräts 100 zugeordneten Signaturschlüssel 140 signiert. Bei dem Signaturschlüssel 140 des Endgeräts 100 handelt es sich beispielsweise um einen privaten kryptographischen Schlüssel eines dem Endgerät 100 zugeordneten asymmetrischen Schlüsselpaars. Zum Prüfen von Signaturen, welche unter Verwendung des Signaturschlüssel 140 des Endgeräts 100 erstellt wurden, wird von dem Endgerät 100 ein Signaturprüfschlüssel 142 bereitgestellt, bei welchem es sich beispielsweise um einen öffentlichen kryptographischen Schlüssel des dem Endgerät 100 zugeordneten asymmetrischen Schlüsselpaars handelt. Der Blockchain-Server 940 empfängt über das Netzwerk 150 von dem Endgerät 100 eine Eintragungsanfrage zur Eintragung der Angabe 144 der erfassten Arbeitszeit in die Blockchain 950. Der Blockchain-Server 940 verifiziert die Signatur der Angabe 144 der erfassten Arbeitszeit unter Verwendung des dem Nutzer des Endgeräts 100 zugeordneten Signaturprüfschlüssels 142. Auf eine erfolgreiche Verifizierung hin, erstellt der Blockchain-Server 940 ein zusätzlicher Block 946 für die Blockchain 950, in welchen die empfangene Angabe 144 der erfassten Arbeitszeit eingetragen wird. Dieser zusätzliche Block 946 mit der Angabe 144 der erfassten Arbeitszeit wird von dem Blockchain-Server 940 zu der Blockchain 950 hinzugefügt. Die Kommunikation zwischen dem Endgerät 100 und dem Blockchain-Server 940 im Zuge des Sendens der Angabe 144 der erfassten Arbeitszeit von dem Endgerät 100 an den Blockchain-Server 940 erfolgt beispielsweise über eine verschlüsselte Kommunikationsverbindung. Bei der verschlüsselten Kommunikationsverbindung handelt es sich beispielsweise um eine mittels Ende-zu-Ende verschlüsselte Kommunikation.

### Bezugszeichenliste

- 100: Endgerät
- 102: Prozessor
- 104: Programminstruktionen einer Arbeitszeiterfassungsapplikation
- 106: Speicher
- 108: geschützter Speicherbereich
- 110: Referenzdaten
- 112: Arbeitszeitkonto
- 114: biometrischer Sensor
- 116: Nutzerschnittstelle
- 118: Kommunikationsschnittstelle
- 120: Arbeitszeitlimit 1
- 122: Arbeitszeitlimit 2
- 124: Referenzattribute
- 126: Attribute
- 128: Programminstruktionen einer ID-Applikation
- 130: Freigabe
- 132: Nutzerfreigabe
- 134: Einmalkennwort
- 140: privater kryptographischer Schlüssel
- 142: öffentlicher kryptographischer Schlüssel
- 144: Arbeitszeitangabe
- 150: Netzwerk
- 300: ID-Providerserver
- 302: Prozessor
- 304: Programminstruktionen
- 306: Speicher
- 308: geschützter Speicherbereich
- 310: privater kryptographischer Schlüssel
- 312: Berechtigungszertifikat
- 314: öffentlicher kryptographischer Schlüssel
- 316: Kommunikationsschnittstelle
- 400: Terminal
- 402: Prozessor
- 404: Programminstruktionen
- 406: Speicher
- 408: Kommunikationsschnittstelle
- 500: ID-Token
- 502: Prozessor
- 504: Programminstruktionen
- 506: Speicher
- 508: geschützter Speicherbereich
- 510: Kommunikationsschnittstelle
- 600: weiteres Endgerät
- 602: Prozessor
- 604: Programminstruktionen
- 606: Speicher
- 608: geschützter Speicherbereich
- 610: privater kryptographischer Schlüssel
- 612: öffentlicher kryptographischer Schlüssel
- 614: Bestätigung
- 616: biometrischer Sensor
- 618: Nutzerschnittstelle
- 620: Kommunikationsschnittstelle
- 700: Computersystem
- 702: Prozessor
- 704: Programminstruktionen
- 706: Speicher
- 708: geschützter Speicherbereich
- 710: privater kryptographischer Schlüssel
- 712: öffentlicher kryptographischer Schlüssel
- 714: Freigabebestätigung
- 716: Nutzerschnittstelle
- 718: Kommunikationsschnittstelle
- 800: Arbeitsgerät
- 802: Prozessor
- 804: Programminstruktionen
- 806: Speicher
- 808: Bedienungsrechte
- 810: Einschränkung der Bedienungsrechte
- 812: Nutzerschnittstelle
- 814: Eingangskontrolle
- 820: Zutrittskontrollgerät
- 822: Prozessor
- 824: Programminstruktionen
- 826: Speicher
- 828: Kommunikationsschnittstelle
- 840: Kommunikationsgerät
- 842: Prozessor
- 844: Programminstruktionen
- 846: Speicher
- 848: Kommunikationsschnittstelle
- 900: Server
- 902: Prozessor
- 904: Programminstruktionen
- 906: Speicher
- 908: Kommunikationsschnittstelle
- 940: Server
- 942: Prozessor
- 944: Programminstruktionen
- 946: Block
- 948: Speicher
- 950: Blockchain
- 952: Kommunikationsschnittstelle
- 960: System

## Patentansprüche

1. Verfahren zum nutzerindividuellen Erfassen von Arbeitszeit unter Verwendung eines mobilen tragbaren Endgeräts (100), wobei das Endgerät (100) einen Prozessor (102) und einen Speicher (106) mit Programminstruktionen (104) einer Arbeitszeiterfassungsapplikation und einen biometrischen Sensor (114) zur Erfassung von biometrischen Authentifizierungsdaten zum Authentifizieren eines Nutzers des Endgeräts (100) umfasst,
wobei das Verfahren bei Ausführen der Arbeitszeiterfassungsapplikation durch das Endgerät (100) umfasst:
• Erfassen eines Indikators eines Arbeitszeitbeginns, wobei der Indikator des Arbeitszeitbeginns eine Interaktion des Endgeräts (100) mit einem Arbeitsgerät (800) umfasst, wobei der Indikator des Arbeitszeitbeginns eine Interaktion in Form eines Empfangs einer Anmeldemitteilung von dem Arbeitsgerät (800) durch das Endgerät (100) umfasst, welche eine Anmeldung des Nutzers des Endgeräts (100) an dem Arbeitsgerät (800) anzeigt, wobei die Anmeldung des Nutzers des Endgeräts (100) an dem Arbeitsgerät (800) eine erfolgreiche Authentisierung des Nutzers gegenüber dem Arbeitsgerät voraussetzt,
• auf das Erfassen des Indikators des Arbeitszeitbeginns hin, Beginnen einer Arbeitszeiterfassung,
• Authentifizieren des Nutzers des Endgeräts (100), für welchen die Arbeitszeiterfassung erfolgt, wobei das Authentifizieren des Nutzers ein Authentifizieren unter Verwendung von biometrischen Authentifizierungsdaten des Nutzers umfasst, welche mittels des biometrischen Sensors (114) erfasst werden, wobei ein erfolgreiches Authentifizieren des Nutzers ein Übereinstimmen der erfassten biometrischen Authentifizierungsdaten mit hinterlegten biometrischen Referenzdaten (110) des Nutzers voraussetzt,
• Zuordnen der Arbeitszeiterfassung zu einem unter Verwendung der Arbeitszeiterfassungsapplikation verwalteten Arbeitszeitkonto (112) des authentifizierten Nutzers,
• Erfassen eines Indikators eines Arbeitszeitendes, wobei der Indikator des Arbeitszeitendes eine Interaktion des Endgeräts (100) mit einem Arbeitsgerät (800) umfasst, wobei der Indikator des Arbeitszeitendes eine Interaktion in Form eines Empfangs einer Abmeldemitteilung von dem Arbeitsgerät (800) durch das Endgerät (100) umfasst, welche eine Abmeldung des Nutzers des Endgeräts (100) von dem Arbeitsgerät (800) anzeigt,
• auf das Erfassen des Indikators des Arbeitszeitendes hin, Beenden der Arbeitszeiterfassung,
• Speichern der für den authentifizierten Nutzer erfassten Arbeitszeit in dem Arbeitszeitkonto (112) des authentifizierten Nutzers, wobei das Speichern der für den authentifizierten Nutzer erfassten Arbeitszeit ein Senden einer Angabe (144) der erfassten Arbeitszeit an einen Server (900; 940) zur Speicherung umfasst, wobei die Angabe (144) der erfassten Arbeitszeit vor dem Senden unter Verwendung eines dem Nutzer des Endgeräts (100) zugeordneten vierten Signaturschlüssels (140) von dem Endgerät (100) signiert wird,
wobei das Verfahren ferner umfasst:
• Erfassen eines Überschreitens eines vordefinierten ersten Arbeitszeitlimits (120) des authentifizierten Nutzers durch die erfasste Arbeitszeit,
• auf das Erfassen des Überschreitens des vordefinierten ersten Arbeitszeitlimits (120) hin, Ausgeben eines Warnhinweises,
• Erfassen eines Überschreitens eines vordefinierten zweiten Arbeitszeitlimits (122) des authentifizierten Nutzers durch die erfasste Arbeitszeit,
• auf das Erfassen des Überschreitens des vordefinierten zweiten Arbeitszeitlimits (122) hin, Ausgeben einer Anforderung zur Freigabe (130) der Zeitüberschreitung, wobei, auf das Erfassen des Überschreitens des vordefinierten zweiten Arbeitszeitlimits (122) hin, Bedienungsrechte des Nutzers des Endgeräts (100) zur Bedienung des Arbeitsgeräts (800) bis zum Empfang der Freigabe (130) eingeschränkt werden,
• Empfangen einer Freigabe (130) der Zeitüberschreitung.

2. Verfahren nach Anspruch 1, wobei der Indikator des Arbeitszeitbeginns und/oder der Indikator des Arbeitszeitendes eine Nutzereingabe umfasst, mittels derer der Nutzer des Endgeräts (100) den Arbeitszeitbeginn und/oder das Arbeitszeitende anzeigt.

3. Verfahren nach einem der vorangehenden Ansprüche, wobei der Indikator des Arbeitszeitbeginns und/oder der Indikator des Arbeitszeitendes eine Ortserfassung einer Anwesenheit des Endgeräts (100) an einem vordefinierten Ort durch das Endgerät (100) umfasst, welcher dem Arbeitszeitbeginn und/oder dem Arbeitszeitende zugeordnet ist.

4. Verfahren nach Anspruch 3, wobei die Ortserfassung unter Verwendung eines Empfangs eines Signals eines globalen Navigationssatellitensystems, eines WLAN-Signals, eines UWB-Signals, eines Bluetooth-Signals und/oder eines NFC-Signals erfolgt und/oder
wobei die dem Arbeitsbeginn zugeordnete Ortserfassung ein Betreten eines vordefinierten, der Arbeit zugeordneten Ortsbereichs durch das Endgerät (100) umfasst und/oder wobei die dem Arbeitsende zugeordnete Ortserfassung ein Verlassen des vordefinierten, der Arbeit zugeordneten Ortsbereichs durch das Endgerät (100) umfasst.

5. Verfahren nach einem der vorangehenden Ansprüche, wobei die Abmeldung des Nutzers des Endgeräts (100) von dem Arbeitsgerät (800) beispielsweise eine erfolgreiche Authentisierung des Nutzers gegenüber dem Arbeitsgerät voraussetzt.

6. Verfahren nach einem der vorangehenden Ansprüche, wobei der Indikator des Arbeitszeitbeginns und/oder der Indikator des Arbeitszeitendes eine Bestätigung (614) des Arbeitszeitbeginns und/oder des Arbeitszeitendes durch einen weiteren Nutzer eines weiteren mobilen tragbaren Endgeräts (600) umfasst,
wobei das Verfahren ferner beispielsweise umfasst:
• Senden einer Bestätigungsanfrage an das weitere mobile tragbare Endgerät (600),
• in Antwort auf das Senden der Bestätigungsanfrage, Empfangen der Bestätigung (614) von dem weiteren mobilen tragbaren Endgerät (600), wobei die Bestätigung (614) unter Verwendung eines dem weiteren Nutzer des Weiteren mobilen tragbaren Endgeräts (600) zugeordneten ersten Signaturschlüssels (610) signiert ist,
• Verifizieren der Signatur der Bestätigung (614) unter Verwendung eines dem weiteren Nutzer des Weiteren mobilen tragbaren Endgeräts (600) zugeordneten ersten Signaturprüfschlüssels (612), wobei ein Anerkennen der Bestätigung (614) als Indikator ein erfolgreiches Verifizieren der entsprechenden Signatur voraussetzt.

7. Verfahren nach einem der vorangehenden Ansprüche, wobei die Freigabe (130) eine Nutzerfreigabe (132) durch den authentifizierten Nutzer des Endgeräts (100) umfasst,
wobei die Freigabe (130) in Form der Nutzerfreigabe (132) beispielsweise ein erfolgreiches zusätzliches Authentifizieren des Nutzers des Endgeräts (100) durch das Endgerät (100) voraussetzt, wobei das zusätzliche Authentifizieren des Nutzers ein zusätzliches Authentifizieren unter Verwendung der biometrischen Authentifizierungsdaten des Nutzers umfasst, welche mittels des biometrischen Sensors (114) erfasst werden, wobei ein erfolgreiches zusätzliches Authentifizieren des Nutzers ein Übereinstimmen der erfassten biometrischen Authentifizierungsdaten mit den hinterlegten biometrischen Referenzdaten (100) des Nutzers voraussetzt, und/oder
wobei die Nutzerfreigabe (132) beispielsweise ein Empfangen und Verifizieren eines Einmalkennworts (134) von dem authentifizierten Nutzer umfasst, und/oder
wobei die Freigabe (130) eine Freigabebestätigung (714) durch eine weitere Instanz umfasst, wobei das Verfahren ferner umfasst:
• Senden einer Freigabeanfrage an ein der weiteren Instanz zugeordnetes Computersystem,
• in Antwort auf das Senden der Freigabeanfrage, Empfangen der Freigabebestätigung (714) von dem der weiteren Instanz zugeordneten Computersystem, wobei die Freigabebestätigung (714) unter Verwendung eines der weiteren Instanz zugeordneten zweiten Signaturschlüssels (710) signiert ist,
• Verifizieren der Signatur der Freigabebestätigung (714) unter Verwendung eines der weiteren Instanz zugeordneten zweiten Signaturprüfschlüssels (712), wobei die Freigabe (130) ein erfolgreiches Verifizieren der entsprechenden Signatur voraussetzt, und/oder
wobei auf das Erfassen des Überschreitens des vordefinierten zweiten Arbeitszeitlimits (122) hin, eine Bedienung der ein oder mehrerer Arbeitsgeräte (800) durch den Nutzer des Endgeräts (100) bis zum Empfang der Freigabe (130) blockiert wird.

8. Verfahren nach einem der vorangehenden Ansprüche, wobei das Authentifizieren des Nutzers des Endgeräts (100) ferner umfasst:
• Empfangen ein oder mehrerer aus einem ID-Token (128; 500) des Nutzers ausgelesener Attribute (126) des Nutzers von einem ID-Providerserver (300) unter Verwendung einer Kommunikationsschnittstelle (118) des Endgeräts (100), wobei die empfangenen Attribute (126) des Nutzers mit einem dritten Signaturschlüssel (310) des ID-Providerservers (300) signiert sind,
• Verifizieren der Signatur der empfangenen Attribute (126) unter Verwendung eines dritten Signaturprüfschlüssels (314) des ID-Providerservers (300), wobei ein erfolgreiches Authentifizieren des Nutzers zusätzlich zu einem erfolgreichen Verifizieren der entsprechenden Signatur ein Übereinstimmen der empfangenen ein oder mehreren Attributen (126) mit ein oder mehreren hinterlegten Referenzattributen (124) des Nutzers voraussetzt.

9. Verfahren nach Anspruch 8, wobei das ID-Token (128) in Form einer ID-Applikation bereitgestellt wird, deren Programminstruktionen (128) in dem Speicher (106) des Endgeräts (100) gespeichert sind, wobei der ID-Providerserver (300) die Attribute (126) des Nutzers im Zuge des Authentifizierens des Nutzers über die Kommunikationsschnittstelle (118) des Endgeräts (100) ausliest,
wobei das Authentifizieren des Nutzers beispielsweise unter Verwendung der biometrischen Authentifizierungsdaten im Zuge des Auslesens der Attribute (126) aus dem Endgerät (100) erfolgt und das Übereinstimmen der erfassten biometrischen Authentifizierungsdaten mit den hinterlegten biometrischen Referenzdaten (110) des Nutzers Voraussetzung für ein Gewähren eines Lesezugriffs des ID-Providerservers (300) auf die Attribute (126) des Nutzers ist.

10. Verfahren nach einem der vorangehenden Ansprüche, wobei das Speichern der für den authentifizierten Nutzer erfassten Arbeitszeit eine lokale Speicherung in dem Speicher des Endgeräts (100) umfasst und/oder
wobei ein Speichern der Angabe (144) der erfassten Arbeitszeit durch den Server (900; 940) ein erfolgreiches Verifizieren der Signatur der Angabe (144) der erfassten Arbeitszeit unter Verwendung eines dem Nutzer des Endgeräts (100) zugeordneten vierten Signaturprüfschlüssels (142) voraussetzt, und/oder
wobei es sich bei dem Server um einen Blockchain-Server (940) handelt und die Speicherung der Angabe (144) der erfassten Arbeitszeit durch den Blockchain-Server (940) in einer von dem Blockchain-Server (940) zumindest mitverwalteten Blockchain (950) erfolgt.

11. Arbeitszeiterfassungsapplikation zum nutzerindividuellen Erfassen von Arbeitszeit unter Verwendung eines mobilen tragbaren Endgeräts (100), wobei die Arbeitszeiterfassungsapplikation Programminstruktionen (104) umfasst, wobei ein Ausführen der Programminstruktionen (104) durch einen Prozessor (102) des mobilen tragbaren Endgeräts (100) den Prozessor (102) dazu veranlasst, das mobile tragbare Endgerät (100) zum Ausführen eines Verfahrens zu steuern, welches umfasst:
• Erfassen eines Indikators eines Arbeitszeitbeginns, wobei der Indikator des Arbeitszeitbeginns eine Interaktion des Endgeräts (100) mit einem Arbeitsgerät (800) umfasst, wobei der Indikator des Arbeitszeitbeginns eine Interaktion in Form eines Empfangs einer Anmeldemitteilung von dem Arbeitsgerät (800) durch das Endgerät (100) umfasst, welche eine Anmeldung des Nutzers des Endgeräts (100) an dem Arbeitsgerät (800) anzeigt, wobei die Anmeldung des Nutzers des Endgeräts (100) an dem Arbeitsgerät (800) eine erfolgreiche Authentisierung des Nutzers gegenüber dem Arbeitsgerät voraussetzt,
• auf das Erfassen des Indikators des Arbeitszeitbeginns hin, Beginnen einer Arbeitszeiterfassung,
• Authentifizieren des Nutzers des Endgeräts (100), für welchen die Arbeitszeiterfassung erfolgt, wobei das Authentifizieren des Nutzers ein Authentifizieren unter Verwendung von biometrischen Authentifizierungsdaten des Nutzers umfasst, welche mittels eines biometrischen Sensors (114) des Endgeräts (100) erfasst werden, wobei ein erfolgreiches Authentifizieren des Nutzers ein Übereinstimmen der erfassten biometrischen Authentifizierungsdaten mit hinterlegten biometrischen Referenzdaten (110) des Nutzers voraussetzt,
• Zuordnen der Arbeitszeiterfassung zu einem Arbeitszeitkonto (112) des authentifizierten Nutzers,
• Erfassen eines Indikators eines Arbeitszeitendes, wobei der Indikator des Arbeitszeitendes eine Interaktion des Endgeräts (100) mit einem Arbeitsgerät (800) umfasst, wobei der Indikator des Arbeitszeitendes eine Interaktion in Form eines Empfangs einer Abmeldemitteilung von dem Arbeitsgerät (800) durch das Endgerät (100) umfasst, welche eine Abmeldung des Nutzers des Endgeräts (100) von dem Arbeitsgerät (800) anzeigt,
• auf das Erfassen des Indikators des Arbeitszeitendes hin, Beenden der Arbeitszeiterfassung,
• Speichern der für den authentifizierten Nutzer erfassten Arbeitszeit in dem Arbeitszeitkonto (112) des authentifizierten Nutzers, wobei das Speichern der für den authentifizierten Nutzer erfassten Arbeitszeit ein Senden einer Angabe (144) der erfassten Arbeitszeit an einen Server (900; 940) zur Speicherung umfasst, wobei die Angabe (144) der erfassten Arbeitszeit vor dem Senden unter Verwendung eines dem Nutzer des Endgeräts (100) zugeordneten vierten Signaturschlüssels (140) von dem Endgerät (100) signiert wird,
wobei das Verfahren ferner umfasst:
• Erfassen eines Überschreitens eines vordefinierten ersten Arbeitszeitlimits (120) des authentifizierten Nutzers durch die erfasste Arbeitszeit,
• auf das Erfassen des Überschreitens des vordefinierten ersten Arbeitszeitlimits (120) hin, Ausgeben eines Warnhinweises,
• Erfassen eines Überschreitens eines vordefinierten zweiten Arbeitszeitlimits (122) des authentifizierten Nutzers durch die erfasste Arbeitszeit,
• auf das Erfassen des Überschreitens des vordefinierten zweiten Arbeitszeitlimits (122) hin, Ausgeben einer Anforderung zur Freigabe (130) der Zeitüberschreitung, wobei, auf das Erfassen des Überschreitens des vordefinierten zweiten Arbeitszeitlimits (122) hin, Bedienungsrechte des Nutzers des Endgeräts (100) zur Bedienung des Arbeitsgeräts (800) bis zum Empfang der Freigabe (130) eingeschränkt werden,
• Empfangen einer Freigabe (130) der Zeitüberschreitung.

12. Mobiles tragbares Endgerät (100) zum nutzerindividuellen Erfassen von Arbeitszeit, wobei das Endgerät (100) einen Prozessor (102) und einen Speicher (106) mit Programminstruktionen (104) einer Arbeitszeiterfassungsapplikation und einen biometrischen Sensor (114) zur Erfassung von biometrischen Authentifizierungsdaten zum Authentifizieren eines Nutzers des Endgeräts (100) umfasst,
wobei das Verfahren bei Ausführen der Arbeitszeiterfassungsapplikation durch das Endgerät (100) umfasst:
• Erfassen eines Indikators eines Arbeitszeitbeginns, wobei der Indikator des Arbeitszeitbeginns eine Interaktion des Endgeräts (100) mit einem Arbeitsgerät (800) umfasst, wobei der Indikator des Arbeitszeitbeginns eine Interaktion in Form eines Empfangs einer Anmeldemitteilung von dem Arbeitsgerät (800) durch das Endgerät (100) umfasst, welche eine Anmeldung des Nutzers des Endgeräts (100) an dem Arbeitsgerät (800) anzeigt, wobei die Anmeldung des Nutzers des Endgeräts (100) an dem Arbeitsgerät (800) eine erfolgreiche Authentisierung des Nutzers gegenüber dem Arbeitsgerät voraussetzt,
• auf das Erfassen des Indikators des Arbeitszeitbeginns hin, Beginnen einer Arbeitszeiterfassung,
• Authentifizieren des Nutzers des Endgeräts (100), für welchen die Arbeitszeiterfassung erfolgt, wobei das Authentifizieren des Nutzers ein Authentifizieren unter Verwendung von biometrischen Authentifizierungsdaten des Nutzers umfasst, welche mittels des biometrischen Sensors (114) erfasst werden, wobei ein erfolgreiches Authentifizieren des Nutzers ein Übereinstimmen der erfassten biometrischen Authentifizierungsdaten mit hinterlegten biometrischen Referenzdaten (110) des Nutzers voraussetzt,
• Zuordnen der Arbeitszeiterfassung zu einem unter Verwendung der Arbeitszeiterfassungsapplikation verwalteten Arbeitszeitkonto (112) des authentifizierten Nutzers,
• Erfassen eines Indikators eines Arbeitszeitendes, wobei der Indikator des Arbeitszeitendes eine Interaktion des Endgeräts (100) mit einem Arbeitsgerät (800) umfasst, wobei der Indikator des Arbeitszeitendes eine Interaktion in Form eines Empfangs einer Abmeldemitteilung von dem Arbeitsgerät (800) durch das Endgerät (100) umfasst, welche eine Abmeldung des Nutzers des Endgeräts (100) von dem Arbeitsgerät (800) anzeigt,
• auf das Erfassen des Indikators des Arbeitszeitendes hin, Beenden der Arbeitszeiterfassung,
• Speichern der für den authentifizierten Nutzer erfassten Arbeitszeit in dem Arbeitszeitkonto (112) des authentifizierten Nutzers, wobei das Speichern der für den authentifizierten Nutzer erfassten Arbeitszeit ein Senden einer Angabe (144) der erfassten Arbeitszeit an einen Server (900; 940) zur Speicherung umfasst, wobei die Angabe (144) der erfassten Arbeitszeit vor dem Senden unter Verwendung eines dem Nutzer des Endgeräts (100) zugeordneten vierten Signaturschlüssels (140) von dem Endgerät (100) signiert wird,
wobei das Verfahren ferner umfasst:
• Erfassen eines Überschreitens eines vordefinierten ersten Arbeitszeitlimits (120) des authentifizierten Nutzers durch die erfasste Arbeitszeit,
• auf das Erfassen des Überschreitens des vordefinierten ersten Arbeitszeitlimits (120) hin, Ausgeben eines Warnhinweises,
• Erfassen eines Überschreitens eines vordefinierten zweiten Arbeitszeitlimits (122) des authentifizierten Nutzers durch die erfasste Arbeitszeit,
• auf das Erfassen des Überschreitens des vordefinierten zweiten Arbeitszeitlimits (122) hin, Ausgeben einer Anforderung zur Freigabe (130) der Zeitüberschreitung, wobei, auf das Erfassen des Überschreitens des vordefinierten zweiten Arbeitszeitlimits (122) hin, Bedienungsrechte des Nutzers des Endgeräts (100) zur Bedienung des Arbeitsgeräts (800) bis zum Empfang der Freigabe (130) eingeschränkt werden,
• Empfangen einer Freigabe (130) der Zeitüberschreitung.

13. System (960) umfassend ein mobiles tragbares Endgerät (100) nach Anspruch 12 und den Server (900; 940) zum Speichern der Angabe (144) der erfassten Arbeitszeit,
wobei der Server (900; 940) die Angabe (144) der erfassten Arbeitszeit empfängt und die Signatur der Angabe (144) der erfassten Arbeitszeit unter Verwendung eines dem Nutzer des Endgeräts (100) zugeordneten vierten Signaturprüfschlüssels (142) verifiziert,
wobei der Server (900; 940) die Angabe (144) der erfassten Arbeitszeit auf ein erfolgreiches Verifizieren der Signatur der Angabe (144) der erfassten Arbeitszeit hin speichert in dem Arbeitszeitkonto (112) des authentifizierten Nutzers.

14. System (960) nach Anspruch 13, wobei es sich bei dem Server um einen Blockchain-Server (940) handelt, wobei die Speicherung der Angabe (144) der erfassten Arbeitszeit durch den Blockchain-Server (940) in einer von dem Blockchain-Server (940) zumindest mitverwalteten Blockchain (950) erfolgt.

## Claims

1. A method for recording working time on a user-specific basis using a mobile portable terminal device (100), wherein the terminal device (100) comprises a processor (102) and a memory (106) having program instructions (104) of a working-time recording application and a biometric sensor (114) for capturing biometric authentication data for authenticating a user of the terminal device (100),
wherein the method, when the working-time recording application is executed by the terminal device (100), comprises:
• detecting an indicator of a start of working time, wherein the indicator of the start of working time comprises an interaction of the terminal device (100) with a work device (800), wherein the indicator of the start of working time comprises an interaction in the form of a receipt, by the terminal device (100), of a login notification from the work device (800), which indicates a login of the user of the terminal device (100) at the work device (800), wherein the login of the user of the terminal device (100) at the work device (800) requires a successful authentication of the user with respect to the work device,
• in response to the detecting of the indicator of the start of working time, starting a working-time recording,
• authenticating the user of the terminal device (100), for whom the working-time recording is carried out, wherein the authenticating of the user comprises an authentication using biometric authentication data of the user, which are captured by means of the biometric sensor (114), wherein a successful authentication of the user requires a match of the captured biometric authentication data with stored biometric reference data (110) of the user,
• assigning the working-time recording to a working-time account (112) of the authenticated user managed using the working-time recording application,
• detecting an indicator of an end of working time, wherein the indicator of the end of working time comprises an interaction of the terminal device (100) with a work device (800), wherein the indicator of the end of working time comprises an interaction in the form of a receipt, by the terminal device (100), of a logout notification from the work device (800), which indicates a logout of the user of the terminal device (100) from the work device (800),
• in response to the detecting of the indicator of the end of working time, ending the working-time recording,
• storing the working time recorded for the authenticated user in the working-time account (112) of the authenticated user, wherein storing the working time recorded for the authenticated user comprises sending an indication (144) of the recorded working time to a server (900; 940) for storage, wherein the indication (144) of the recorded working time is signed by the terminal device (100), before being sent, using a fourth signature key (140) assigned to the user of the terminal device (100),
wherein the method further comprises:
• detecting that the recorded working time exceeds a predefined first working-time limit (120) of the authenticated user,
• in response to the detecting that the predefined first working-time limit (120) has been exceeded, outputting a warning,
• detecting that the recorded working time exceeds a predefined second working-time limit (122) of the authenticated user,
• in response to the detecting that the predefined second working-time limit (122) has been exceeded, outputting a request for an approval (130) of the time exceedance, wherein, in response to the detecting that the predefined second working-time limit (122) has been exceeded, operating rights of the user of the terminal device (100) for operating the work device (800) are restricted until receipt of the approval (130),
• receiving an approval (130) of the time exceedance.

2. The method according to claim 1, wherein the indicator of the start of working time and/or the indicator of the end of working time comprises a user input by means of which the user of the terminal device (100) indicates the start of working time and/or the end of working time.

3. The method according to one of the preceding claims, wherein the indicator of the start of working time and/or the indicator of the end of working time comprises a location detection, by the terminal device (100), of a presence of the terminal device (100) at a predefined location associated with the start of working time and/or the end of working time.

4. The method according to claim 3, wherein the location detection is carried out using a receipt of a signal of a global navigation satellite system, a WLAN signal, a UWB signal, a Bluetooth signal and/or an NFC signal and/or
wherein the location detection associated with the start of work comprises the terminal device (100) entering a predefined location area associated with work and/or wherein the location detection associated with the end of work comprises the terminal device (100) leaving the predefined location area associated with work.

5. The method according to one of the preceding claims, wherein the logout of the user of the terminal device (100) from the work device (800), for example, requires a successful authentication of the user with respect to the work device.

6. The method according to one of the preceding claims, wherein the indicator of the start of working time and/or the indicator of the end of working time comprises a confirmation (614) of the start of working time and/or the end of working time by a further user of a further mobile portable terminal device (600),
wherein the method further comprises, for example:
• sending a confirmation request to the further mobile portable terminal device (600),
• in response to the sending of the confirmation request, receiving the confirmation (614) from the further mobile portable terminal device (600), wherein the confirmation (614) is signed using a first signature key (610) assigned to the further user of the further mobile portable terminal device (600),
• verifying the signature of the confirmation (614) using a first signature verification key (612) assigned to the further user of the further mobile portable terminal device (600), wherein a recognition of the confirmation (614) as the indicator requires a successful verification of the corresponding signature.

7. The method according to one of the preceding claims, wherein the approval (130) comprises a user approval (132) by the authenticated user of the terminal device (100),
wherein the approval (130) in the form of the user approval (132), for example, requires a successful additional authentication of the user of the terminal device (100) by the terminal device (100), wherein the additional authentication of the user comprises an additional authentication using the biometric authentication data of the user, which are captured by means of the biometric sensor (114), wherein a successful additional authentication of the user requires a match of the captured biometric authentication data with the stored biometric reference data (100) of the user, and/or
wherein the user approval (132), for example, comprises receiving and verifying a one-time password (134) from the authenticated user, and/or
wherein the approval (130) comprises an approval confirmation (714) by a further entity, wherein the method further comprises:
• sending an approval request to a computer system assigned to the further entity,
• in response to the sending of the approval request, receiving the approval confirmation (714) from the computer system assigned to the further entity, wherein the approval confirmation (714) is signed using a second signature key (710) assigned to the further entity,
• verifying the signature of the approval confirmation (714) using a second signature verification key (712) assigned to the further entity, wherein the approval (130) requires successful verification of the corresponding signature, and/or
wherein, in response to the detecting that the predefined second working-time limit (122) has been exceeded, an operation of the one or more work devices (800) by the user of the terminal device (100) is blocked until receipt of the approval (130).

8. The method according to one of the preceding claims, wherein the authenticating of the user of the terminal device (100) further comprises:
• receiving, from an ID provider server (300) using a communication interface (118) of the terminal device (100), one or more attributes (126) of the user read out from an ID token (128; 500) of the user, wherein the received attributes (126) of the user are signed with a third signature key (310) of the ID provider server (300),
• verifying the signature of the received attributes (126) using a third signature verification key (314) of the ID provider server (300), wherein a successful authentication of the user requires, in addition to a successful verification of the corresponding signature, a match of the received one or more attributes (126) with one or more stored reference attributes (124) of the user.

9. The method according to claim 8, wherein the ID token (128) is provided in the form of an ID application, the program instructions (128) of which are stored in the memory (106) of the terminal device (100), wherein the ID provider server (300) reads out the attributes (126) of the user via the communication interface (118) of the terminal device (100) in the course of authenticating the user,
wherein the user is authenticated, for example using the biometric authentication data, in the course of the reading of the attributes (126) out from the terminal device (100), and the match of the captured biometric authentication data with the stored biometric reference data (110) of the user is a prerequisite for granting a read access by the ID provider server (300) to the attributes (126) of the user.

10. The method according to one of the preceding claims, wherein the storing of the working time recorded for the authenticated user comprises local storage in the memory of the terminal device (100) and/or
wherein a storing of the indication (144) of the recorded working time by the server (900; 940) requires a successful verification of the signature of the indication (144) of the recorded working time using a fourth signature verification key (142) assigned to the user of the terminal device (100), and/or
wherein the server is a blockchain server (940) and the storage of the indication (144) of the recorded working time by the blockchain server (940) takes place in a blockchain (950) at least co-managed by the blockchain server (940).

11. A working-time recording application for recording working time on a user-specific basis using a mobile portable terminal device (100), wherein the working-time recording application comprises program instructions (104), wherein an execution of the program instructions (104) by a processor (102) of the mobile portable terminal device (100) causes the processor (102) to control the mobile portable terminal device (100) to carry out a method comprising:
• detecting an indicator of a start of working time, wherein the indicator of the start of working time comprises an interaction of the terminal device (100) with a work device (800), wherein the indicator of the start of working time comprises an interaction in the form of a receipt, by the terminal device (100), of a login notification from the work device (800), which indicates a login of the user of the terminal device (100) at the work device (800), wherein the login of the user of the terminal device (100) at the work device (800) requires a successful authentication of the user with respect to the work device,
• in response to the detecting of the indicator of the start of working time, starting a working-time recording,
• authenticating the user of the terminal device (100), for whom the working-time recording is carried out, wherein the authenticating of the user comprises an authentication using biometric authentication data of the user, which are captured by means of a biometric sensor (114) of the terminal device (100), wherein a successful authentication of the user requires a match of the captured biometric authentication data with stored biometric reference data (110) of the user,
• assigning the working-time recording to a working-time account (112) of the authenticated user,
• detecting an indicator of an end of working time, wherein the indicator of the end of working time comprises an interaction of the terminal device (100) with a work device (800), wherein the indicator of the end of working time comprises an interaction in the form of a receipt, by the terminal device (100), of a logout notification from the work device (800), which indicates a logout of the user of the terminal device (100) from the work device (800),
• in response to the detecting of the indicator of the end of working time, ending the working-time recording,
• storing the working time recorded for the authenticated user in the working-time account (112) of the authenticated user, wherein storing the working time recorded for the authenticated user comprises sending an indication (144) of the recorded working time to a server (900; 940) for storage, wherein the indication (144) of the recorded working time is signed by the terminal device (100), before being sent, using a fourth signature key (140) assigned to the user of the terminal device (100),
wherein the method further comprises:
• detecting that the recorded working time exceeds a predefined first working-time limit (120) of the authenticated user,
• in response to the detecting that the predefined first working-time limit (120) has been exceeded, outputting a warning,
• detecting that the recorded working time exceeds a predefined second working-time limit (122) of the authenticated user,
• in response to the detecting that the predefined second working-time limit (122) has been exceeded, outputting a request for an approval (130) of the time exceedance, wherein, in response to the detecting that the predefined second working-time limit (122) has been exceeded, operating rights of the user of the terminal device (100) for operating the work device (800) are restricted until receipt of the approval (130),
• receiving an approval (130) of the time exceedance.

12. A mobile portable terminal device (100) for recording working time on a user-specific basis, wherein the terminal device (100) comprises a processor (102) and a memory (106) having program instructions (104) of a working-time recording application and a biometric sensor (114) for capturing biometric authentication data for authenticating a user of the terminal device (100),
wherein the method, when the working-time recording application is executed by the terminal device (100), comprises:
• detecting an indicator of a start of working time, wherein the indicator of the start of working time comprises an interaction of the terminal device (100) with a work device (800), wherein the indicator of the start of working time comprises an interaction in the form of a receipt, by the terminal device (100), of a login notification from the work device (800), which indicates a login of the user of the terminal device (100) at the work device (800), wherein the login of the user of the terminal device (100) at the work device (800) requires a successful authentication of the user with respect to the work device,
• in response to the detecting of the indicator of the start of working time, starting a working-time recording,
• authenticating the user of the terminal device (100), for whom the working-time recording is carried out, wherein the authenticating of the user comprises an authentication using biometric authentication data of the user, which are captured by means of the biometric sensor (114), wherein a successful authentication of the user requires a match of the captured biometric authentication data with stored biometric reference data (110) of the user,
• assigning the working-time recording to a working-time account (112) of the authenticated user managed using the working-time recording application,
• detecting an indicator of an end of working time, wherein the indicator of the end of working time comprises an interaction of the terminal device (100) with a work device (800), wherein the indicator of the end of working time comprises an interaction in the form of a receipt, by the terminal device (100), of a logout notification from the work device (800), which indicates a logout of the user of the terminal device (100) from the work device (800),
• in response to the detecting of the indicator of the end of working time, ending the working-time recording,
• storing the working time recorded for the authenticated user in the working-time account (112) of the authenticated user, wherein storing the working time recorded for the authenticated user comprises sending an indication (144) of the recorded working time to a server (900; 940) for storage, wherein the indication (144) of the recorded working time is signed by the terminal device (100), before being sent, using a fourth signature key (140) assigned to the user of the terminal device (100),
wherein the method further comprises:
• detecting that the recorded working time exceeds a predefined first working-time limit (120) of the authenticated user,
• in response to the detecting that the predefined first working-time limit (120) has been exceeded, outputting a warning,
• detecting that the recorded working time exceeds a predefined second working-time limit (122) of the authenticated user,
• in response to the detecting that the predefined second working-time limit (122) has been exceeded, outputting a request for an approval (130) of the time exceedance, wherein, in response to the detecting that the predefined second working-time limit (122) has been exceeded, operating rights of the user of the terminal device (100) for operating the work device (800) are restricted until receipt of the approval (130),
• receiving an approval (130) of the time exceedance.

13. A system (960) comprising a mobile portable terminal device (100) according to claim 12 and the server (900; 940) for storing the indication (144) of the recorded working time,
wherein the server (900; 940) receives the indication (144) of the recorded working time and verifies the signature of the indication (144) of the recorded working time using a fourth signature verification key (142) assigned to the user of the terminal device (100),
wherein the server (900; 940), in response to a successful verification of the signature of the indication (144) of the recorded working time, stores the indication (144) of the recorded working time in the working-time account (112) of the authenticated user.

14. The system (960) according to claim 13, wherein the server is a blockchain server (940), wherein the storage of the indication (144) of the recorded working time by the blockchain server (940) takes place in a blockchain (950) at least co-managed by the blockchain server (940).

## Revendications

1. Procédé pour l'enregistrement individualisé du temps de travail par utilisateur en utilisant un terminal portable mobile (100), dans lequel le terminal (100) comprend un processeur (102) et une mémoire (106) avec des instructions de programme (104) d'une application d'enregistrement du temps de travail et un capteur biométrique (114) pour l'acquisition de données d'authentification biométriques pour l'authentification d'un utilisateur du terminal (100),
dans lequel le procédé comprend, lors de l'exécution de l'application d'enregistrement du temps de travail par le terminal (100):
• la détection d'un indicateur d'un début de temps de travail, dans lequel l'indicateur du début de temps de travail comprend une interaction du terminal (100) avec un appareil de travail (800), dans lequel l'indicateur du début de temps de travail comprend une interaction sous la forme d'une réception d'un message de connexion de l'appareil de travail (800) par le terminal (100), lequel indique une connexion de l'utilisateur du terminal (100) à l'appareil de travail (800), dans lequel la connexion de l'utilisateur du terminal (100) à l'appareil de travail (800) nécessite une authentification réussie de l'utilisateur auprès de l'appareil de travail,
• lors de la détection de l'indicateur du début de temps de travail, le début d'un enregistrement du temps de travail,
• l'authentification de l'utilisateur du terminal (100), pour lequel l'enregistrement du temps de travail a lieu, dans lequel l'authentification de l'utilisateur comprend une authentification en utilisant des données d'authentification biométriques de l'utilisateur, lesquelles sont acquises au moyen du capteur biométrique (114), dans lequel une authentification réussie de l'utilisateur nécessite une concordance des données d'authentification biométriques acquises avec des données de référence biométriques stockées (110) de l'utilisateur,
• l'association de l'enregistrement du temps de travail à un compte de temps de travail (112), géré en utilisant l'application d'enregistrement du temps de travail, de l'utilisateur authentifié,
• la détection d'un indicateur d'une fin de temps de travail, dans lequel l'indicateur de la fin de temps de travail comprend une interaction du terminal (100) avec un appareil de travail (800), dans lequel l'indicateur de la fin de temps de travail comprend une interaction sous la forme d'une réception d'un message de déconnexion de l'appareil de travail (800) par le terminal (100), lequel indique une déconnexion de l'utilisateur du terminal (100) de l'appareil de travail (800),
• lors de la détection de l'indicateur de la fin de temps de travail, la fin de l'enregistrement du temps de travail,
• le stockage du temps de travail enregistré pour l'utilisateur authentifié dans le compte de temps de travail (112) de l'utilisateur authentifié, dans lequel le stockage du temps de travail enregistré pour l'utilisateur authentifié comprend un envoi d'une indication (144) du temps de travail enregistré à un serveur (900 ; 940) pour le stockage, dans lequel l'indication (144) du temps de travail enregistré est signée par le terminal (100) avant l'envoi en utilisant une quatrième clé de signature (140) associée à l'utilisateur du terminal (100),
dans lequel le procédé comprend en outre:
• la détection d'un dépassement d'une première limite de temps de travail prédéfinie (120) de l'utilisateur authentifié par le temps de travail enregistré,
• lors de la détection du dépassement de la première limite de temps de travail prédéfinie (120), l'émission d'une alerte,
• la détection d'un dépassement d'une deuxième limite de temps de travail prédéfinie (122) de l'utilisateur authentifié par le temps de travail enregistré,
• lors de la détection du dépassement de la deuxième limite de temps de travail prédéfinie (122), l'émission d'une demande d'autorisation (130) du dépassement de temps de travail, dans lequel, lors de la détection du dépassement de la deuxième limite de temps de travail prédéfinie (122), les droits d'utilisation de l'utilisateur du terminal (100) pour l'utilisation de l'appareil de travail (800) sont limités jusqu'à la réception de l'autorisation (130),
• la réception d'une autorisation (130) du dépassement de temps de travail.

2. Procédé selon la revendication 1, dans lequel l'indicateur du début de temps de travail et/ou l'indicateur de la fin de temps de travail comprend une entrée d'utilisateur au moyen de laquelle l'utilisateur du terminal (100) indique le début de temps de travail et/ou la fin de temps de travail.

3. Procédé selon l'une quelconque des revendications précédentes, dans lequel l'indicateur du début de temps de travail et/ou l'indicateur de la fin de temps de travail comprend une détection de lieu d'une présence du terminal (100) à un lieu prédéfini, par le terminal (100), lequel lieu est associé au début de temps de travail et/ou à la fin de temps de travail.

4. Procédé selon la revendication 3, dans lequel la détection de lieu a lieu en utilisant une réception d'un signal d'un système mondial de navigation par satellite, d'un signal WLAN, d'un signal UWB, d'un signal Bluetooth et/ou d'un signal NFC et/ou
dans lequel la détection de lieu associée au début de travail comprend une entrée, par le terminal (100), dans une zone de lieu prédéfinie associée au travail et/ou dans lequel la détection de lieu associée à la fin de travail comprend une sortie, par le terminal (100), de la zone de lieu prédéfinie associée au travail.

5. Procédé selon l'une quelconque des revendications précédentes, dans lequel la déconnexion de l'utilisateur du terminal (100) de l'appareil de travail (800) nécessite par exemple une authentification réussie de l'utilisateur auprès de l'appareil de travail.

6. Procédé selon l'une quelconque des revendications précédentes, dans lequel l'indicateur du début de temps de travail et/ou l'indicateur de la fin de temps de travail comprend une confirmation (614) du début de temps de travail et/ou de la fin de temps de travail par un autre utilisateur d'un autre terminal portable mobile (600),
dans lequel le procédé comprend en outre par exemple:
• l'envoi d'une demande de confirmation à l'autre terminal portable mobile (600),
• en réponse à l'envoi de la demande de confirmation, la réception de la confirmation (614) de l'autre terminal portable mobile (600), dans lequel la confirmation (614) est signée en utilisant une première clé de signature (610) associée à l'autre utilisateur de l'autre terminal portable mobile (600),
• la vérification de la signature de la confirmation (614) en utilisant une première clé de vérification de signature (612) associée à l'autre utilisateur de l'autre terminal portable mobile (600), dans lequel une reconnaissance de la confirmation (614) en tant qu'indicateur nécessite une vérification réussie de la signature correspondante.

7. Procédé selon l'une quelconque des revendications précédentes, dans lequel l'autorisation (130) comprend une autorisation de l'utilisateur (132) par l'utilisateur authentifié du terminal (100),
dans lequel l'autorisation (130) sous la forme de l'autorisation de l'utilisateur (132) nécessite par exemple une authentification supplémentaire réussie de l'utilisateur du terminal (100) par le terminal (100), dans lequel l'authentification supplémentaire de l'utilisateur comprend une authentification supplémentaire en utilisant les données d'authentification biométriques de l'utilisateur, lesquelles sont acquises au moyen du capteur biométrique (114), dans lequel une authentification supplémentaire réussie de l'utilisateur nécessite une concordance des données d'authentification biométriques acquises avec les données de référence biométriques stockées (100) de l'utilisateur, et/ou
dans lequel l'autorisation de l'utilisateur (132) comprend par exemple une réception et une vérification d'un mot de passe à usage unique (134) de l'utilisateur authentifié, et/ou
dans lequel l'autorisation (130) comprend une confirmation d'autorisation (714) par une autre instance, dans lequel le procédé comprend en outre:
• l'envoi d'une demande d'autorisation à un système informatique associé à l'autre instance,
• en réponse à l'envoi de la demande d'autorisation, la réception de la confirmation d'autorisation (714) du système informatique associé à l'autre instance, dans lequel la confirmation d'autorisation (714) est signée en utilisant une deuxième clé de signature (710) associée à l'autre instance,
• la vérification de la signature de la confirmation d'autorisation (714) en utilisant une deuxième clé de vérification de signature (712) associée à l'autre instance, dans lequel l'autorisation (130) nécessite une vérification réussie de la signature correspondante, et/ou
dans lequel, lors de la détection du dépassement de la deuxième limite de temps de travail prédéfinie (122), une utilisation du ou des appareils de travail (800) par l'utilisateur du terminal (100) est bloquée jusqu'à la réception de l'autorisation (130).

8. Procédé selon l'une quelconque des revendications précédentes, dans lequel l'authentification de l'utilisateur du terminal (100) comprend en outre:
• la réception, en utilisant une interface de communication (118) du terminal (100), depuis un serveur de fournisseur d'ID (300), d'un ou de plusieurs attributs (126) de l'utilisateur lus à partir d'un jeton d'ID (128 ; 500) de l'utilisateur, dans lequel les attributs reçus (126) de l'utilisateur sont signés avec une troisième clé de signature (310) du serveur de fournisseur d'ID (300),
• la vérification de la signature des attributs reçus (126) en utilisant une troisième clé de vérification de signature (314) du serveur de fournisseur d'ID (300), dans lequel une authentification réussie de l'utilisateur nécessite, en plus d'une vérification réussie de la signature correspondante, une concordance du ou des attributs reçus (126) avec un ou plusieurs attributs de référence stockés (124) de l'utilisateur.

9. Procédé selon la revendication 8, dans lequel le jeton d'ID (128) est fourni sous la forme d'une application d'ID dont les instructions de programme (128) sont stockées dans la mémoire (106) du terminal (100), dans lequel le serveur de fournisseur d'ID (300) lit les attributs (126) de l'utilisateur au cours de l'authentification de l'utilisateur par le biais de l'interface de communication (118) du terminal (100),
dans lequel l'authentification de l'utilisateur a lieu par exemple en utilisant les données d'authentification biométriques au cours de la lecture des attributs (126) à partir du terminal (100) et la concordance des données d'authentification biométriques acquises avec les données de référence biométriques stockées (110) de l'utilisateur est une condition pour permettre un accès en lecture du serveur de fournisseur d'ID (300) aux attributs (126) de l'utilisateur.

10. Procédé selon l'une quelconque des revendications précédentes, dans lequel le stockage du temps de travail enregistré pour l'utilisateur authentifié comprend un stockage local dans la mémoire du terminal (100) et/ou
dans lequel un stockage de l'indication (144) du temps de travail enregistré par le serveur (900 ; 940) nécessite une vérification réussie de la signature de l'indication (144) du temps de travail enregistré en utilisant une quatrième clé de vérification de signature (142) associée à l'utilisateur du terminal (100), et/ou
dans lequel le serveur est un serveur de chaîne de blocs (940) et le stockage de l'indication (144) du temps de travail enregistré par le serveur de chaîne de blocs (940) a lieu dans une chaîne de blocs (950) au moins co-gérée par le serveur de chaîne de blocs (940).

11. Application d'enregistrement du temps de travail pour l'enregistrement individualisé du temps de travail par utilisateur en utilisant un terminal portable mobile (100), dans laquelle l'application d'enregistrement du temps de travail comprend des instructions de programme (104), dans laquelle une exécution des instructions de programme (104) par un processeur (102) du terminal portable mobile (100) amène le processeur (102) à commander le terminal portable mobile (100) pour l'exécution d'un procédé qui comprend :
• la détection d'un indicateur d'un début de temps de travail, dans lequel l'indicateur du début de temps de travail comprend une interaction du terminal (100) avec un appareil de travail (800), dans lequel l'indicateur du début de temps de travail comprend une interaction sous la forme d'une réception d'un message de connexion de l'appareil de travail (800) par le terminal (100), lequel indique une connexion de l'utilisateur du terminal (100) à l'appareil de travail (800), dans lequel la connexion de l'utilisateur du terminal (100) à l'appareil de travail (800) nécessite une authentification réussie de l'utilisateur auprès de l'appareil de travail,
• lors de la détection de l'indicateur du début de temps de travail, le début d'un enregistrement du temps de travail,
• l'authentification de l'utilisateur du terminal (100), pour lequel l'enregistrement du temps de travail a lieu, dans lequel l'authentification de l'utilisateur comprend une authentification en utilisant des données d'authentification biométriques de l'utilisateur, lesquelles sont acquises au moyen d'un capteur biométrique (114) du terminal (100), dans lequel une authentification réussie de l'utilisateur nécessite une concordance des données d'authentification biométriques acquises avec des données de référence biométriques stockées (110) de l'utilisateur,
• l'association de l'enregistrement du temps de travail à un compte de temps de travail (112) de l'utilisateur authentifié,
• la détection d'un indicateur d'une fin de temps de travail, dans lequel l'indicateur de la fin de temps de travail comprend une interaction du terminal (100) avec un appareil de travail (800), dans lequel l'indicateur de la fin de temps de travail comprend une interaction sous la forme d'une réception d'un message de déconnexion de l'appareil de travail (800) par le terminal (100), lequel indique une déconnexion de l'utilisateur du terminal (100) de l'appareil de travail (800),
• lors de la détection de l'indicateur de la fin de temps de travail, la fin de l'enregistrement du temps de travail,
• le stockage du temps de travail enregistré pour l'utilisateur authentifié dans le compte de temps de travail (112) de l'utilisateur authentifié, dans lequel le stockage du temps de travail enregistré pour l'utilisateur authentifié comprend un envoi d'une indication (144) du temps de travail enregistré à un serveur (900 ; 940) pour le stockage, dans lequel l'indication (144) du temps de travail enregistré est signée par le terminal (100) avant l'envoi en utilisant une quatrième clé de signature (140) associée à l'utilisateur du terminal (100),
dans lequel le procédé comprend en outre:
• la détection d'un dépassement d'une première limite de temps de travail prédéfinie (120) de l'utilisateur authentifié par le temps de travail enregistré,
• lors de la détection du dépassement de la première limite de temps de travail prédéfinie (120), l'émission d'une alerte,
• la détection d'un dépassement d'une deuxième limite de temps de travail prédéfinie (122) de l'utilisateur authentifié par le temps de travail enregistré,
• lors de la détection du dépassement de la deuxième limite de temps de travail prédéfinie (122), l'émission d'une demande d'autorisation (130) du dépassement de temps de travail, dans lequel, lors de la détection du dépassement de la deuxième limite de temps de travail prédéfinie (122), les droits d'utilisation de l'utilisateur du terminal (100) pour l'utilisation de l'appareil de travail (800) sont limités jusqu'à la réception de l'autorisation (130),
• la réception d'une autorisation (130) du dépassement de temps de travail.

12. Terminal portable mobile (100) pour l'enregistrement individualisé du temps de travail par utilisateur, dans lequel le terminal (100) comprend un processeur (102) et une mémoire (106) avec des instructions de programme (104) d'une application d'enregistrement du temps de travail et un capteur biométrique (114) pour l'acquisition de données d'authentification biométriques pour l'authentification d'un utilisateur du terminal (100),
dans lequel le procédé comprend, lors de l'exécution de l'application d'enregistrement du temps de travail par le terminal (100):
• la détection d'un indicateur d'un début de temps de travail, dans lequel l'indicateur du début de temps de travail comprend une interaction du terminal (100) avec un appareil de travail (800), dans lequel l'indicateur du début de temps de travail comprend une interaction sous la forme d'une réception d'un message de connexion de l'appareil de travail (800) par le terminal (100), lequel indique une connexion de l'utilisateur du terminal (100) à l'appareil de travail (800), dans lequel la connexion de l'utilisateur du terminal (100) à l'appareil de travail (800) nécessite une authentification réussie de l'utilisateur auprès de l'appareil de travail,
• lors de la détection de l'indicateur du début de temps de travail, le début d'un enregistrement du temps de travail,
• l'authentification de l'utilisateur du terminal (100), pour lequel l'enregistrement du temps de travail a lieu, dans lequel l'authentification de l'utilisateur comprend une authentification en utilisant des données d'authentification biométriques de l'utilisateur, lesquelles sont acquises au moyen du capteur biométrique (114), dans lequel une authentification réussie de l'utilisateur nécessite une concordance des données d'authentification biométriques acquises avec des données de référence biométriques stockées (110) de l'utilisateur,
• l'association de l'enregistrement du temps de travail à un compte de temps de travail (112), géré en utilisant l'application d'enregistrement du temps de travail, de l'utilisateur authentifié,
• la détection d'un indicateur d'une fin de temps de travail, dans lequel l'indicateur de la fin de temps de travail comprend une interaction du terminal (100) avec un appareil de travail (800), dans lequel l'indicateur de la fin de temps de travail comprend une interaction sous la forme d'une réception d'un message de déconnexion de l'appareil de travail (800) par le terminal (100), lequel indique une déconnexion de l'utilisateur du terminal (100) de l'appareil de travail (800),
• lors de la détection de l'indicateur de la fin de temps de travail, la fin de l'enregistrement du temps de travail,
• le stockage du temps de travail enregistré pour l'utilisateur authentifié dans le compte de temps de travail (112) de l'utilisateur authentifié, dans lequel le stockage du temps de travail enregistré pour l'utilisateur authentifié comprend un envoi d'une indication (144) du temps de travail enregistré à un serveur (900 ; 940) pour le stockage, dans lequel l'indication (144) du temps de travail enregistré est signée par le terminal (100) avant l'envoi en utilisant une quatrième clé de signature (140) associée à l'utilisateur du terminal (100),
dans lequel le procédé comprend en outre:
• la détection d'un dépassement d'une première limite de temps de travail prédéfinie (120) de l'utilisateur authentifié par le temps de travail enregistré,
• lors de la détection du dépassement de la première limite de temps de travail prédéfinie (120), l'émission d'une alerte,
• la détection d'un dépassement d'une deuxième limite de temps de travail prédéfinie (122) de l'utilisateur authentifié par le temps de travail enregistré,
• lors de la détection du dépassement de la deuxième limite de temps de travail prédéfinie (122), l'émission d'une demande d'autorisation (130) du dépassement de temps de travail, dans lequel, lors de la détection du dépassement de la deuxième limite de temps de travail prédéfinie (122), les droits d'utilisation de l'utilisateur du terminal (100) pour l'utilisation de l'appareil de travail (800) sont limités jusqu'à la réception de l'autorisation (130),
• la réception d'une autorisation (130) du dépassement de temps de travail.

13. Système (960) comprenant un terminal portable mobile (100) selon la revendication 12 et le serveur (900 ; 940) pour le stockage de l'indication (144) du temps de travail enregistré,
dans lequel le serveur (900 ; 940) reçoit l'indication (144) du temps de travail enregistré et vérifie la signature de l'indication (144) du temps de travail enregistré en utilisant une quatrième clé de vérification de signature (142) associée à l'utilisateur du terminal (100),
dans lequel le serveur (900 ; 940) stocke l'indication (144) du temps de travail enregistré dans le compte de temps de travail (112) de l'utilisateur authentifié lors d'une vérification réussie de la signature de l'indication (144) du temps de travail enregistré.

14. Système (960) selon la revendication 13, dans lequel le serveur est un serveur de chaîne de blocs (940), dans lequel le stockage de l'indication (144) du temps de travail enregistré par le serveur de chaîne de blocs (940) a lieu dans une chaîne de blocs (950) au moins co-gérée par le serveur de chaîne de blocs (940).
